(19) Europäisches Patentamt

European Patent Office

Office européen des brevets

(11) **EP 2 345 914 B1**

(12) **EUROPEAN PATENT SPECIFICATION**

(45) Date of publication and mention
of the grant of the patent:
**25.06.2014 Bulletin 2014/26**

(51) Int Cl.:
***G02B 6/02*** (2006.01)

(21) Application number: **11158919.8**

(22) Date of filing: **22.01.2007**

(54) **Photonic band gap fibre with reduced coupling between core modes and surface mode, and method of producing the same**

Optische Faser mit photonischer Bandlücke mit veringerter Kopplung zwischen Kern- und Oberflächenmoden und Herstellungsverfahren dafür

Fibre photonique à bande interdite à couplage entre mode de coeur et mode de surface réduit, et procédé de fabrication d'une telle fibre

(84) Designated Contracting States:
**DE DK FR GB IT**

(43) Date of publication of application:
**20.07.2011 Bulletin 2011/29**

(62) Document number(s) of the earlier application(s) in
accordance with Art. 76 EPC:
**07290081.4 / 1 947 492**

(73) Proprietor: **FUJIKURA LTD.**
**Kohtoh-ku,**
**Tokyo (JP)**

(72) Inventors:
 • **Guan, Ning**
  **CHIBA-KEN (JP)**
 • **Takenaga, Katsuhiro**
  **CHIBA-KEN (JP)**
 • **Himeno, Kuniharu**
  **CHIBA-KEN (JP)**

(74) Representative: **Cabinet Plasseraud**
 **52, rue de la Victoire**
 **75440 Paris Cedex 09 (FR)**

(56) References cited:
 • **GOTO R ET AL: "wide-band single-mode photonic band-gap fiber with extended triangular lattice and capillary core", OFCNFOEC. OPTICAL FIBER COMMUNICATION CONFERENCE AND NATIONALFIBER OPTIC ENGINEERS CONFERENCE,, 5 March 2006 (2006-03-05), pages 1-3, XP002442304,**
 • **KATSUHIRO TAKENAGA ET AL: "a new photonic bandgap fibre with extended triangular lattice and capillary core", PROCEEDINGS OF THE EUROPEAN CONFERENCE ON OPTICALCOMMUNICATION, XX, XX, vol. 2, 25 September 2005 (2005-09-25), pages TU4.2-1, XP002442305,**

EP 2 345 914 B1

**Description**

BACKGROUND OF THE INVENTION

Field of the Invention

The present invention relates to photonic band gap fiber wherein multiple air holes are provided in silica portions along the longitudinal direction of the fiber. The photonic band gap fiber of the present invention can inhibit surface modes specific to ordinary photonic band gap fibers and can expand the transmission bandwidth of the fiber, It can, therefore, be used in very low loss optical transmissions, optical transmissions from the UV region to the visible light region and infrared region, and in fiber laser optical transmissions.

Description of Related Art

By using the periodic structure of air holes in the cladding, the photonic band gap fiber (hereinafter referred to as "PBGF") can confine light in the core by making use of its photonic band gap. Even if the core is air, wave guidance is possible. (See R. F. Cregan, B. J. Mangan, J. C. Knight, T. A. Birks, P. St. J. Russell, P. J. Roberts, and D. C. Allan, "Single-mode photonic band gap guidance of light in air," Science, vol. 285, no. 3, pp. 1337-1339, 1999.)

However, even if the periodic structure of air holes provided in the cladding forms a band gap, the core mode wherein light is concentrated in the core couples with the surface mode wherein light is concentrated in the silica close to the core edge and causes large transmission loss. Thus, optical wave guide cannot be obtained in the entire wavelength band of the band gap (see J. A. West, C. M. Smith, N. F. Borrelli, D. C. Allan, and K. W. Koch, "Surface modes in air-core photonic band-gap fibers," Opt. Express, vol. 12, no. 9, pp.1485-1496, 2004).

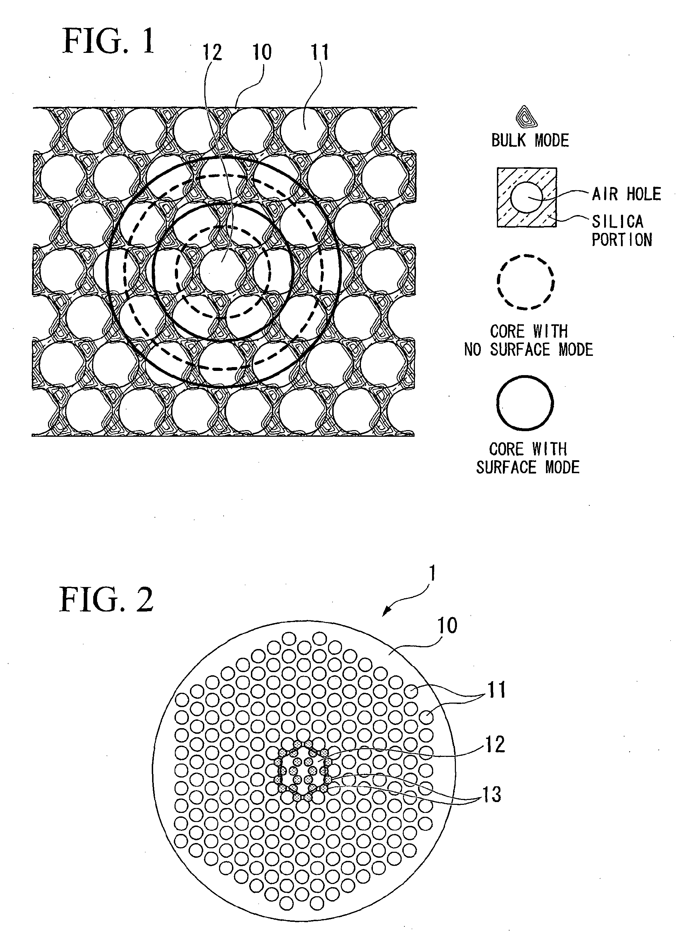

The presence of surface mode depends on the magnitude of the core diameter. FIG. 1 shows this dependency.

The conventional PBGF1 shown in FIG.1 comprises multiple circular air holes 11 in triangular lattice configuration in the silica portion 10 seen in the cross section of the fiber. The air hole at the center forms an air hole core 12. The structure of air holes forming a triangular lattice periodic structure with multiple circular air holes 10 arranged at constant pitch in the cross section of fiber in this way is referred to hereinafter as "normal triangular lattice periodic structure."

In FIG. 1, "bulk mode" refers to a mode with $\Gamma$ points (points at which the wavelength vector has components only in the transmission direction), which has maximum frequencies in the low pass band of the band gap, when the periodic structure of air holes constitutes the band gap.

In the PBGF of the structure as shown in FIG. 1, it is well known that surface mode is present when the edge of core 12 cuts through the bulk mode, and surface mode is absent when it does not cut through the bulk mode (see H. K. Kim, J. Shin, S. Fan, M. J. F. Digonnet, and G. S. Kino, "Designing air-core photonic-bandgap fibers free of surface modes," IEEE J. Quant. Electron., vol. 40, no. 5, pp. 551-556, 2004).

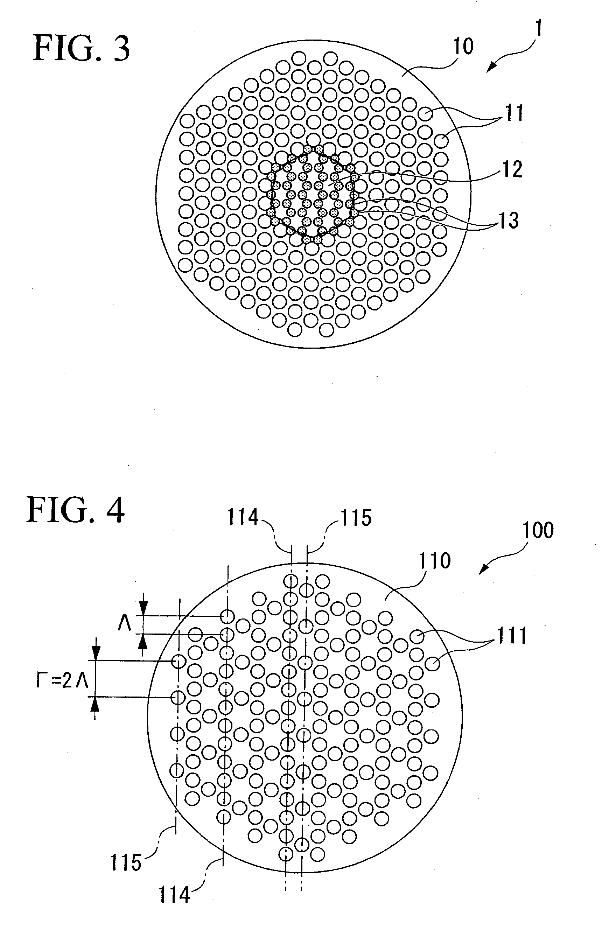

FIGS. 2 and 3 are examples of the positional relationship between air hole core 12 and bulk mode in the conventional PBGF1 with normal triangular lattice periodic structure. The conventional PBGF1 shown in FIG. 2 comprises multiple circular air holes 11 arranged in triangular lattice configuration in the silica portion 10 that forms the cladding in the cross section of the fiber. An air hole core 12 is provided formed by air holes in a region that includes six air holes surrounding one central air hole. The conventional PBGF1 shown in FIG. 3 comprises multiple circular air holes 11 arranged in triangular lattice configuration in the silica portion 10 in the cross section of the fiber. An air hole core 12 is provided formed by one air hole at the center surrounded by 18 air holes in two layers.

However, when a normal triangular lattice periodic structure as shown in FIGS. 2 and 3 is used in cladding, the edge of the air hole core 12 cuts through the region wherein bulk mode 13 is present; therefore, it becomes difficult to avoid the surface mode. The result is that the light in the core mode couples with the surface mode, causes large transmission loss, optical wave guide throughout the wavelength band cannot be obtained, wave guide bandwidth becomes narrow, and the transmission loss increases further.

SUMMARY OF THE INVENTION

An object of the present invention is to offer a PBGF with low transmission loss and wide wave guide bandwidth after considering the circumstances mentioned above.

To realize the object mentioned above, a first aspect of the present invention offers PBGF with multiple air holes provided in silica portions extending in the longitudinal direction of the fiber comprising: a cladding having air hole periodic structure in an extended triangular lattice configuration in the cross section of the fiber wherein first rows each having a number of air holes at a first pitch, and second rows of air holes each having a plurality of air holes at a second pitch which is twice the first pitch, are arranged such that the air holes and the air holes of the first rows are superposed alternately with the second row of air holes arranged so as to form a triangular lattice in the cross section of the fiber;

and an air hole core.

In a PBGF the air hole core may have an almost circular shape in the cross section of the fiber and the diameter D of the air hole core may have the relationship $0.7\Lambda \leq D \leq 3.3\Lambda$ with respect to the first pitch A.

In a PBGF the air hole core may have an almost circular shape in the cross section of the fiber and the diameter D of the air hole core may have the relationship of $4.7\Lambda \leq D \leq 7.3\Lambda$ with respect to the first pitch $\Lambda$.

In the PBGF of the present invention, the air hole core may have an almost circular shape in the cross section of the fiber and the diameter D of the air hole core may have the relationship of $8.7\Lambda \leq D \leq 11.3\Lambda$ with respect to the first pitch $\Lambda$.

In the PBGF of aspect of the present invention, the air hole diameter d may be of circular shape that satisfies the relationship $0.85\Lambda \leq d \leq \Lambda$ with respect to the first pitch $\Lambda$.

In the PBGF of the first aspect of the present invention, three or more layers of air hole periodic structure in an extended triangular lattice configuration in the cladding may preferably be provided outside the air hole core.

The PBGF of the first aspect of the present invention may have 60% or more of a core mode in which the transmitting power is concentrated in the air hole core region, and may have optical characteristics wherein the surface mode is substantially absent.

The PBGF of the present invention may have optical characteristics wherein only a single core mode (where the number of modes in case of all degraded modes is taken as 1) is present.

The PBGF of the first aspect of the present invention may preferably have optical characteristics wherein the core mode is present when the wavelength $\lambda$ satisfies a range of $0.7 \leq \Gamma/\lambda \leq 1.2$ (where $\Gamma = 2\Lambda$, where $\Lambda$ is the first pitch).

The PBGF of the first aspect of the present invention may preferably have optical characteristics wherein core mode is present when wavelength $\lambda$ is in the range $1.4 \leq \Gamma/\lambda \leq 1.8$ (where $\Gamma = 2\Lambda$, and $\Lambda$ is a first pitch).

In a second aspect of the present invention, a method of producing PBGF is provided, which comprises arranging silica capillary tubes and silica rods into a first row of air holes wherein a number of capillary tubes are arranged at a first pitch, and a second row of air holes wherein the capillary tubes and the silica rods are alternately arranged and superposed such that the capillary tube arrangement of the cross section forms an extended triangular lattice; forming an air hole core region with capillary tube bundles containing silica rods after eliminating the central silica rod, or the central silica rod together with the capillary tubes and silica rods surrounding the central silica rod, heating the capillary tube bundles containing the silica rods and making them integrated in order to make a preform for fiber spinning; and subsequently, spinning the preform for fiber spinning, and the PBGF related to the present invention is obtained.

In the method of producing PBGF according to the second aspect of the present invention, the capillary tube may be of annular cross section, and the silica rod may be of circular cross section with diameter equal to that of the capillary tube.

In the method of producing PBGF of the second aspect of the present invention, the preform for fiber spinning may be produced by making the capillary tube bundle containing silica rods integrated while they are inserted in the hole of the silica tube.

In the method of producing PBGF according to the second aspect of the present invention, one silica rod only at the center of the cross section of the capillary tube bundle containing silica rods may be eliminated and air hole core region may be formed.

In the method of producing PBGF according to the second aspect of the present invention, one silica rod at the center of the cross section of the capillary tube bundle containing silica rods, and capillary tubes and silica rods in no less than one layer and no more than five layers surrounding the central silica rod may be eliminated, and air hole core region may be formed,

In the method of production of PBGF according to the present invention, the capillary tube bundle containing silica rods may be provided such that the air hole periodic structure in an extended triangular lattice configuration surrounding the air hole core region has three or more layers of silica rods facing the rear and directed outward.

To realize the object mentioned above, a third aspect of the present invention offers PBGF having multiple air holes in silica portion extending in the longitudinal direction of the fiber comprising: a cladding having air hole periodic structure in an extended triangular lattice configuration in the cross section of the fiber wherein first rows each having a number of air holes at a first pitch, and second rows of air holes each having a plurality of air holes at a second pitch which is twice the first pitch, are arranged such that the air holes and the air holes of the first rows are superposed alternately with the second row of air holes arranged so as to form a triangular lattice in the cross section of the fiber; and an air hole core comprising multiple air holes arranged at constant pitch in triangular lattice configuration.

In the PBGF of the third aspect of the present invention, the core may preferably comprise air hole at the center of the fiber cross section and the first layer of air holes surrounding the air hole.

In the PBGF of the present invention, the core may preferably comprise air hole at the center of the fiber cross section and two or more layers of air holes surrounding the air hole.

In the PBGF of the third aspect of the present invention, the cross section shape of the air hole may be circular and its diameter d may preferably satisfy the relationship $0.85\Lambda \leq d \leq \Lambda$ with respect to the first pitch $\Lambda$.

In the PBGF of the third aspect of the present invention, three or more layers of air hole periodic structure in an extended triangular lattice configuration in the cladding may preferably be provided outside the core.

The PBGF of the present invention may have a core mode in which 60% or more of the transmitting power concentrated in the core region, and optical characteristics wherein the surface mode is substantially absent.

The PBGF of the third aspect of the present invention may have optical characteristics wherein only a single core mode (where the number of modes in case of all degraded modes is taken as 1) is present.

The PBGF of the third aspect of the present invention may preferably have optical characteristics wherein the core mode is present when the wavelength $\lambda$ satisfies a range of $0.7 \leq \Gamma/\lambda \leq 1.2$ (where $\Gamma = 2\Lambda$, where $\Lambda$ is the first pitch).

The PBGF of the third aspect of the present invention may preferably have optical characteristics wherein the core mode is present within a range in which a wavelength $\lambda$ satisfies of $1.4 \leq \Gamma/\lambda \leq 1.8$ (where r = 2 $\Lambda$, where $\Lambda$ is the first pitch).

In a fourth aspect of the present invention, a method of producing PBGF is provided, which comprises arranging silica capillary tubes and silica rods into a first row of air holes wherein a number of capillary tubes are arranged at a first pitch, and a second row of air holes wherein the capillary tubes and the silica rods are alternately arranged and superposed such that the capillary tube arrangement of the cross section forms an extended triangular lattice; forming an air hole core region with capillary tube bundles containing silica rods after eliminating the central silica rod, or the central silica rod together with the capillary tubes and silica rods in one or more layers surrounding the central silica rod, and heating the capillary tube bundles containing the silica rods and making them integrated in order to make a preform for fiber spinning; and subsequently, spinning the preform for fiber spinning, and the PBGF related to the present invention is obtained.

In the method of producing PBGF according to the fourth aspect of the present invention, the capillary tube may be of annular cross section, and the silica rod may be of circular cross section with diameter equal to that of the capillary tube.

In the method of producing PBGF of the fourth aspect of the present invention, the preform for fiber spinning may be produced by making the capillary tube bundle containing silica rods integrated while they are inserted in the hole of the silica tube.

In the method of producing PBGF according to the fourth aspect of the present invention, one silica rod only at the center of the capillary tube bundle containing silica rods may be replaced by capillary tube and core region may be formed.

In the method of producing PBGF according to the fourth aspect of the present invention, one silica rod only at the center of the capillary tube bundle containing silica rods and one layer of silica rods only surrounding the silica rod may be replaced by capillary tubes and core region may be formed.

In the method of producing PBGF according to the fourth aspect of the present invention, one silica rod only at the center of the capillary tube bundle containing silica rods and two layers of silica rods only surrounding the silica rod, may be replaced by capillary tubes and core region may be formed.

In the method of production of PBGF according to the fourth aspect of the present invention, the capillary tube bundle containing silica rods may be provided such that the air hole periodic structure in an extended triangular lattice configuration surrounding the air hole core region has three or more layers of silica rods facing the rear and are directed outward.

To realize the object mentioned above, a fifth aspect of the present invention offers PBGF with multiple air holes provided in silica portions along the longitudinal direction of the fiber comprising: multiple hexagonally-shaped silica portions at constant pitch $\Gamma$ in the cross section of the fiber arranged in triangular lattice configuration; air holes between the silica portions; cladding having a periodic structure wherein a length $\omega$ r between the two sides facing each other of the silica portion is equal to a length $\Lambda$ which is half of the pitch $\Gamma$; and an air hole core or core with multiple hexagonal air holes arranged in triangular lattice configuration.

The sixth aspect of the present invention offers PBGF. having multiple air holes in silica portion extending in the longitudinal direction of the fiber comprising: cladding having air hole periodic structure in an extended triangular lattice configuration with a length $\omega_r$ between the two sides facing each other of the silica portion is substantially equal to a first pitch $\Lambda$, wherein the first row of air holes with multiple hexagonal air holes at the first pitch $\Lambda$ is arranged through the partition wall in the cross section of the fiber, and multiple second rows of air holes each with multiple hexagonal air holes at a second pitch $\Gamma$ which is twice the first pitch are arranged through the hexagonally-shaped silica portions such that the air holes and the air holes of the first rows are superposed alternately with the second row of air holes arranged so as to form a triangular lattice in the cross section of the fiber, and an air hole core or core with multiple hexagonal air holes arranged in triangular lattice configuration.

The PBGF of the sixth aspect of the present invention wherein a thickness $\omega_b$ of the silica partitioning wall surrounding the air hole may be in the range $0.005\Lambda \leq \omega_b \leq 0.2\Lambda$.

A PBGF has the core diameter D has the relationship of $0.7\Lambda \leq D \leq 3.3\Lambda$ with respect to the pitch $\Lambda$.

A PBGF has the core diameter D has the relationship of $4.7\Lambda \leq D \leq 7.3\Lambda$ with respect to the pitch $\Lambda$.

The PBGF of the fifth and sixth aspects of the present invention wherein the core diameter D has the relationship of $8.7\Lambda \le D \le 11.3\Lambda$ with respect to the pitch $\Lambda$.

In the PBGF of the fifth and sixth aspects of the present invention, three or more layers of the air hole periodic structure in an extended triangular lattice configuration in the cladding may preferably be provided outside the core.

The PBGF of the fifth and sixth aspects of the present invention may have 60% or more of a core mode in which the transmitting power is concentrates in the air hole core region, and may have optical characteristics wherein the surface mode is substantially absent.

The PBGF of the fifth and sixth aspects of the present invention may have optical characteristics wherein only a single core mode (where the number of modes in case of all degraded modes is taken as 1) is present.

The PBGF of the fifth and sixth aspects of the present invention may preferably have optical characteristics wherein the core mode is present within a range in which a wavelength $\lambda$ satisfies of $0.6 \le \Gamma/\lambda \le 1.5$.

The PBGF of the fifth and sixth aspects of the present invention may preferably have optical characteristics wherein the core mode is present within a range in which a wavelength $\lambda$ satisfies of $1.4 \le \Gamma/\lambda \le 2.3$.

The PBGF of the fifth and sixth aspects of the present invention may preferably have optical characteristics wherein the core mode is present when the wavelengths satisfies a range of $22 \le \Gamma/\lambda \le 32$.

A seventh aspect of the present invention provides a method of producing PBGF to obtain the PBGF according to fifth and sixth aspects of the present invention, which comprises arranging silica capillary tubes and silica rods into a first row of air holes wherein multiple capillary tubes are arranged, and with multiple second rows of air holes wherein the capillary tubes and the silica rods are alternately arranged and superposed such that the capillary tube arrangement of the cross section forms an extended triangular lattice; forming an air hole core region after eliminating the central silica rod or the central silica rod together with the capillary tubes and silica rods surrounding the central silica rod, or a capillary tube bundle containing silica rods is made as the capillary core region by replacing the silica rod with capillary tubes; heating the capillary tube bundles containing the silica rods and making them integrated in order to make a preform for fiber spinning while maintaining the pressure in the spaces in the capillary tubes at a higher level than the pressure in the spaces surrounding the capillary tubes; and spinning the preform for fiber spinning.

In the method of producing PBGF according to the seventh aspect of the present invention, the capillary tube may be of annular cross section, and the silica rod may be of circular cross section with diameter equal to that of the capillary tube.

In the method of producing PBGF of the seventh aspect of the present invention, the preform for fiber spinning may be produced by making the capillary tube bundle containing silica rods integrated while they are inserted in the hole of the silica tube.

The method of producing PBGF according to the seventh mode wherein only the space in the capillary tube in the capillary tube bundle inserted in the air hole of the silica tube may preferably be maintained at or above the atmospheric pressure, and the spaces other than the space in the capillary tube may preferably be maintained in a low pressure condition when performing the integration.

In the method of producing PBGF according to the seventh aspect of the present invention, one silica rod at the center of the cross section of the capillary tube bundle containing silica rods may be eliminated and the air hole core region may be formed

In the method of producing PBGF according to the seventh aspect of the present invention, one silica rod at the center of the cross section of the capillary tube bundle containing silica rods, and capillary tubes and silica rods in no less than one layer and no more than five layers surrounding the central silica rod may be eliminated, and air hole core region may be formed.

The method of producing PBGF according to the seventh aspect of the present invention wherein one silica rod at the center of the cross section of the capillary tube bundle containing silica rods is replaced by a capillary tube and capillary core region is formed.

The method of producing PBGF according to the seventh aspect of the present invention wherein one silica rod at the center of the cross section of the capillary tube bundle containing silica rods, and silica rods and capillary tubes surrounding the silica rod at the center, are replaced by a capillary tube and capillary core region is formed.

In the method of production of PBGP according to the seventh aspect of the present invention, the capillary tube bundle containing silica rods may be provided such that the air hole periodic structure in an extended triangular lattice configuration surrounding the air hole core region has three or more layers of silica rods facing the rear and are directed outward.

To realize the object mentioned above, an eighth aspect of the present invention offers PBGF with multiple air holes in silica portions along the longitudinal direction of the PBGF comprising: multiple hexagonally-shaped silica portions at constant pitch $\Gamma$ in the cross section of the fiber arranged in triangular lattice configuration;

air holes between the silica portions; cladding having a periodic structure wherein a length $\omega_r$ between the two sides facing each other of the silica portion is smaller than a length $\Lambda$ which is half of the pitch r; and an air hole core or core with multiple hexagonal air holes arranged in triangular lattice configuration.

A ninth aspect of the present invention offers PBGF having multiple air holes in silica portion extending in the longitudinal direction of the fiber comprising: cladding having air hole periodic structure in an extended triangular lattice configuration with a length $\omega_r$ between the two sides lacing each other of the silica portion is smaller than a first pitch $\Lambda$, a first row of air holes with multiple hexagonal air holes at the first pitch $\Lambda$ in the cross section of the fiber arranged through a partition wall alternately superposed with multiple second rows of air holes with multiple hexagonal air holes at a second pitch $\Gamma$ which is twice the first pitch arranged through the hexagonally-shaped silica portions; and an air hole core or core with multiple hexagonal air holes arranged in triangular lattice configuration,

The PBGF of the ninth aspect of the present invention wherein a thickness $\omega_b$ of the silica partitioning wall surrounding the air hole may be in the range $0.005\Lambda \le \omega_b \le 0.2\Lambda$.

The PBGF of the ninth aspect of the present invention wherein a thickness $\omega_b$ of the silica partitioning wall surrounding the air hole may be in the range $0.05\Lambda \le \omega_b \le 0.5\Lambda$.

The PBGF of the present invention wherein $\omega_r$ the length between the two sides facing each other of the silica portion may be in the range $0.4\Lambda \le \omega_r \le \Lambda$.

A PBGF has the diameter D of the core may have the relationship $0.7\Lambda \le D \le 3.3\Lambda$ with respect to the first pitch $\Lambda$.

A PBGF has the diameter D of the core may have the relationship of $4.7\Lambda \le D \le 7.3\Lambda$ with respect to the first pitch $\Lambda$.

The PBGF of the eighth aspect or the ninth aspect of the present invention wherein the diameter D of the core may have the relationship of $8.7A \le D \le 11.3A$ with respect to the first pitch A.

In the PBGF of the eighth aspect or the ninth aspect of the present invention, three or more layers of the air hole periodic structure in an extended triangular lattice configuration in the cladding may preferably be provided outside the core.

The PBGF of the eighth aspect or the ninth aspect of the present invention may have 60% or more of a core mode in which the transmitting power is concentrated in the air hole core region, and optical characteristics wherein the surface mode is substantially absent.

The PBGF of the present invention may have optical characteristics wherein only a single core mode (where the number of modes in case of all degraded modes is taken as 1) is present

The PBGF. of the fifth and sixth aspects of the present invention may preferably have optical characteristics wherein the core mode is present within a range in which a wavelength $\lambda$ satisfies of $0.6{:}5\,\Gamma/\lambda \le 1.7$.

The PBGF of the eighth aspect or the ninth aspect of the present invention may preferably have optical characteristics wherein the core mode is present within a range in which a wavelength $\lambda$ satisfies of $1.5 \le \Gamma/\lambda \le 2.4$.

The PBGF of the eighth aspect or the ninth aspect of the present invention may preferably have optical characteristics wherein the core mode is present when the wavelength $\lambda$ satisfies a range of $2.1 \le \Gamma/\lambda \le 3.5$.

The PBGF of the eighth aspect or the ninth aspect of the present invention may preferably have optical characteristics wherein the core mode is present when the wavelength $\lambda$ satisfies a range of $0.7 \le \Gamma/\lambda \le 2.4$.

An object of a tenth aspect of the present invention is to provide a method of producing PBGF wherein arranging a number of silica capillary tubes and a number of first rows wherein multiple capillary tubes are arranged, and with the multiple second rows of air holes arranged alternately with capillary tubes and hollow silica tubes with wall thickness greater than the capillary tubes, and superposed such that the capillary arrangement of the cross section forms an extended triangular lattice; forming an air hole core region after eliminating the central hollow silica tube or the central hollow silica tube together with the capillary tubes and hollow silica tubes surrounding the central silica tube, or a capillary tube bundle is made in the capillary core region by replacing the central silica tube with capillary tubes; next, the capillary tube bundle is heated and integrated while maintaining the pressure in the spaces in the capillary tubes at a high level and the pressure in the spaces within the hollow silica tubes at a low level; the spaces within the hollow capillary tubes collapse, and the capillary air holes are converted to hexagonal shape, which is maintained to form the preform for fiber spinning, and spinning the preform for fiber spinning.

In the method of producing PBGF according to the tenth aspect of the present invention, the capillary tube may be of annular cross section, and the hollow silica tube may be of cross section with diameter equal to that of the capillary tube.

In the method of producing PBGF according to the tenth aspect of the present invention, the preform for fiber spinning may be produced by integrating the capillary tube bundle while they are inserted in the hole of the silica tube.

In the method of producing PBGF according to the tenth aspect of the present invention, only the space in the capillary tube in the capillary tube bundle inserted in the air-hole of the silica tube may preferably be maintained at or above the atmospheric pressure, and the spaces other than the space in the capillary tube including the space in the hollow silica tube, may preferably be maintained in a low pressure condition when performing the integration.

In the method of producing PBGF according to the tenth aspect of the present invention, one hollow silica tube at the center of the cross section of the capillary tube bundle may be eliminated and the air hole core region may be formed.

In the method of producing PBGF according to the tenth aspect of the present invention, one hollow silica tube at the center of the cross section of the capillary tube bundle together with capillary tubes and hollow silica tubes in no less than one layer and no more than five layers surrounding the hollow silica tube may be eliminated and the air hole core region may be formed.

In the method of producing PBGF according to the tenth aspect of the present invention, one hollow silica tube at the center of the cross section of the capillary tube bundle may be replaced by capillary tube and capillary core region may be formed.

In the method of producing PBGF according to the tenth aspect of the present invention, one hollow silica tube at the center of the cross section of the capillary tube bundle and hollow silica tubes surrounding the hollow silica tube may be replaced by capillary tube and capillary core region may be formed.

In the method of production of PBGF according to the tenth aspect of the present invention, the capillary tube bundle may be provided such that the air hole periodic structure in an extended triangular lattice configuration surrounding the core region has three or more layers of hollow silica tubes facing the rear and directed outward.

The PBGF in the first aspect of the present invention has cladding containing an air hole periodic structure in an extended triangular lattice configuration. Thus, core made of air holes in triangular lattice configuration can be realized without the core edge cutting across the bulk mode; optical characteristics wherein only the core mode is present and surface mode is not generated, can be obtained; wide wave guide bandwidth can be obtained, and transmission loss can be reduced.

The method of producing PBGF according to the second aspect of the present invention can be made the same as the conventional method of using capillary tubes, except for replacing some of the capillary tubes with silica rods and combining them, and PBGF with air hole periodic structure in an extended triangular lattice configuration can be easily produced. Thus, PBGF with better optical characteristics than the conventional the PBGF can be produced more easily and more economically by using methods similar to the conventional PBGF

The PBGF in the third aspect of the present invention has cladding containing an air hole periodic structure in an extended triangular lattice configuration. Thus, core made of air holes in triangular lattice configuration can be realized without the core edge cutting across the bulk mode; optical characteristics wherein only the core mode is present and surface mode is not generated, can be obtained; wide wave guide bandwidth can be obtained, and transmission loss can be reduced.

Moreover, since the core is disposed with multiple air holes in triangular lattice configuration in the silica portion, compared to the PBGF with conventional air hole core in which the silica portions between the air holes of the core act as reinforcing material the mechanical strength of the fiber can be increased.

The method of producing PBGF according to the fourth aspect of the present invention can be made the same as the conventional method of using capillary tubes, except for replacing some of the capillary tubes with silica rods and combining them, and PBGF with air hole periodic structure in an extended triangular lattice configuration can be easily produced. Thus, PBGF with better optical characteristics than the conventional the PBGF can be produced more easily and more economically by using methods similar to the conventional PBGF

The PBGF in the fifth aspect of the present invention has cladding containing an air hole periodic structure man extended triangular lattice configuration. Thus, air hole core or capillary core can be configured without the core edge cutting across the bulk mode; optical characteristics wherein only the core mode is present and surface mode is not generated, can be obtained; wide wave guide bandwidth can be obtained, and transmission loss can be reduced.

The method of producing PBGF according to the seventh aspect of the present invention can be made the same as the conventional method of using capillary tubes, except for replacing some of the capillary tubes with silica rods and combining mem, and PBGF with air hole periodic structure in an extended triangular lattice configuration can be easily produced. Thus, PBGF with better optical characteristics than the conventional PBGF can be produced more easily and more economically by using methods similar to the conventional PBGF.

The PBGF in the eighth and ninth aspects of the present invention has cladding containing an air hole periodic structure in an extended triangular lattice configuration, Thus, a core at the center can be configured without the core edge cutting across the bulk mode; optical characteristics wherein only the core mode is present and surface mode is not generated, can be obtained; wide wave guide bandwidth can be obtained, and transmission loss can be reduced.

In the periodic structure mentioned above, the hexagonally-shaped silica portion was made smaller than the pitch A of the hexagonal air holes. Compared to the periodic structure in which the pitch of the silica portion was equal to the pitch A of the air holes, the band gap widens, the position of the band gap becomes higher, the size of the fiber required to realize the same wavelength pass band increases, and production becomes easier.

The production method of PBGF according to the tenth aspect of the present invention can be made the same as the conventional method of using capillary tubes, except for replacing some of the capillary tubes with thicker hollow silica tubes and combining them, and PBGF with air hole periodic structure in an extended triangular lattice configuration can be easily produced. Thus, PBGF with better optical characteristics than the conventional PBGF can be produced more easily and more economically by using methods similar to the conventional PBGF,

BRIEF DESCRIPTION OF THE DRAWINGS

FIG 1 is a cross section showing the relationship between core diameter and surface mode in a PBGF with the normal triangular lattice periodic structure.

FIG 2 is a cross section showing the relationship between the air hole core and bulk mode in a PBGF with normal triangular lattice periodic structure and air hole core.

FIG 3 is a cross section showing the relationship between the air hole core and bulk mode in a different PBGF with normal triangular lattice periodic structure and air hole core.

FIG 4 is a cross section illustrating the air hole periodic structure of extended triangular lattice used in PBGF of the first embodiment of the present invention

FIG 5 is an extended cross section showing the unit cell of extended triangular lattice of FIG 4.

FIG 6 is a cross section showing the relationship between core diameter and surface mode in the PBGF of the present invention.

FIG 7 is a cross section showing the first example of a PBGF of the first embodiment of the present invention.

FIG 8 is the cross section showing the second example of PBGF of the first embodiment of the present invention.

FIG 9 is a cross section showing the extended triangular lattice structure with d/Λ=1 in Example 1-1.

FIG 10 is a graph showing the band structure of extended triangular lattice with d/Λ =1 in Example 1-1.

FIG 11 is a cross section of a PBGF using an extended triangular lattice structure with d/A =1 in Example 1-1.

FIG 12 is a graph showing the dispersion in the first band gap of the PBGF shown in FIG 11.

FIG 13 is a graph showing the dispersion in the second band gap of the PBGF shown in FIG 11.

FIG 14 is a cross section of a PBGF using an extended triangular lattice structure with d/A = 1 in Example 1-2.

FIG 15 is a graph showing the dispersion in the first band gap of the PBGF shown in FIG 14.

FIG 16 is a graph showing the dispersion in the second band gap of the PBGF shown in FIG 14.

FIG 17 is a cross section showing the extended triangular lattice structure with d/A = 0.94 in Example 1-3.

FIG 18 is a graph showing the band structure of extended triangular lattice with d/Λ = 0.94 in Example 1-3.

FIG 19 is a cross section illustrating the air hole periodic structure of extended triangular lattice used in the PBGF of the second embodiment of the present invention.

FIG 20 is an extended cross section showing the unit cell of the extended triangular lattice of FIG 19.

FIG 21 is a cross section showing the relationship between core diameter and surface mode in the PBGF of the second embodiment of the present invention.

FIG 22 is a cross section showing the first example of a PBGF of the second embodiment of the present invention.

FIG 23 is a cross section showing the second example of the PBGF of the second embodiment of the present invention.

PIG 24 is a cross section showing the extended triangular lattice structure with d/Λ=1 in Example 2-1.

FIG 25 is a graph showing the band structure of the extended triangular lattice with d/A = 1 in Example 2-1,

FIG 26 is a cross section of the PBGF using an extended triangular lattice structure with d/Λ= in Example 2-1.

FIG 27 is a graph showing the dispersion in the first band gap of the PBGF shown in FIG 26.

FIG 28 is a figure showing the power distribution of the core mode of the first band gap of the PBGF shown in FIG 26.

FIG 29 shows the permittivity distribution of PBGF shown in FIG 26.

FIG 30 is a graph showing the dispersion in the second band gap of the PBGF shown in FIG 26.

FIG 31 is a figure showing the power distribution of core mode 1 of the second band gap of the PBGF shown in FIG 26.

FIG 32 is a cross section of the PBGF using an extended triangular lattice structure with d/Λ=1 in Example 2-2.

FIG 33 is a graph showing the dispersion in the first band gap of the PBGF shown in FIG 32.

FIG 34 is a figure showing the power distribution of core mode 1 of the first band gap of the PBGF shown in FIG 32.

FIG. 35 shows the permittivity distribution of the PBGF shown in FIG 32.

FIG 36 is a figure showing the power distribution of core mode 2 of the first band gap of the PBGF shown in FIG 32.

FIG 37 is a graph showing the dispersion in the second band gap of the PBGF shown in FIG 32.

FIG 38 is a figure showing the power distribution of core mode 1 of the second band gap of the PBGF shown in FIG 32.

FIG 39 is a figure showing the power distribution of core mode 2 of the second band gap of the PBGF shown in FIG 32.

FIG 40 is a cross section showing the extended triangular lattice structure with d/Λ = 0.94 in Example 2-3.

FIG 41 is a graph showing the band structure of extended triangular lattice with d/A = 0.94 in Example 2-3.

FIG. 42 is a cross section illustrating the air hole periodic structure of extended triangular lattice used in the PBGF of the third embodiment of the present invention.

FIG. 43 is an extended cross section showing the unit cell of extended triangular lattice of FIG. 42.

FIG. 44 is a cross section of the circular air hole extended triangular lattice structure given as a reference example.

FIG. 45 is a graph showing the band structure in the circular air hole extended triangular lattice structure of FIG. 44.

FIG. 46 is a cross section showing the hexagonal air hole extended triangular lattice structure with $\omega_b$ - 0 as the first example of the hexagonal air hole extended triangular lattice structure used in the PBGF of the third embodiment of the present invention.

FIG. 47 is a graph showing the band structure of hexagonal air hole extended triangular lattice of FIG. 46.

FIG. 48 is a cross section showing the hexagonal air hole extended triangular lattice structure with $\omega_b/\Lambda = 0.06$ as the second example of the hexagonal air hole extended triangular lattice structure used in the PBGF of the third embodiment of the present invention.

FIG. 49 is a graph showing the band structure of hexagonal air hole extended triangular lattice of the third embodiment of FIG. 48.

FIG. 50 is a cross section of PBGF using a hexagonal air hole extended triangular lattice structure with $\omega_b/A = 0.06$ produced in Example 3-1.

FIG. 51 is a graph showing the dispersion in the first band gap of PBGF of Example 3-1.

FIG. 52 is a figure showing the power distribution of the core mode of the first band gap of the PBGF of Example 3-1.

FIG. 53 shows the permittivity distribution of PBGF of Example 3-1,

FIG. 54 is a graph showing the dispersion in the second band gap of PBGF of Example 3-1.

FIG. 55 is a figure showing the power distribution of the core mode of the second band gap of the PBGF of Example 3-1.

FIG. 56 is a cross section of the PBGF using a hexagonal air hole extended triangular lattice structure with $\omega_b/\Lambda = 0.06$ produced in Example 3-2.

FIG. 57 is a graph showing the dispersion in the first band gap of PBGF of Example 3-2.

FIG. 58 is a figure showing the power distribution of core mode 1 of the first band gap of the PBGF of Example 3-2.

FIG. 59 shows the permittivity distribution of PBGF of Example 3-2.

FIG. 60 is a figure showing the power distribution of core mode 2 of the first band gap of the PBGF of Example 3-2.

FIG. 61 is a graph showing the dispersion in the second band gap of PBGF of Example 3-2.

FIG. 62 is a figure showing the power distribution of care mode 1 of the second band gap of the PBGF of the embodiment.

FIG. 63 is a figure showing the power distribution of core mode 2 of the second band gap of the PBGF of me embodiment.

FIG. 64 is a cross section showing the hexagonal air hole extended triangular lattice structure with $\omega_b/\Lambda = 0,12$ produced in Example 3-3.

FIG. 65 is a graph showing the band structure of the hexagonal air hole extended triangular lattice structure of Example 3-3.

FIGS. 66A and B are cross sections showing the hexagonal air hole extended triangular lattice structure used in PBGF of the fourth embodiment of the present invention.

FIG. 67 is a cross section illustrating the hexagonal air hole extended triangular lattice structure with $\omega_r/\Lambda=1$, $\omega_b/\Lambda = 0$ taken as reference example.

FIG. 68 is a graph showing the band structure in the hexagonal air hole extended triangular lattice structure of FIG. 67.

FIG. 69 shows a cross section of a hexagonal air hole extended triangular lattice structure with $\omega_r/\Lambda = 0.9$, $\omega_b/\Lambda = 0$, used in the PBGF of the fourth embodiment of the present invention.

FIG. 70 is a graph showing the band structure of hexagonal air hole extended triangular lattice of FIG. 69.

FIG. 71 is a cross section showing the hexagonal air hole extended triangular lattice structure with $\omega_b/\Lambda = 0.8$, $\omega_b/\Lambda = 0$ used in the PBGF of the fourth embodiment of the present invention.

FIG. 72 is a graph showing the band structure of hexagonal air hole extended triangular lattice of FIG. 71.

FIG. 73 is a cross section illustrating the hexagonal air hole extended triangular lattice structure with $\omega_b/\Lambda = 1$, $\omega_b/\Lambda = 0,06$ taken as reference examples.

FIG. 74 is a graph showing the band structure in the hexagonal air hole extended triangular lattice structure of FIG. 73.

FIG. 75 shows a cross section of a hexagonal air hole extended triangular lattice structure with $\omega_b/\Lambda = 0.9$, $\omega_b/\Lambda 0.06$, used in the PBGF of the fourth embodiment of the present invention.

FIG. 76 is a graph showing the band structure of hexagonal air hole extended triangular lattice of FIG. 75.

FIG. 77 is a cross section showing the hexagonal air hole extended triangular lattice structure with $\omega_b/\Lambda = 0.8$, $m_b/A = 0.06$ used in the PBGF of the fourth embodiment of the present invention.

FIG. 78 is a graph showing the band structure of hexagonal air hole extended triangular lattice of the fourth embodiment of FIG. 77.

FIG. 79 is a cross section showing the hexagonal air hole extended triangular lattice structure with $\omega_b/\Lambda = 0.7$, $\omega_b/\Lambda = 0.06$ used in the PBGP of the fourth embodiment of the present invention.

FIG. 80 is a graph showing the band structure of hexagonal air hole extended triangular lattice of FIG. 79.

FIG. 81 is a cross section of the PBGF using a hexagonal air hole extended triangular lattice structure with $\omega_b/\Lambda = 0.9$, $\omega_b/\Lambda = 0.06$ produced in Example 4-1.

FIG. 82 is a graph showing the dispersion in the first band gap of PBGF of Example 4-1.

FIG. 83 is a figure showing the power distribution of the core mode of the first band gap of the PBGF of Example 4-1.

FIG. 84 shows the permittivity distribution of the PBGF of Example 4-1.

FIG. 85 is a graph showing the dispersion in the second band gap of PBGF of Example 4-1.

FIG. 86 is a figure showing the power distribution of the core mode of the second band gap of the PBGF. of Example 4-1.

FIG. 87 is a cross section of the PBGF using a hexagonal air hole extended triangular lattice structure with $\omega_b/\Lambda = 0.8$, $\omega_b/\Lambda = 0.06$ produced in Example 4-2.

FIG. 88 is a graph showing the dispersion in the first band gap of PBGF of Example 4-2.

FIG. 89 is a figure showing the power distribution of the core mode of the first band gap of the PBGF of Example 4-2.

FIG. 90 shows the permittivity distribution of the PBGF of Example 4-2.

FIG. 91 is a cross section of the PBGF using a hexagonal air hole extended triangular lattice structure with $\omega_b/\Lambda = 0.7$, $\omega_b/\Lambda = 0.06$ produced in Example 4-3.

FIG. 92 is a graph showing the dispersion in the first band gap of PBGF of Example 4-3.

FIG. 93 is a figure showing the power distribution of the core mode of the first band gap of the PBGF of Example 4-3.

FIG. 94 shows the pemittivity distribution of the PBGF of Example 4-3.

FIG. 95 is the cross section of the PBGF using a hexagonal air hole extended triangular lattice structure with $\omega_b/\Lambda = 0.9$, $\omega_b/\Lambda = 0.06$, produced in Example 4-4.

FIG. 96 is a graph showing the dispersion in the first band gap of PBGF of Example 4-4.

FIG. 97 is a figure showing the power distribution of core mode 1 of the first band gap of the PBOF of Example 4-4.

FIG. 98 shows the permittivity distribution of the PBGF of Example 4-4.

FIG. 99 is a figure showing the power distribution of core mode 2 of the first band gap of the PBGF of Example 4-4.

FIG.100 is a graph showing the dispersion in the first band gap of PBGF of Example 4-4.

FIG. 101 is a figure showing the power distribution of core mode 1 of the second band gap of the PBGF of Example 4-4.

FIG. 102 is a figure showing the power distribution of core mode 2 of the second band gap of the PBGF of Example 4-4.

FIG.103 is a cross section of the hexagonal air hole extended triangular lattice structure with $\omega_r/\Lambda = 0.7$, $\omega_b/\Lambda = 0.1$, produced in Example 4-5.

FIG. 104 is a graph showing the dispersion in the first band gap of PBGF of Example 4-5.

FIG.105 is a cross section that shows the capillary core structure of the PBGF of Example 4-5.

FIG. 106 is a cross section using a hexagonal air hole extended triangular lattice structure with $\omega_r/\Lambda = 0.7$, $\omega_b/\Lambda = 0.1$, produced in Example 4-5.

FIG.107 is an enlarged view of the important parts of FIG.106,

FIG. 108 is a graph showing the dispersion in the first band gap of PBGF of Example 4-5.

FIG. 109 is a graph showing the transmission characteristics of PBGF of Example 4-5.

FIG. 110 shows the power distribution of mode 1 of PBGF of Example 4-5.

FIG. 111 shows the power distribution of mode 2 of PBGF of Example 4-5.

FIG.112 shows the permittivity distribution of PBGF of Example 4-5.

FIG. 113 is a cross section of a PBGF using a hexagonal air hole extended triangular lattice structure with $\omega_r/\Lambda = 0.8$, $\omega_b/\Lambda = 0.1$, produced in Example 4-6.

FIG.114 is a graph showing the dispersion in the first band gap of PBGF of Example 4-6.

FIG.115 shows the power distribution of mode 1 of PBGF of Example 4-6.

FIG. 116 shows the power distribution of mode 2 of the PBGF of Example 4-6.

FIG. 117 shows the permittivity distribution of the PBGF of Example 4-6.

FIG.118 is a cross section of the PBGF using a hexagonal air hole extended triangular lattice structure with $\omega_r/\Lambda = 0.7$, $\omega_b/\Lambda = 0.1$ produced in Example 4-7.

FIG.119 is a graph showing the dispersion in the first band gap of PBGF of Example 4-7.

FIG. 120 shows the power distribution of the modes of PBGF of Example 4-7.

FIG,121 shows the permittivity distribution of PBGF of Example 4-7.

FIG.122 is a cross section of PHGF using hexagonal air hole extended triangular lattice structure with $\omega_r/\Lambda = 0.8$, $\omega_b/\Lambda = 0.1$ produced in Example 4-8.

FIG. 123 is a graph showing the dispersion in the first band gap of PBGF of Example 4-8.

FIG. 124 shows the power distribution of the modes of PBGF of Example 4-8.

FIG. 125 shows the permittivity distribution of PBGF of Example 4-8.

## DETAILED DESCRIPTION OF THE INVENTION

First embodiment

The first embodiment is described below referring to the drawings.

FIG 4 shows an example of an air hole periodic structure in extended triangular lattice (ETL) form used in the cladding part of PBGF 100 of the present invention, In this figure, reference numeral 110 is the silica portion, reference numeral 111 are air holes, reference numeral 114 is the first row of air holes, and reference numeral 115 is the second row of air holes.

This air hole periodic structure in an extended triangular lattice configuration is a periodic structure alternately arranged with a first row of air holes 114 each having a row of multiple air holes 111 at first pitch A in the cross section of the fiber, and multiple second rows of air holes 115 each having a row of multiple air holes 111 at the second pitch $\Gamma$, which is twice the first pitch A ($\Gamma$ = 2 A) such that these air holes 111 and the air holes of the first air hole row 114 form a triangular lattice.

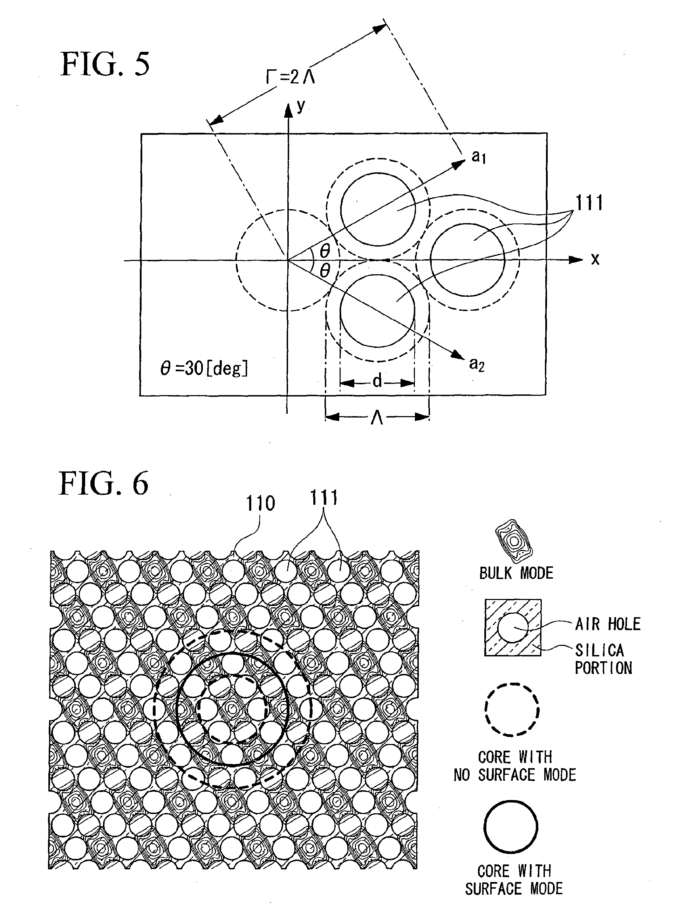

FIG 5 shows a unit cell structure of this extended triangular lattice. In this unit cell, the distance between the centers of adjacent air holes (first pitch) is taken as $\Lambda$, and the diameter of the air hole 11 is taken as d The fundamental vectors $a_1$ and $a_2$ indicating the periodicity of the lattice are inclined at 30 degrees and -30 degrees with respect to the x axis respectively, while the second pitch $\Gamma$ is $2\Lambda$.

If this air hole periodic structure in an extended triangular lattice configuration is used in the cladding of PBGF 100, and an appropriate core region is designed, a layer of air holes can be provided between the core and the cladding. The result is that the surface mode can be prevented, and wide transmission bandwidth can be realized. An air hole periodic structure in an extended triangular lattice configuration can be created by combining capillary tubes and silica rods. Compared to creating a normal triangular lattice periodic structure by combining only capillary tubes, the capillary tube wall does not become extremely thin, and the shape of the air hole can be restricted to circular shape; therefore, the compression of band gap due to deformation of air hole can be prevented.

FIG. 6 is a cross section showing the relationship between core diameter and surface mode in PBOF 100 of the present invention. In the air hole periodic structure in an extended triangular lattice configuration used in PBGF 100 of the present invention, the bulk mode is localized in the silica portion disposed in the silica rod. If the air hole core 112 is formed at the center of this extended triangular lattice, the core edge can be formed without cutting across the bulk mode. Thus, the surface mode can be avoided.

The PBGF 100 of the present invention has an air hole periodic structure of extended triangular lattice mentioned earlier, in the cladding, and also has an air hole core 112 at the center. The material of the silica portion 110 other than the air hole in the PBGF 100 of the present invention can be made the same over the entire fiber. For instance, the use of pure silica ($SiO_2$) is preferred, but silica glass added with dopant for adjusting the refractive index, such as fluorine or germanium dioxide may be used.

The air hole core 112 is almost circular in shape in the cross section of the fiber. The diameter D of this air hole core can be made to have the relationship: $0.7\Lambda \leq D \leq 3.3A$ with respect to the first pitch A. By setting the diameter D of the air hole core 112 within the range mentioned above, a PBGP without surface mode can be provided.

The diameter D of the air hole core 112 may satisfy the relationship: $4.7\Lambda \leq D \leq 7.3A$ with respect to the first pitch A. By setting the diameter D of the air hole core 112 within the range mentioned above, a PBGF without surface mode can be provided,

The diameter D of the air hole core may satisfy the relationship of $8.7\Lambda \leq D \leq 11.3A$ with respect to the first pitch A. By setting the diameter D of the air hole core 112 within the range mentioned above, a PBGF without surface mode can be provided.

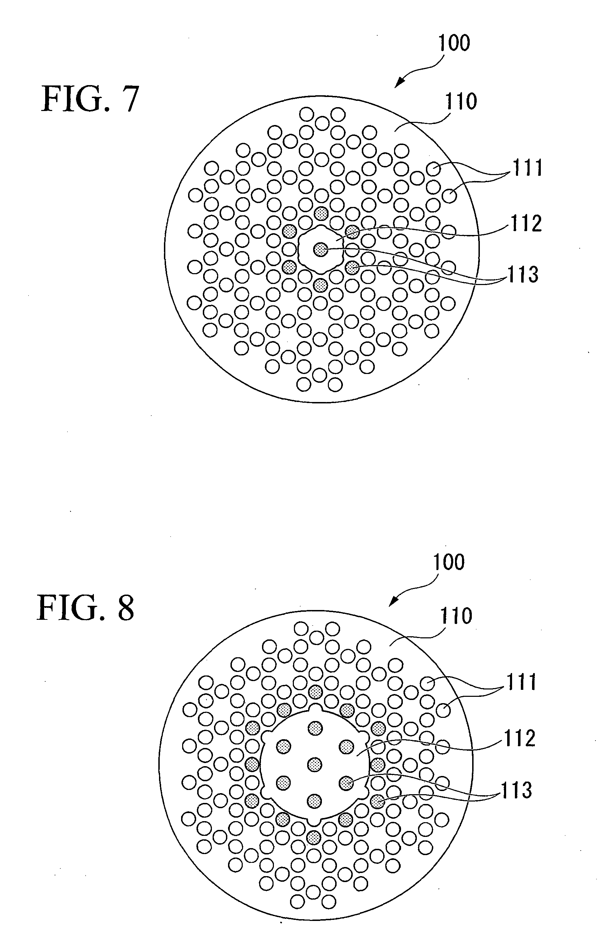

FIG. 7 is a cross section that shows the first example of PBGF 100 of the present invention. In this example, the PBGF has an air hole periodic structure in an extended triangular lattice configuration mentioned above in the cladding, and comprises an air hole core 112 formed by taking one air hole at the center of the fiber cross section surrounded by a region that includes six air holes in one layer as the air hole.

FIG 8 is a cross section that shows the second example of PBGF 100 of the present invention. In this example, the PBGF has an air hole periodic structure in an extended triangular lattice configuration mentioned above in the cladding, and comprises an air hole core 112 formed by taking one air hole at the center of the fiber cross section surrounded by a region that includes 36 air holes in three layers as the air hole.

In these examples, the air hole 111 formed in PBGF 100 has the same diameter, but the present invention is not restricted to air holes with this diameter only; and it may air holes with different diameter in part The diameter of the air hole may be adjusted by setting the wall thickness of the capillary tube used in the production of PBGF,

In the preferred embodiment of the present invention, the diameter d of the air hole 111 of PBGF 100 may preferably satisfy the relationship $0.85\Lambda \leq d \leq \Lambda$ with respect to the first pitch $\Lambda$, and have a cross section of circular shape. If the diameter d is less than the range mentioned above, the band gap becomes too narrow; on the other band, if it exceeds the range mentioned above, the lattice structure is difficult to retain. Moreover, the cross section shape of the air hole 111 need not necessarily be circular; it can be slightly modified and can be of hexagonal shape, close to circular shape.

The air hole periodic structure of the extended triangular lattice configuration provided in the cladding may preferably be provided in three or more layers outside the core 112. If the number of layers of extended triangular lattice provided in the cladding is 2 or less, the confinement of light may become inadequate and the loss may increase.

The PBGF 100 of the present invention may have 60% or more, preferably 70% or more and more preferably 80% or more of a core mode in which the transmitting power is concentrated in the region of the air hole core 112, and may preferably have optical characteristics wherein the surface mode is absent substantially. If the percentage of core mode mentioned above is less than 60%, light will be transmitted into the silica, which is not preferable.

As shown in FIG 7, a PBGF with comparatively small air hole core diameter can have optical characteristics wherein only a single core mode (where the number of modes in case of all degraded modes is taken as 1) is present. This PBGF can be used as a single mode fiber.

On the other hand, as shown in FIG 8, a PBGF with large air hole core diameter can be a multi-mode fiber that transmits multiple modes.

The PBGF of the present invention may preferably have optical characteristics wherein the core mode is present when the wavelength $\lambda$ satisfies a range of $0.7 \leq \Gamma/\lambda \leq 1.2$ (where $\Gamma = 2\Lambda$, where $\Lambda$ is the first pitch). If $\Gamma/\lambda$ is less than 0.7, band gap will be no longer present, and light will not be transmitted. Moreover, if $\Gamma/\lambda$ exceeds 1,2, the band gap will be no longer present, and light will not be transmitted.

If PBGF operates in a higher order band gap, then $\Gamma/\lambda$ may preferably be within a range of $1.4 \leq \Gamma/\lambda \leq 1.8$. If $\Gamma/\lambda$ is less than 1.4, band gap will be no longer present, and light will not be transmitted. Moreover, if $\Gamma/\lambda$ exceeds 1.8, the band gap will be no longer present, and light will not be transmitted.

Next, as an example of the method of production of PBGrF of the present invention, the example of production of PBGF 100 of the present invention shown in FIG. 7 and FIG 8 is described.

In this production method, first, arranging silica capillary tubes and silica rods into a first row of air holes with multiple capillary tubes at the first pitch, and with the second row of air holes alternately superposed with capillary tubes and silica rods such that the capillary tube arrangement of the cross section forms an extended triangular lattice. An air hole core region with silica rods containing capillary tube bundles is made after eliminating the central silica rods, or the central silica rods together with the capillary tubes and silica rods surrounding the central silica rods. The capillary tubes used in the production method of the present invention may be of annular cross section and the silica rods may be of circular cross section with diameter equal to that of the capillary tubes.

In case of the production of PBGF shown in FIG 7, multiple capillary tubes are combined with silica rods to form extended triangular lattices, and an air hole core region is formed by eliminating one silica rod at the center surrounded by six capillary tubes in one layer surrounding the silica rod.

In case of the production of PBGF shown in FIG 7, multiple capillary tubes are combined with silica rods to form extended triangular lattices, and an air hole core region is formed by eliminating one silica rod at the center surrounded by thirty-six capillary tubes (30 capillary tubes and six silica rods) in three layers surrounding the central silica rod.

Next, capillary tube bundle containing silica rods is heated and integrated to produce the preform for fiber spinning. This heating and integrating process can be implemented using the same equipment and method as the heating and integrating process in the conventional method of production of PHGF wherein capillary tube bundles were used. The capillary tube bundle containing silica rods mentioned above may preferably be taken as the preform for fiber spinning after inserting it in the air hole of the silica tube and integrating it. In this way, when the capillary tube bundle containing silica rods is inserted in the air hole of the silica tube and integrated, the pressure and gas composition in the silica tube may preferably be adjusted appropriately such that deformation of the air hole is minimized and the circular shape is retained after integration.

By spinning the preform for fiber spinning produced as mentioned above, the PBGF shown in FIG 7 or the PBGF shown in FIG. 8 can be obtained. This spinning process can be implemented using the same equipment and method used in conventional spinning processes in the production of conventional PBGF and other various kinds of silica glass-based fiber.

The PBGF in the present example, is an air hole periodic structure in an extended triangular lattice configuration in the cladding. Thus, core made of air holes in triangular lattice configuration can be realized without the edge cutting across the bulk mode, optical characteristics wherein only the core mode is present without generating surface mode can be obtained, wide wave guide bandwidth can be obtained, and transmission loss can be reduced.

The production method of PBGF according to the present example can be made the same as the conventional method of using capillary tubes, except for replacing some of the capillary tubes with silica rods and combining them, and PBGF with air hole periodic structure in an extended triangular lattice configuration can be easily produced. Thus, PBGF with better optical characteristics than the conventional PBGF. can be produced more easily and more economically by using methods similar to the conventional PBGF.

Example 1-1

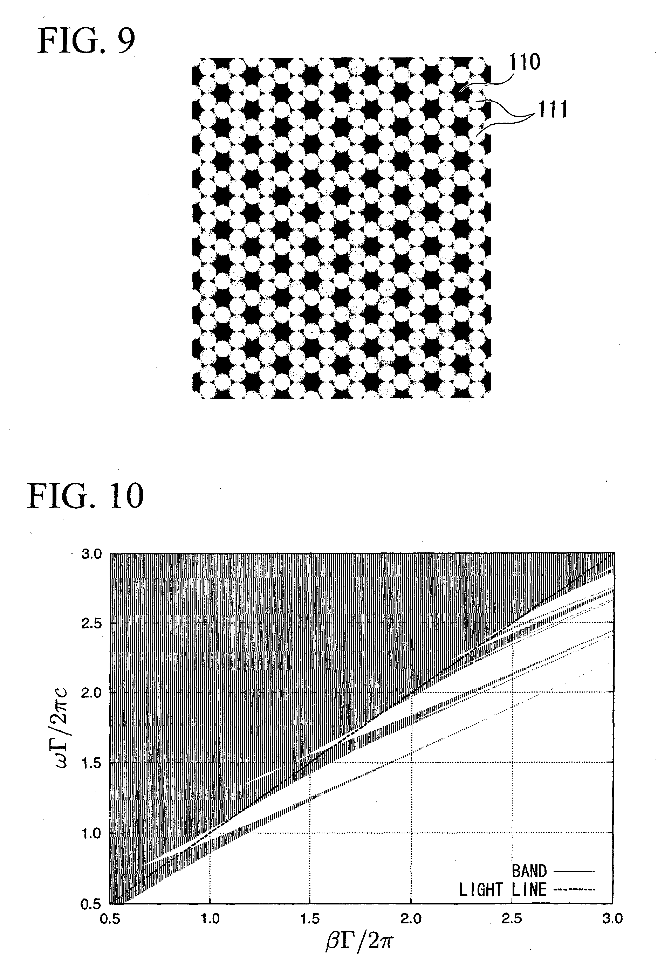

FIG 10 shows the band structure of extended triangular lattice shown in FIG 9. For the periodic structure of this example, the air hole diameter d was made equal to the pitch Λ, and the refractive index of silica, n, was taken as 1.45. The black parts are silica and the white parts are air holes in FIG 9. The band structure was calculated using the Plane wave decomposition method (see S. G. Johnson and J. D. Joannopoulos, "Block-iterative frequency-domain methods for Maxwell's equations in plane wave basis," Opt. Express, vol. 8, no. 3, pp. 173.190,2001).

In FIG 10, $\beta$ is the wave number of the transmission direction (direction perpendicular to the periodic structure), r = 2 A is the lattice constant of the extended triangular lattice, $\omega$ is the angular frequency, and c is the velocity of light. The light line expresses the dispersion curve when light is transmitted through a vacuum medium. The region enveloped by bands is the region wherein light cannot be transmitted in any direction in the cross section of the periodic structure, that is, it expresses the band gap. When this periodic structure is used in the fiber cladding, and air hole used in the core, the region wherein light in the fiber core becomes the wave guide is adjacent to the light line, above which the band gap is present. In this case, the first wave guide region is present when $\Gamma/\lambda$ (=$\omega\Gamma/2\tau c$) is in a range of between 0.77 and 1.10 and the second wave guide region is present when the same ratio is in a range of between 1.54 and 1.80. Here, $\lambda$ is the wavelength.

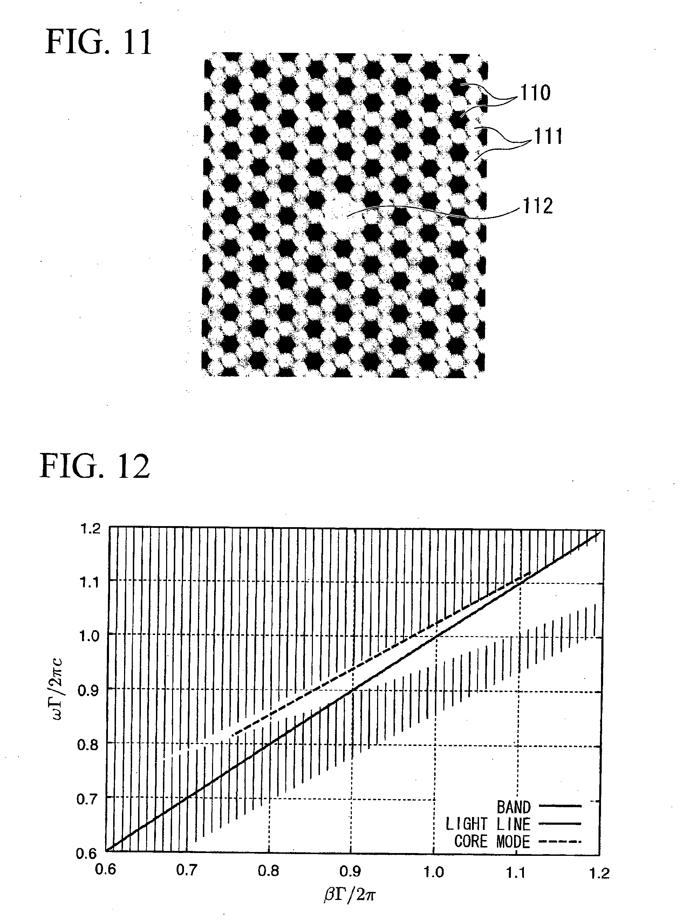

As shown in FIG 11, the core mode dispersion was calculated for PBGF produced using an extended triangular lattice structure with d/Λ = 1 and eliminating the silica rod at the center of the extended triangular lattice and the six capillary tubes in one layer surrounding this silica rod. The PBGF of the present embodiment has an air hole core 112 formed by eliminating one silica rod and the six capillary tubes in one layer surrounding it at the center of the extended triangular lattice.

FIG 12 shows the dispersion of the first band gap. As shown in the figure, only the core mode is present in the band gap when $\Gamma/\lambda$ = 0.81 to 1.12, and the surface mode is absent. Also, the core mode in this case is a single mode (including degraded mode).

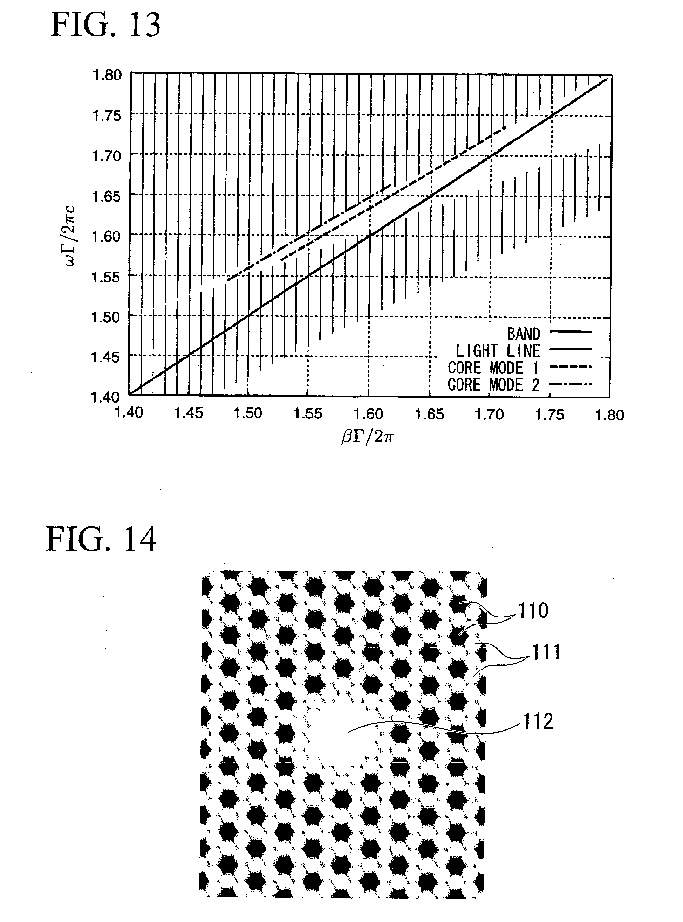

FIG 13 shows the dispersion of the second band gap. As shown in the figure, the core mode 1 is present when $\Gamma/\lambda$ = 1.57 to 1.73, and core mode 2 is present when $\Gamma/\lambda$ =1.54 to 1.66, while no surface mode is present. However, the degraded mode is included in each core mode.

Example 1-2

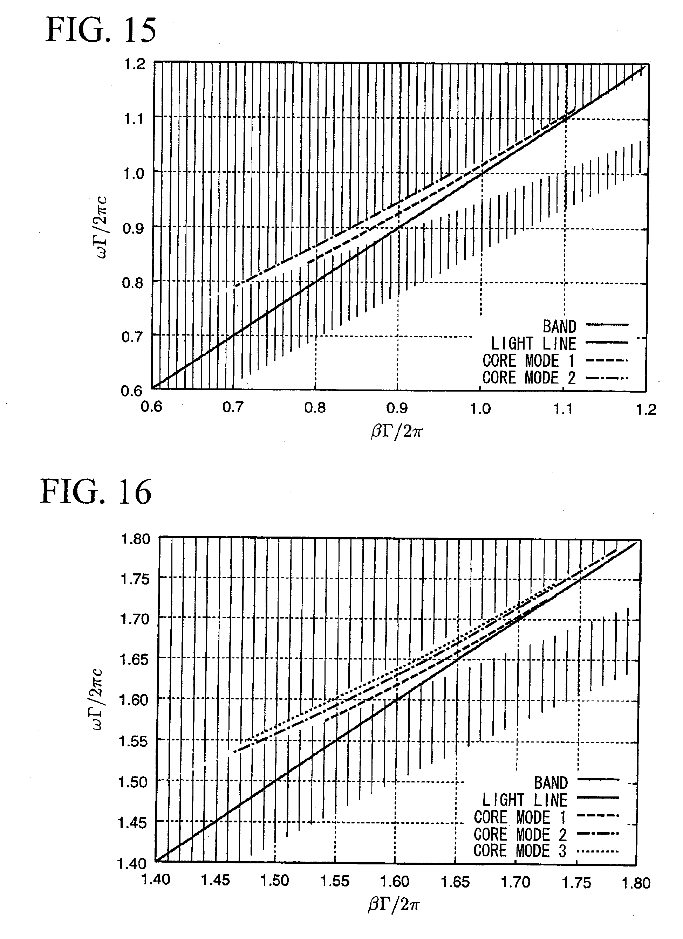

As shown in FIG 14, the core mode dispersion was calculated for PBGF produced using an extended triangular lattice structure with d/Λ =1 and eliminating the silica rod at the center of the extended triangular lattice and the thirty-six capillary tubes (30 capillary tubes and 6 silica rods) in three layers surrounding this silica rod. FIG 15 shows the dispersion of the first band gap. As shown in the figure, the first core mode is present when $\Gamma/\lambda$ = 0.83 to 1.12, the second core mode is present when $\Gamma/\lambda$ = 0.79 to 1.99, while no surface mode is present. However, the degraded mode is present in the core mode.

FIG 16 shows the dispersion of the second band gap. As shown in the figure, core mode 1 is present when $\Gamma/\lambda$ = 1.57 to 1.73, core mode 2 is present when $\Gamma/\lambda$ = 1.53 to 1.78, core mode 3 is present when $\Gamma/\lambda$ = 1.55 to 1.74, and no surface mode is present. However, the degraded mode is present in the core mode.

Example 1-3

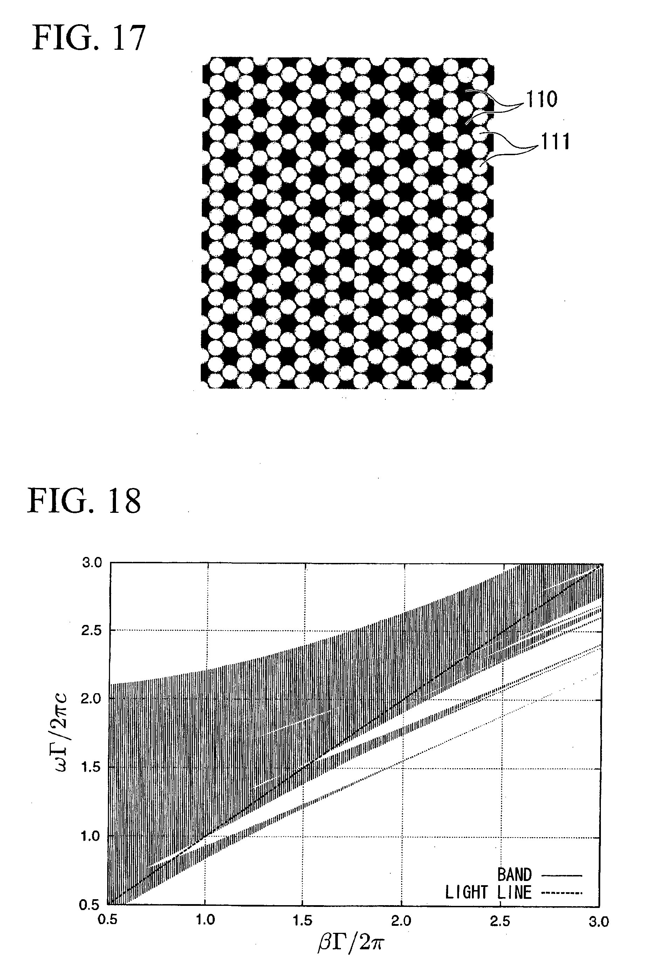

FIG 18 shows the band structure of the extended triangular lattice shown in FIG 17. However, the periodic structure was assumed to have an air hole diameter d = 0.94 A. In this case, the first wave guide region is present when $\Gamma/\lambda$ is in a range of 0.76 to 0.98, and the second wave guide region is present when $\Gamma/\lambda$ is in a range of 1.49 to 1.57.

In this way, it can be seen that as the air hole diameter decreases, the band gap becomes narrower but it is present. Similar to Examples 1-1 and 1-2, by eliminating the silica rod at the center of the extended triangular lattice together with the six capillary tubes in one layer surrounding the silica rod, or by eliminating one silica rod together with the thirty-six capillary tubes and rods (30 capillary tubes and 6 silica rods) in three layers surrounding the silica rod, if an air hole core is formed and PBGF is produced, then similar to the Examples 1-1 and 1-2, it was confirmed that only core mode is present while no surface mode is generated.

Second Embodiment

The second embodiment is described here referring to the drawings.

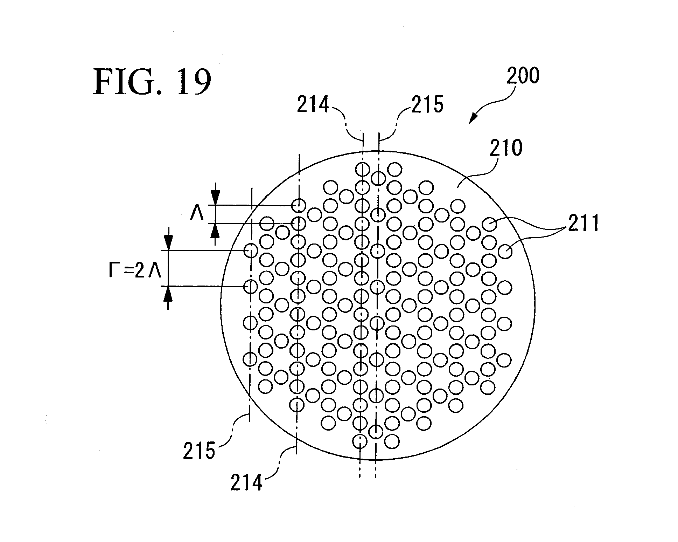

FIG 19 shows an example of the air hole periodic structure in an extended triangular lattice configuration used in the cladding of PBGF 200 of the present invention. In this figure, the reference numeral 210 indicates the silica portion, 211 indicates the air hole, 214 indicates the first row of air holes, and 215 indicates the second row of air holes.

This air hole periodic structure in an extended triangular lattice configuration is a periodic structure alternately and with a first row of air holes 214 each having a mw of multiple air holes 211 at first pitch A in the cross section of the fiber, and multiple second rows of air holes 215 each having a row of multiple air holes 211 at the second pitch $\Gamma$, which

is twice the first pitch $\Lambda$ ($\Gamma = 2\Lambda$) such that these air holes 211 and the air holes of the first row of air holes 114 form a triangular lattice.

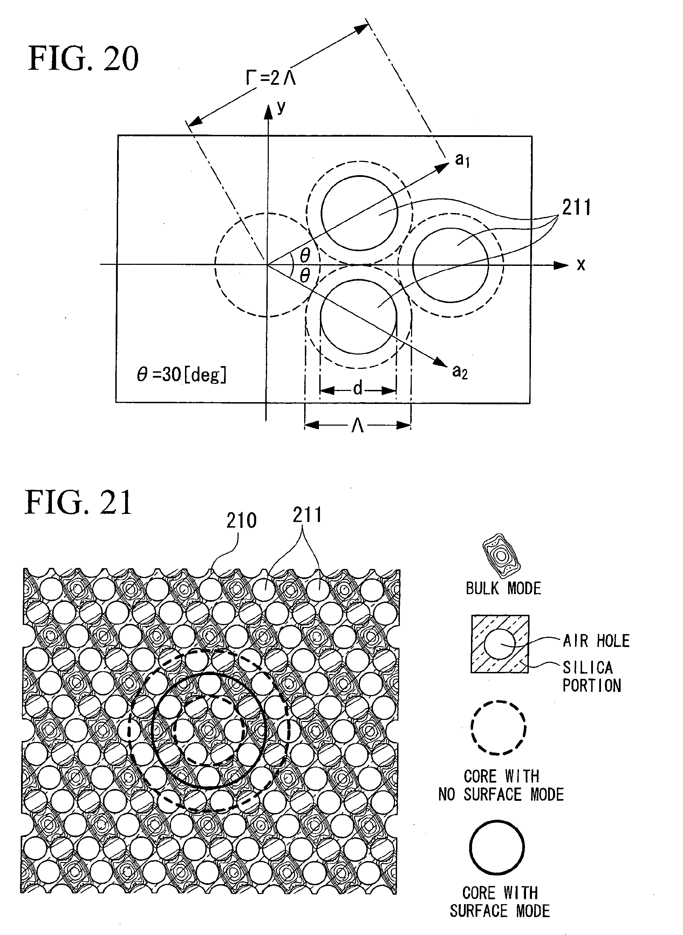

FIG 20 shows the unit cell structure of this extended triangular lattice. The distance between the centers of adjacent air holes 211 (first pitch) in this unit cell is taken as $\Lambda$, and the diameter of the air hole 211 is taken as d.

The fundamental vectors $a_1$ and $a_2$ indicating the periodicity of the lattice are inclined at 30 degrees and -30 degrees with respect to the x axis respectively, while the second pitch $\Gamma$ is $2\Lambda$.

If this air hole periodic structure in an extended triangular lattice configuration is used in the cladding of PBGF 200, and an appropriate core region is designed, a layer of air holes can be provided between the core and the cladding. The result is that the surface mode can be prevented, and wide transmission bandwidth can be realized. An air hole periodic structure in an extended triangular lattice configuration can be created by combining capillary tubes and silica rods. Compared to creating a normal triangular lattice periodic structure by combining only capillary tubes, the capillary tube wall does not become extremely thin, and the shape of the air hole can be restricted to circular shape; therefore, the compression of band gap due to deformation of air hole can be prevented.

FIG 21 is a cross section showing the relationship between core diameter and surface mode in PBGF 200 of the present invention. In the air hole periodic structure in an extended triangular lattice configuration used in PBGF 200 of the present invention, the bulk mode is localized in the silica portion 210 disposed in the silica rod. If air holes are provided in the triangular lattice configuration at constant pitch in the silica portion at the center of this extended triangular lattice and the core is formed, the core edge can be formed without cutting across the bulk mode. Thus, the surface mode can be avoided

The PBGF 200 of the present invention has an air hole periodic structure in an extended triangular lattice configuration mentioned above in the cladding, and also has a core 216 formed by multiple air holes 211 arranged at a constant pitch in triangular lattice configuration. The material of the silica portion 210 other than the air hole in the PBGF of the present invention can be made me same over the entire fiber. For instance, the use of pure silica ($SiO_2$) is preferred, but silica glass added with dopant for adjusting the refractive index, such as fluorine or germanium dioxide may be used.

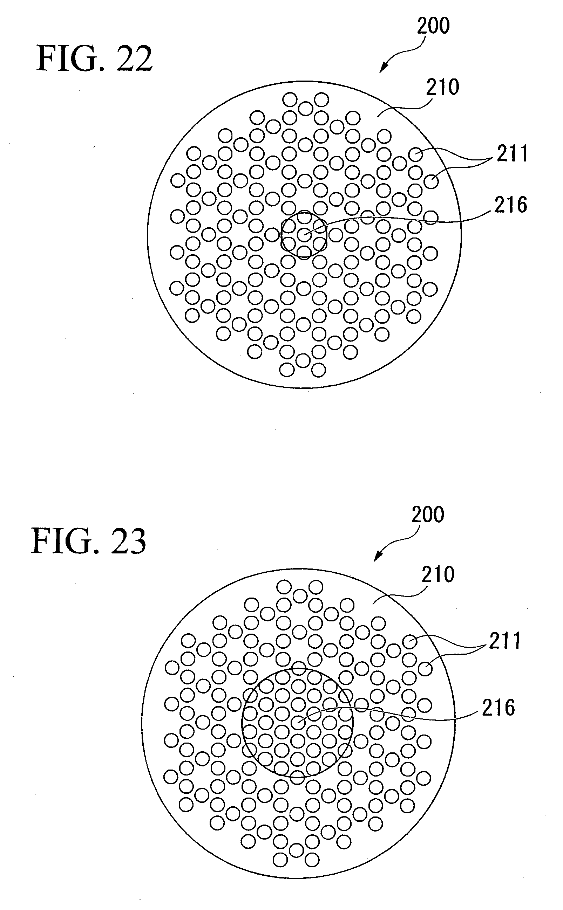

FIG 22 is a cross section illustrating the first example of PBGF 200 of the present invention. The PBGF of the present example has an air hole periodic structure in an extended triangular lattice configuration mentioned above in the cladding, and also has a core 216 with a total of seven air holes 211 including the air hole 211 at the center of the fiber cross section and air holes 211 in the first layer (6 air holes) surrounding it.

FIG 23 is a cross section illustrating the second example of PBGF 200 of the present invention. The PBGF of the present example has an air hole periodic structure in an extended triangular lattice configuration mentioned above in the cladding, and also has a core 216 with a total of thirty-seven air holes 211 including the air hole 211 at the center of the fiber cross section and air holes 211 in the first layer (6 air holes), air holes 211 in the second layer (12 air holes), and air holes 211 in the third layer (18 air holes) surrounding the central air hole.

In these examples, the air holes 211 that form the PBGF have the same diameter in the cladding part as well as the core part, but this not a restriction, and the diameters of the air holes in the cladding part and the core part may be different. The diameter of the air hole may be adjusted by setting the wall thickness of the capillary tube used in the production of PBGF.

In the preferred embodiment of the present invention, the diameter d of the air hole 211 of PBGF 200 may preferably satisfy the relationship $0.85\Lambda \le d \le \Lambda$ with respect to the first pitch A, and have a cross section of circular shape. If the diameter d is less than the range mentioned above, the band gap becomes too narrow; on the other hand, if it exceeds the range mentioned above, the lattice structure is difficult to retain. Moreover, the cross section shape of the air hole 211 need not necessarily be circular; it can be slightly modified and can be of hexagonal shape, close to circular shape.

The air hole periodic structure of the extended triangular lattice configuration provided in the cladding may preferably be provided in three or more layers outside the core 216. If the number of layers of extended triangular lattice provided in the cladding is 2 or less, the confinement of light may become inadequate and the loss may increase.

The PBGF 200 of the present invention may have 60% or more, preferably 70% or more and more preferably 80% or more of a core mode in which the transmitting power is concentrated in the core region, and may preferably have optical characteristics wherein the surface mode is absent substantially. If the percentage of core mode mentioned above is less than 60%, light will be transmitted into the silica, which is not preferable.

As shown in FIG 22, a PBGF with comparatively small air hole core diameter can have optical characteristics wherein only a single core mode (where the number of modes in case of all degraded modes is taken as 1) is present. This PBGF can be used as a single mode fiber.

On the other hand, as shown in FIG 23, a PBGF with large core diameter can be a multi-mode fiber that transmits multiple modes.

The PBGF of the second embodiment of the present invention may preferably have optical characteristics wherein the core mode is present when the wavelength $\lambda$ satisfies a range of $0.7 \le \Gamma/\lambda \le 1.2$ (where $\Gamma = 2\Lambda$, where $\Lambda$ is the first pitch). If $\Gamma/\lambda$ is less than 0,7, band gap will be no longer present, and light will not be transmitted. Moreover, if Γ/λ exceeds 1.2, the band gap will be no longer present, and light will not be transmitted.

If PBGF operates in a high-order band gap, the ratio Γ/λ mentioned above may preferably be a range of 1.4 ≤ Γ/λ ≤ 1.8. If the ratio Γ/λ is less than 1.4, PBGF is outside the high order band gap and does not operate. Also, if Γ/λ exceeds 1.8, PBGF is again outside the high order band gap, and it does not operate.

Next, as an example of the production method of PBGF of the second embodiment of the present invention, the production of PBGF of the second embodiment of the present invention shown in FIGS. 22 and 23 is explained here.

In this production method, first, arranging silica capillary tubes and silica rods into a first row of air holes wherein a number of capillary tubes are arranged at a first pitch, and with the second row of air holes wherein the capillary tubes and silica rods are alternately superposed such that the capillary tube arrangement of the cross section forms an extended triangular lattice. An air hole core region with silica rods containing capillary tube bundles is made after eliminating the central silica rods, or the central silica rod together with the capillary tubes and silica rods in one or more layers surrounding the central silica rod. The silica capillary tubes used in the production method of the present invention may preferably be of annular cross section and the silica rods may preferably be of circular cross section with diameter equal to that of the capillary tubes.

As shown in FIG 22, in the production of PBGF with core 216 having a total of seven air holes in triangular lattice configuration including one air hole at the center of fiber cross section surrounded by six air holes in one layer, only one silica rod at the center of the capillary tube bundle with silica rods is replaced by capillary tubes to form the core region.

As shown in FIG 23, in the production of PBGF with core 216 having a total of thirty-seven air holes in triangular lattice configuration including one air hole at the center of fiber cross section surrounded by the first layer (six air holes), the second layer (12 air holes) and the third layer (18 air holes), only one silica rod at the center of the capillary tube bundle with silica rods and one layer of silica rods outside it are replaced by capillary tubes to form the core region.

Next, the capillary tube bundle containing silica rods is heated and integrated to produce the preform for fiber spinning. This heating and integrating process can be implemented using the same equipment and method as the heating and integrating process in the conventional method of production of PBGF wherein capillary tube bundles were used. The capillary tube bundle containing silica rods mentioned above may preferably be taken as the preform for fiber spinning after inserting it in the air hole of the silica tube and integrating it. When the capillary tube bundle containing silica rods is integrated with the bundle while they are inserted in the hole of the silica tube, and if the pressure and gas composition in the silica tube is appropriately adjusted, the capillary tube bundle may preferably be integrated with the air hole maintained in circular shape without deformation.

Next, by spinning the manufactured preform for fiber spinning as mentioned above, PBGF shown in FIG 22 or FIG 23 can be obtained. This spinning process can be implemented using the same equipment and method used in conventional spinning processes in the production of conventional PBGF and other various kinds of silica glass-based fiber.

The PBGF in the present example, is an air hole periodic structure in an extended triangular lattice configuration in the cladding. Thus, core made of air holes in triangular lattice configuration can be realized without the edge cutting across the bulk mode, optical characteristics wherein only the core mode is present without generating surface mode can be obtained, wide wave guide bandwidth can be obtained, and transmission loss can be reduced.

Moreover, since the core is disposed with multiple air holes triangular lattice configuration in the silica portion, compared to the PBGF with conventional air hole core wherein the silica portions between the air holes of the core act as reinforcing material, the mechanical strength of the fiber can be increased.

The production method of PBGF according to the present example can be made the same as the conventional method of using capillary tubes, except for replacing some of the capillary tubes with silica rods and combining them, and PBGF with air hole periodic structure in an extended triangular lattice configuration can be easily produced. Thus, PBGF with better optical characteristics than the conventional PBGF can be produced more easily and more economically by using methods similar to the conventional PBGF.

Example 2-1

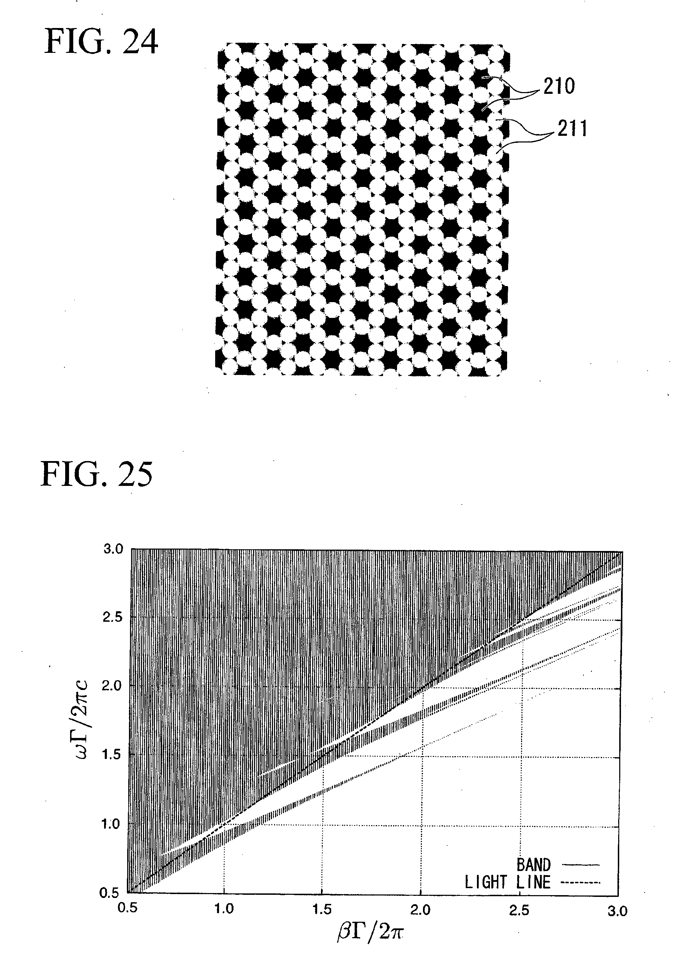

FIG 24 shows the band structure of the extended triangular lattice shown in FIG 25. For the periodic structure of this example, the air hole diameter d was made equal to the pitch A, and the refractive index of silica, n, was taken as 1.45. The black parts are silica and the white parts are air holes in FIG 24. The band structure was calculated using the Plane wave decomposition method (see S. G. Johnson and J. D. Joannopoulos, "Block-iterative frequency-domain methods for Maxwell's equations in plane wave basis," Opt. Express, vol. 8, no. 3, pp. 173-190, 2001).

In FIG 25, β is the wave number of the transmission direction (direction perpendicular to the periodic structure), Γ = 2 A is the lattice constant of the extended triangular lattice, ω is the angular frequency, and c is the velocity of light. The light line expresses the dispersion curve when light is transmitted through a vacuum medium. The region enveloped by bands is the region wherein light cannot be transmitted in any direction in the cross section of the periodic structure, that is, it expresses the band gap. When this periodic structure is used in the fiber cladding, and air hole used in the core, the region wherein light in the fiber core becomes the wave guide is adjacent to the light line, above which the band gap is present. In this case, $\Gamma/\lambda$ ($=\omega\Gamma/2/\pi c$) is in a range of between 0.77 and 1.10 and the first wave guide region is present; and the same ratio is in a range of between 1.54 and 1.80 and the second wave guide region is present. Here, $\lambda$ is the wavelength.

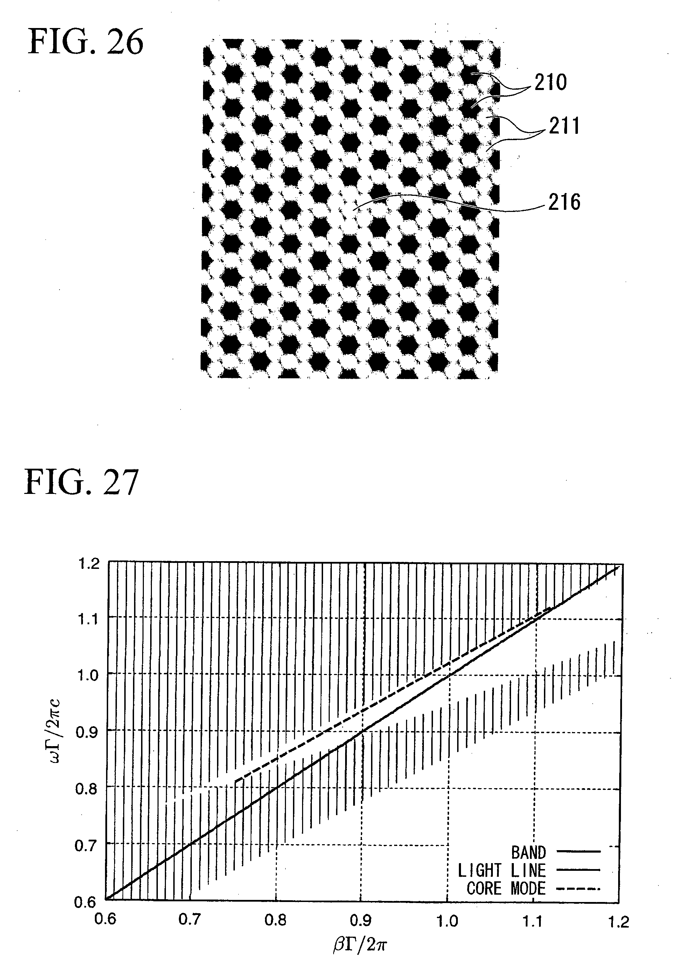

As shown in FIG 26, the core mode dispersion was calculated for PBGF produced using an extended triangular lattice structure with d/$\Lambda$=1 and by replacing only the silica rod at the center of the extended triangular lattice by the capillary tubes. The PBGF of the present embodiment has a core (capillary core) wherein the total of seven air holes including the air hole at the center of the extended triangular lattice and the first layer (six air holes) surrounding it, form the normal triangular lattice periodic structure.

FIG 27 shows the dispersion of the first band gap. As shown in the figure, only the core mode is present in the band gap when $\Gamma/\lambda$ = 0.81 to 1.12, and the surface mode is absent. Also, the core mode in this case is a single mode (including degraded mode).

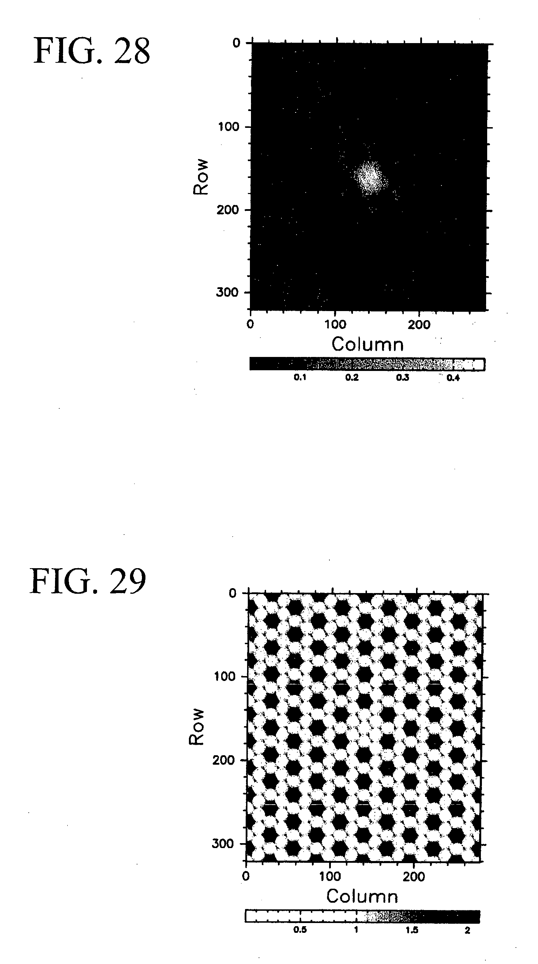

FIG 28 shows the typical power distribution at this stage.

FIG 29 shows the permittivity of the fiber drawn to the same scale.

As shown in the figures, the power of the core mode in the PBGF of the present embodiment is distributed only slightly over the silica rod just near the core, while most of it is distributed within the core.

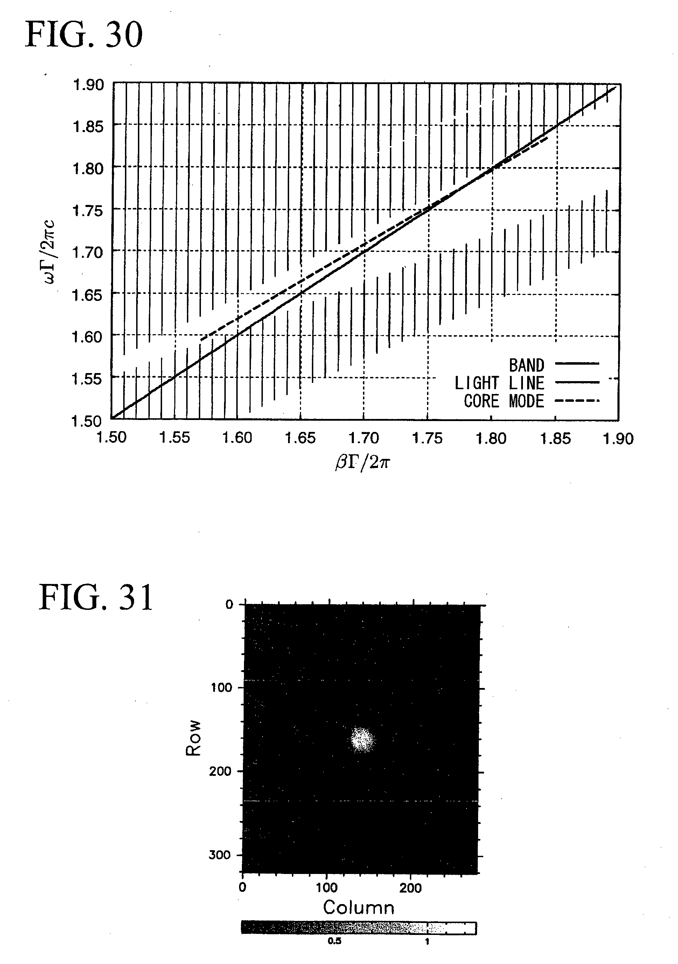

FIG 30 shows the dispersion of the second band gap in the PBGF of the present embodiment. As shown in the figure, the core mode is present but the surface mode is absent when $\Gamma/\lambda$ = 1.59 to 1.83. The core mode in this case is also a single mode (including degraded mode). The dispersion of the core mode intersects the light line, but this is because a slight amount of silica remains in the core.

FIG. 31 shows the typical power distribution of core mode at this stage. As shown in the figure, the power of the core mode is distributed only slightly over the silica rod just near the core, while most of it is distributed within the core.

Example 2-2

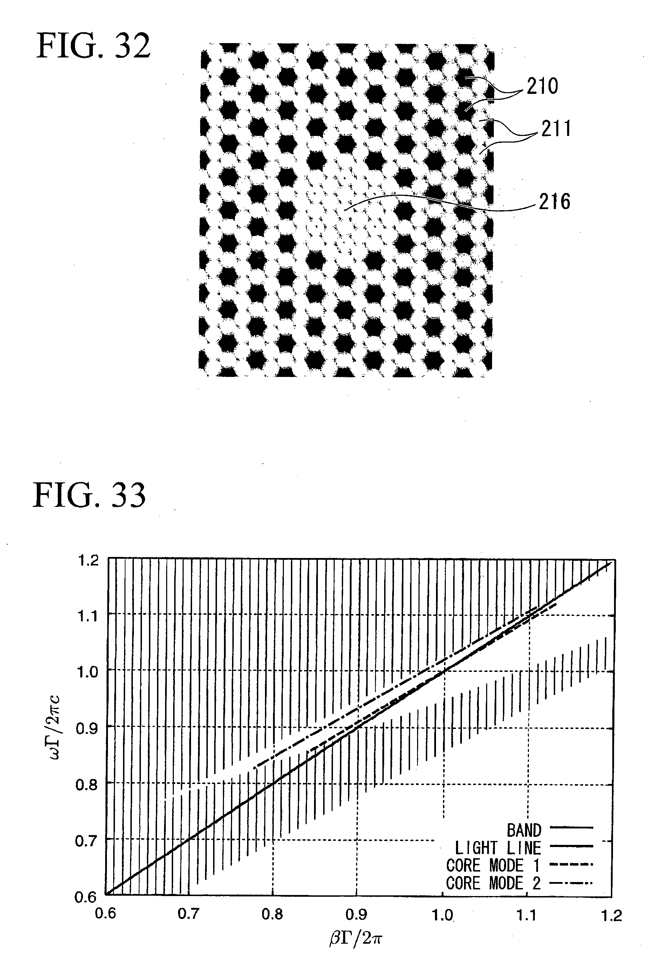

As shown in FIG 32, the core mode dispersion was calculated for PBGF produced using an extended triangular lattice structure with d/$\Lambda$=1 and by replacing the silica rod at the center of the extended triangular lattice and the silica rods of the outer layers by the capillary tubes. The PBGF of the present embodiment has a core (capillary core) wherein the total of thirty-seven air holes including the air hole at the center of the extended triangular lattice, and the first layer (six air holes), the second layer (12 air holes) and the third layer (18 air holes) surrounding it, form the normal triangular lattice periodic structure.

FIG 33 shows the dispersion of the first band gap. As shown in the figure, core mode 1 is present when $\Gamma/\lambda$ = 0.86 to 1.12, core mode 2 is present when $\Gamma/\lambda$ = 0.82 to 1.11, but surface mode is absent. However, the degraded mode is included in each core mode.

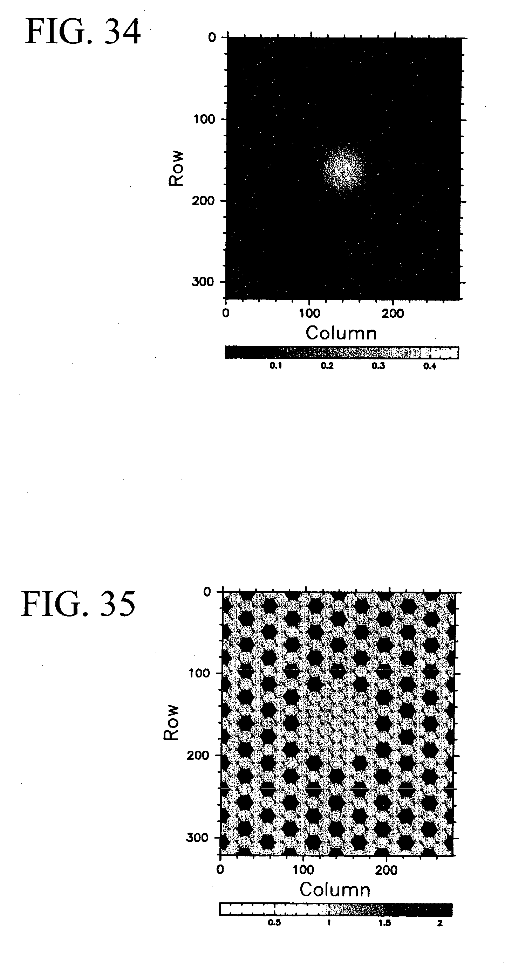

FIG 34 shows the typical power distribution of core mode 1 at this stage. FIG. 35 shows the permittivity of the fiber drawn to the same scale. As shown in the figure, the power of the core mode 1 is distributed only slightly over the silica rod just near the core, while most of it is distributed within the core.

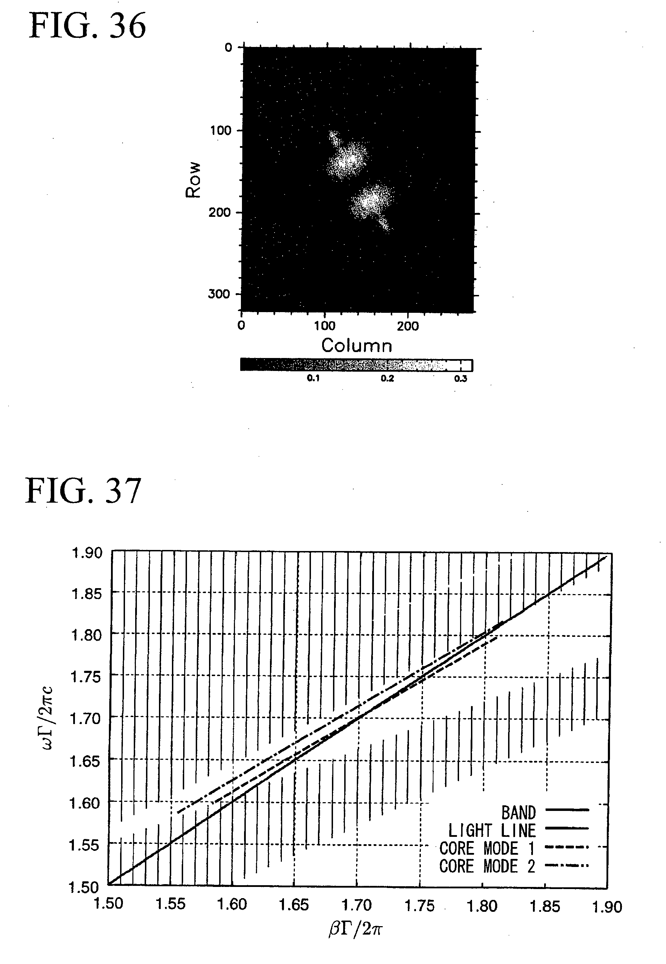

FIG 36 shows the typical power distribution of core mode 2 in this case.

FIG. 37 shows the dispersion of the second band gap. As shown in the figure, core mode 1 is present when $\Gamma/\lambda$=1.60 to 1.79, core mode 2 is present when $\Gamma/\lambda$ = 1.58 to 1.82, but surface mode is absent. However, the degraded mode is included in each core mode.

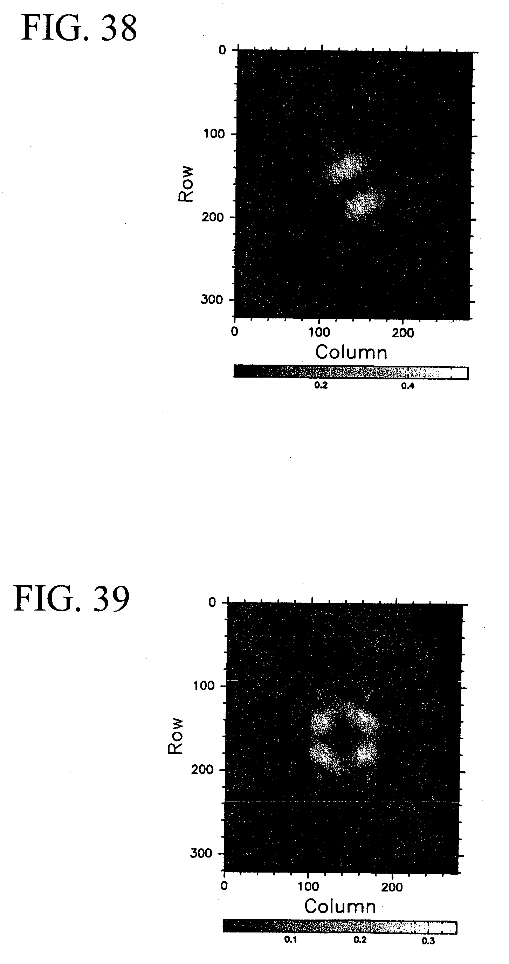

FIG. 38 and FIG 39 show the typical power distributions of core mode 1 and core mode 2 at this stage respectively.

Example 2-3

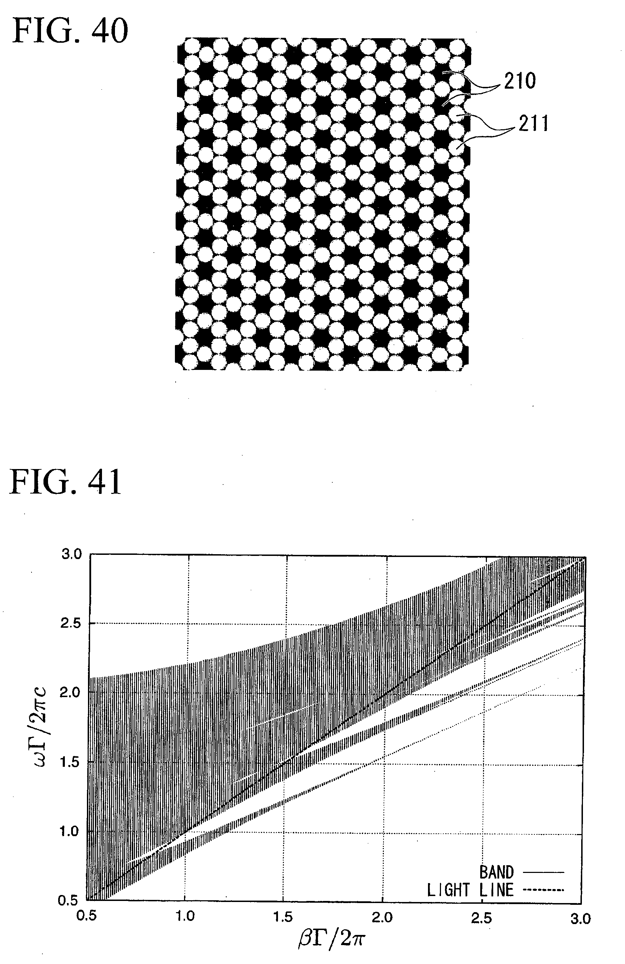

FIG 40 shows the band structure of the extended triangular lattice shown in FIG 40. However, the air hole diameter d was taken as 0.94 A for the periodic structure of this example. In this case, the first wave guide region is present in a range of $\Gamma/\lambda$ = 0.76 to 0.98, and the second wave guide region is present in a range of $\Gamma/\lambda$ =1.49 to 1.58.

In this way, it can be seen that as the air hole diameter decreases, the band gap becomes narrower but it is present. Similar to Examples 2-1 and 2-2, it was confirmed that only core mode was present and surface mode was not generated.

Third Embodiment

The embodiment of the present invention is described here referring to the drawings.

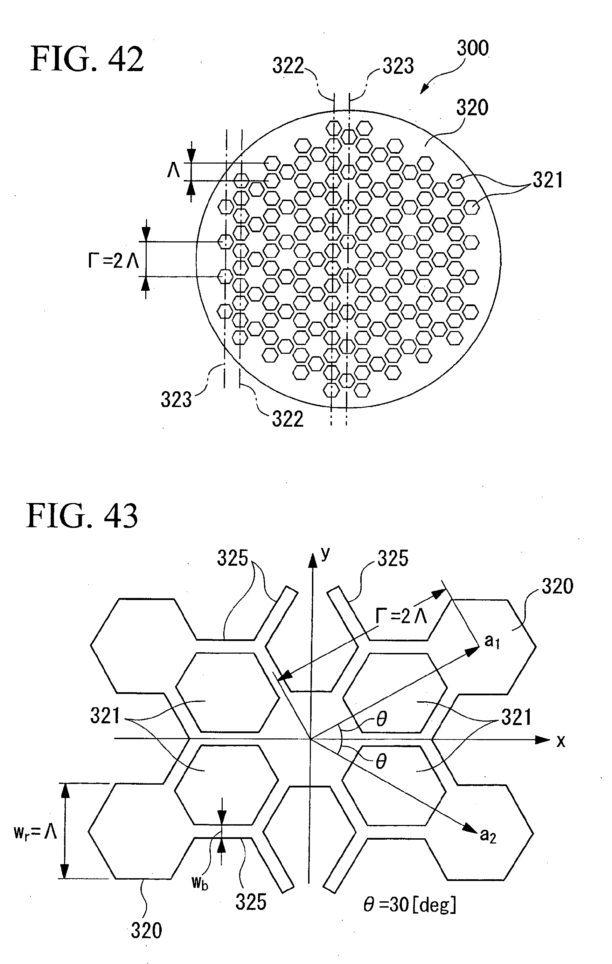

FIG. 42 shows an example of the air hole periodic structure in an extended triangular lattice configuration used in the cladding of PBGF 300 of the embodiment of the present invention. In this figure, the reference numeral 320 indicates the silica portion, 321 indicates the hexagonal air hole, 322 indicates the first row of air holes, and 323 indicates the second row of air holes.

This air hole periodic structure in an extended triangular lattice configuration is a periodic structure (hereinafter referred to as "hexagonal air hole extended triangular lattice" or "hexagonal air hole extended triangular lattice structure") alternately arranged with a first row of air holes 322 each having a row of multiple hexagonal air holes 321 at first pitch A in the cross section of the fiber through a partition wall 325, and multiple second rows of air holes 323 each having a row of multiple hexagonal air holes 321 at the second pitch r, which is twice the first pitch A ($\Gamma = 2\Lambda$) through hexagonally-shaped silica portion 320 such that these air holes 321 and the air holes 321 of the first row of air holes 322 form a triangular lattice.

FIG. 43 shows the unit cell structure of this hexagonal air hole extended triangular lattice. In this unit cell, the distance between the centers of adjacent air holes 321 (first pitch) is taken as A, and the length $\omega_r$ between the two sides facing each other of the silica portion 320 and the first pitch $\Lambda$ are taken as equal ($\omega_r$-$\Lambda$). The fundamental vectors $a_1$ and $a_2$ indicating the periodicity of the lattice are inclined at 30 degrees and -30 degrees with respect to the x axis respectively, while the second pitch r is $2\Lambda$.

If this hexagonal air hole extended triangular lattice structure is used in the cladding of PBGF 300, and if the core region is appropriately designed, a layer of air holes can be provided between the core and the cladding. The result is that the surface mode can be prevented, and wide transmission bandwidth can be realized (refer to H. K. Kim, J. Shin, S. Fan, M. J. F. Digonnet, and G. S. Kino, "Designing air-core photonic-bandgap fibers free of surface modes," IEEE J. Quant. Electron., vol. 40, no. 5, pp. 551-556, 2004).

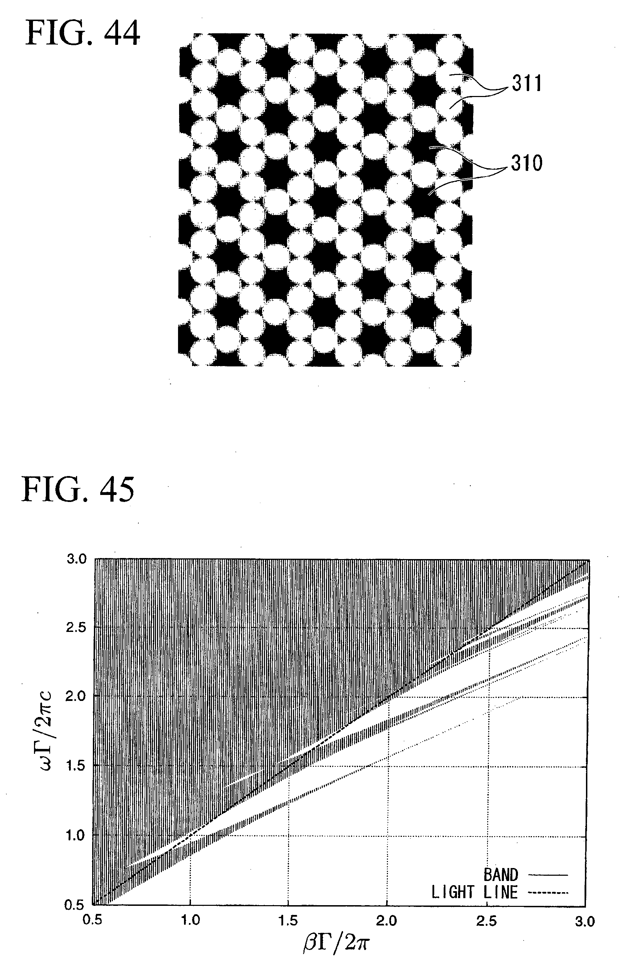

Moreover, if a hexagonal air hole extended triangular lattice structure is adopted in combination with the hexagonally-shaped silica portion 320 and the hexagonal air holes 321 in the present invention, optical characteristics can be obtained that are different from those of the air hole periodic structure in an extended triangular lattice configuration (hereinafter referred to as "circular air hole extended triangular lattice structure") used in the circular air holes 310 as shown in FIG. 44.

FIG. 44 illustrates the circular air hole extended triangular lattice structure, while FIG. 45 is a graph showing the band structure of circular air hole extended triangular lattice. The periodic structure shown in FIG. 44 has an air hole diameter d equal to the first pitch A, and the it has the least silica portion 310 in the circular air hole extended triangular lattice structure. In FIG. 44, the black parts are silica portions 310 while the white circles are the air holes 311. The band structure of FIG. 45 was calculated using the Plane wave decomposition method mentioned in Designing air-core photonic-bandgap fibers free of surface modes," IEEE J. Quant. Electron., vol. 40, no. 5, pp. 551-556, 2004.

In FIG. 45, $\beta$ is the wave number of the transmission direction (direction perpendicular to the periodic structure), $\Gamma = 2 A$ is the lattice constant of the extended triangular lattice, $\omega$ is the angular frequency, and c is the velocity of light. The light line expresses the dispersion curve when light is transmitted through a vacuum medium. The region enveloped by bands is the region wherein light cannot be transmitted in any direction in the cross section of the periodic structure, that is, it expresses the band gap. When this periodic structure is used in the fiber cladding and air hole used in the core, the region wherein light in the fiber core becomes the wave guide is adjacent to the light line, above which the band gap is present. In this case, $\Gamma/\lambda$ ($=\omega\Gamma/2\pi c$) is in a range of between 0.77 and 1.10 and the first wave guide region is present; and the same ratio is in a range of between 1.54 and 1.80 and the second wave guide region is present. Here, $\lambda$ is the wavelength.

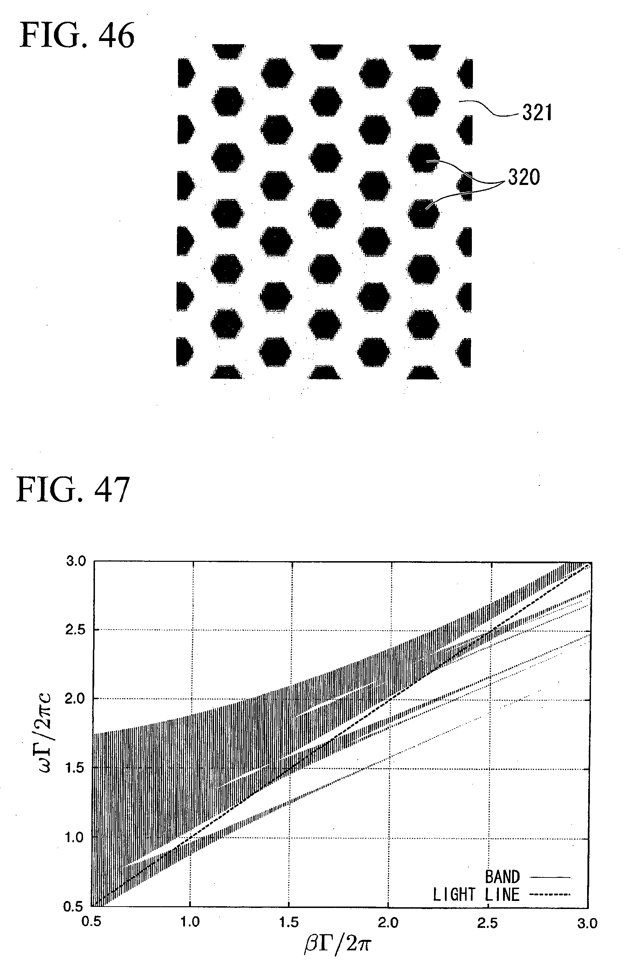

On the other hand, FIG. 47 shows the band structure of hexagonal air hole extended triangular lattice structure related to the third embodiment of the present invention shown in FIG. 46. The hexagonal air hole extended triangular lattice structure shown in FIG. 46 is a periodic structure wherein hexagonally-shaped multiple silica portions 320 are arranged in a triangular lattice configuration at a constant pitch $\Gamma$ in the cross section of the fiber, air holes 321 are disposed between the silica portions 320, and $\omega_r$ the length between the two sides facing each other of the silica portion, and $\Lambda$, the length of half the pitch $\Gamma$ are equal. That is to say, the hexagonal air hole extended triangular lattice structure shown in FIG. 46 is an example of a hexagonal air hole extended triangular lattice structure when the thickness $\omega_b$ of partition wall 32.5 is 0 in the hexagonal air hole extended triangular lattice structure shown in FIG. 4 and FIG. 43. However, to maintain the silica portion 320 in practice, the intermittent partition wall not shown in the figure, joints, and so on, may preferably be present.

In this case, as shown in FIG. 47, the first wave guide region is present in a range of $\Gamma/\lambda$ = 0.82 to 1.30, the second wave guide region is present in the range 1.58 to 2.13, and the third wave guide region is present in a range of 2.83 to 3.00. Compared to the circular air hole extended triangular lattice structure shown in FIG. 44, it can be seen that a wide band gap is present.

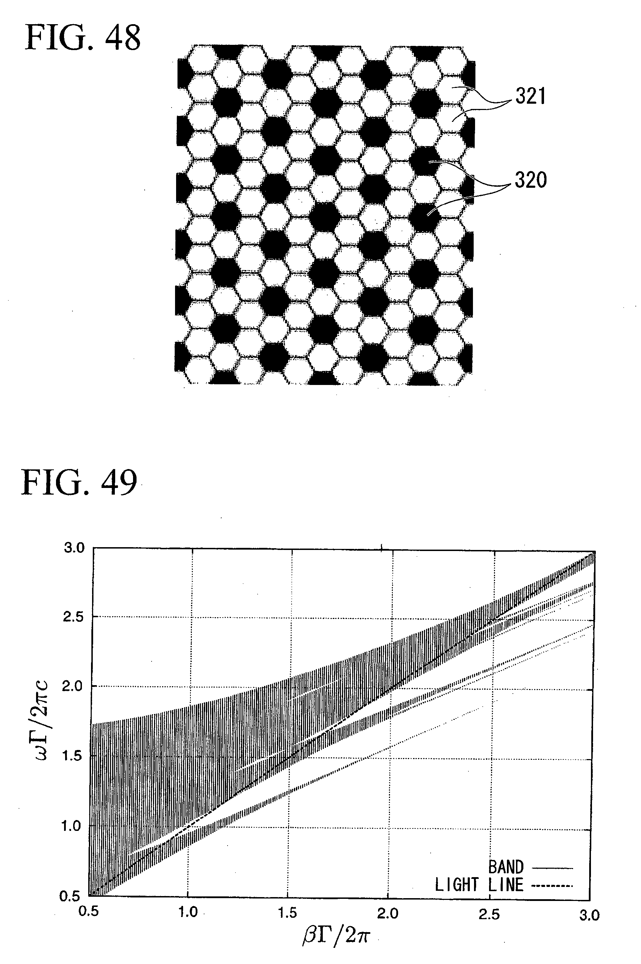

Also, FIG. 48 shows an example of hexagonal air hole extended triangular lattice structure wherein the ratio of $\omega_b$ of the thickness of partition wall 325 is 0.06 ($\omega_b$/A = 0.06) with respect to the first pitch A, while FIG. 49 is a graph showing its band structure. In this case, the first wave guide region is present in a range of $\Gamma/\lambda$ = 0.79 to 1.13, the second wave guide region is present in the range 1.60 to 1.83, and a band gap equivalent to that of the circular air hole extended triangular lattice structure shown in FIG. 44 with d/A = 1 is present.

The PBGF of the embodiment of the present invention has the hexagonal air hole extended triangular lattice structure mentioned above in the cladding, and also has the core 324 containing an air hole core at the center, and multiple hexagonal air holes arranged in triangular lattice configuration. The material of the silica portion 320 other than the air hole in the PBGF of the present invention can be made the same over the entire fiber. For instance, the use of pure silica ($SiO_2$) is preferred, but silica glass added with a dopant for adjusting the refractive index, such as fluorine or germanium dioxide may be used.

In the preferred embodiment of the present invention, the diameter D of the core 324 may preferably have the following relationships: , or $8.7 \Lambda \leq D \leq 11.3A$ with respect to the pitch $\Lambda$. By setting the diameter D of core 324 within the range mentioned above, PBGF with no surface mode can be offered.

As shown in FIG. 48, if silica partitioning wall 325 surrounding the air hole is present, then the $\omega_b$, thickness of the partition wall 325 may preferably be in the range $0.005\Lambda \leq \omega_b \leq 0.2\Lambda$ with respect to the first pitch A. If the thickness of the partition wall 325 is below the range mentioned above, then it becomes difficult to maintain the air hole structure.

Also, if the thickness of the partition wall exceeds the range mentioned above, the band gap becomes narrower.

The hexagonal air hole extended triangular lattice structure provided in the cladding may preferably be provided in three or more layers outside the core 324. If the number of layers of the hexagonal air hole extended triangular lattice provided in the cladding is 2 or less, the confinement of light may become inadequate and the loss may increase.

The PBGF of the present invention may have 60% or more, preferably 70% or more and more preferably 80% or more of a core mode in which the transmitting power is concentrated in the core region, and may preferably have optical characteristics wherein the surface mode is absent substantially. If the percentage of core mode mentioned above is less than 60%, light will be transmitted into the silica, which is not preferable.

The PBGF of the embodiment of the present invention, may preferably have optical characteristics wherein the core mode is present within a range in which a wavelength $\lambda$ satisfies of $0.6 \leq \Gamma/\lambda \leq 1.5$. If $\Gamma/\lambda$ is less than 0.6, band gap will be no longer present, and light will not be transmitted. Mareover, if $\Gamma/\lambda$ exceeds 1.5, the band gap will be no longer present, and light will not be transmitted.

If PBGF operates in a high order band gap, then the ratio $\Gamma/\lambda$ may preferable be in the range $1.4 \leq \Gamma/\lambda \leq 2.3$. If the ratio $\Gamma/\lambda$ is less than 1.4, PBGF is outside the high order band gap and does not operate. Also, if $\Gamma/\lambda$ exceeds 2.3, PBGF is again outside the high order band gap, and it does not operate.

Furthermore, the PBGF may preferably have optical characteristics wherein the core mode is present when the wavelength $\lambda$ satisfies a range of $2.2 \leq \Gamma/\lambda \leq 3.2$.

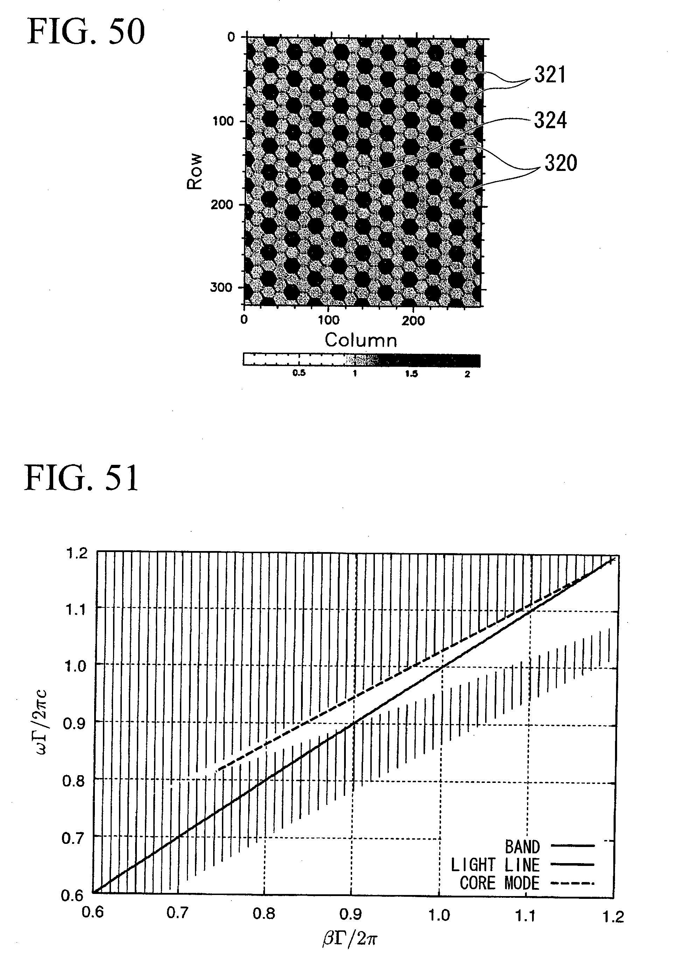

Next, an example of the production method of PBGF of the third embodiment of the present invention is described here. In this example, the PBGF shown in FIG. 50 provided with the core 324 (capillary core) wherein the central silica portion 320 has been replaced by the air hole 321 and wherein the cladding has the hexagonal air hole extended triangular lattice structure shown in FIG. 48, is described.

In this production method, first, arranging silica capillary tubes and silica rods into a first row of air holes wherein multiple capillary tubes are arranged, and with the second row of air holes wherein the capillary tubes and silica rods are alternately superposed such that the capillary tube arrangement of the cross section forms an extended triangular lattice. A capillary tube bundle containing silica rods is made with the capillary core region having central silica rods replaced by capillary tubes. The capillary tubes used in the production method of the present invention may be of annular cross section and the silica rods may be of circular cross section with diameter equal to that of the capillary tubes.

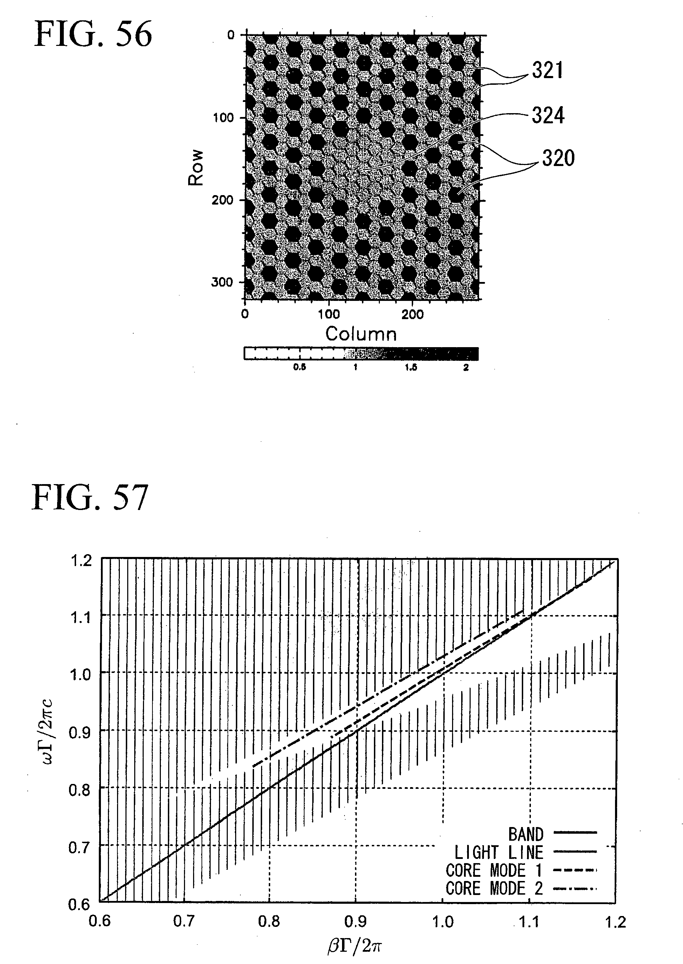

The production method of PBGF of the embodiment of the present invention is not restricted to the example of method of formation of core region mentioned above and the core structure of the PBGF to be produced may be changed appropriately. For instance, in the production of PBGF shown in FIG. 56, a large capillary tube region with diameter D is formed after replacing the silica rod at the center of the hexagonal air hole extended triangular lattice structure and the six silica rods surrounding it by capillary tubes. Also, when forming the air hole core, either the silica rod at the center of the hexagonal air hole extended triangular lattice structure can be eliminated, or the central silica rod, and the capillary tubes and silica rods in no less than one layer and no more than five layers surrounding the central silica rod may be eliminated to form the air hole core.

Next, the capillary tube bundle containing silica rods is heated and integrated to produce the preform for fiber spinning. This heating and integrating process can be implemented using the same apparatus and method as the heating and integrating process in the conventional method of production of PBGF wherein capillary tube bundles were used.

The capillary tube bundle containing silica rods mentioned above may preferably be taken as the preform for fiber spinning after inserting it in the air hole of the silica tube and integrating it. When the capillary tube bundle containing silica rods is integrated with the bundle inserted in the silica tube as-is, the pressure and gas composition within the capillary tube space and the space surrounding the capillary tube can be separately adjusted, the pressure within the capillary tube can be maintained at a higher level than the pressure in the spaces surrounding the capillary tube, and the space between the capillary tubes or the space between the capillary tube and the silica rod can be filled up. By increasing the pressure within the capillary tube space during this integration, the cross section shape of the capillary tube air holes can be brought close to the hexagonal shape.

When the capillary tube bundle containing silica rods in the air holes of the silica tubes is integrated after insertion, it is preferable to maintain only the space within the capillary tubes in the capillary tube bundle containing the inserted silica rods at a pressure equal to or greater than the atmospheric pressure, and to maintain the spaces other than the space within the capillary tubes at a reduced pressure condition before performing the integration mentioned above.

By spinning the preform for fiber spinning produced as mentioned above, the PBGF shown in FIG. 50 can be obtained. This spinning process may preferably be implemented after maintaining the pressure within the capillary tubes at a higher level than the pressure in the spaces surrounding the capillary tubes, and with a balanced pressure maintained in the spaces of capillary tube air holes. With this pressure adjustment, the capillary tube air hole becomes hexagonal in cross section, and the cross section of the silica rod becomes hexagonal.

The PBGF according to this example has a hexagonal air hole extended triangular lattice structure in the cladding. Thus, if a core is formed at its center, an air hole core or a capillary core can be configured without the core edge cutting across the bulk mode, and optical characteristics can be obtained wherein only the core mode is present and no surface mode is generated; moreover, wide wave guide bandwidth can be obtained, and the transmission loss can be reduced.

The production method of PBGF according to the present example can be made the same as the conventional method of using capillary tubes, except for replacing some of the capillary tubes with silica rods and combining them, and PBGF with air hole periodic structure in an extended triangular lattice configuration can be easily produced. Thus, PBGF with better optical characteristics than the conventional **PBGF** can be produced more easily and more economically by using methods similar to the conventional PBGF.

Example 3-1

As shown in FIG. 50, PBGF was produced with cladding containing a hexagonal air hole extended triangular lattice structure wherein the ratio of thickness $\omega_b$ of the partition wall 325 was 0.06 ($\omega_b/\Lambda$ = 0.06) with respect to the first pitch A, and having a core 324 (capillary core) wherein the central silica portion 320 was replaced by the air hole 321, and the dispersion of the core mode was studied. FIG. 51 is a graph showing the dispersion in the first band gap of this PBGF. In FIG. 51, $\beta$ is the wave number of the transmission direction (direction perpendicular to the periodic structure), $\Gamma = 2\Lambda$ is the lattice constant of the extended triangular lattice, m is the angular frequency, and c is the velocity of light. The light line expresses the dispersion curve when light is transmitted through a vacuum medium. The region enveloped by bands is the region wherein light cannot be transmitted in any direction in the cross section of the periodic structure, that is, it expresses the band gap. As shown in FIG. 51, only the core mode is present and the surface mode is absent in the band gap of $\Gamma/\lambda$ (=$\omega\Gamma/2\pi c$) = 0.82 to 1.16.

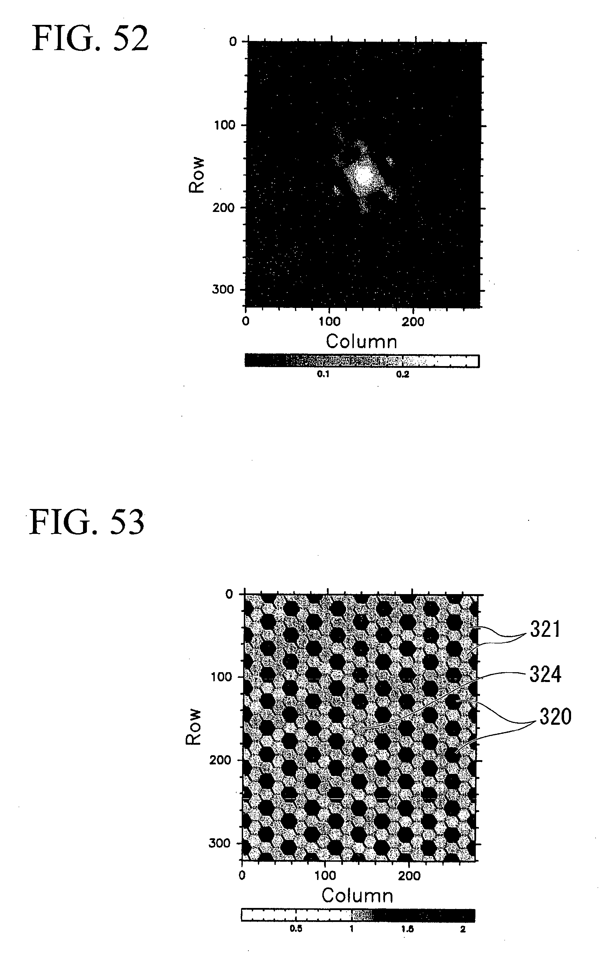

FIG. 52 shows the typical power distribution of core mode at this stage. FIG. 53 is the permittivity of the fiber shown in the same scale as FIG. 50. As shown in the figure, the power of the core mode is distributed only slightly over the silica portion 320 just near the core, while most of it is distributed within the core 324.

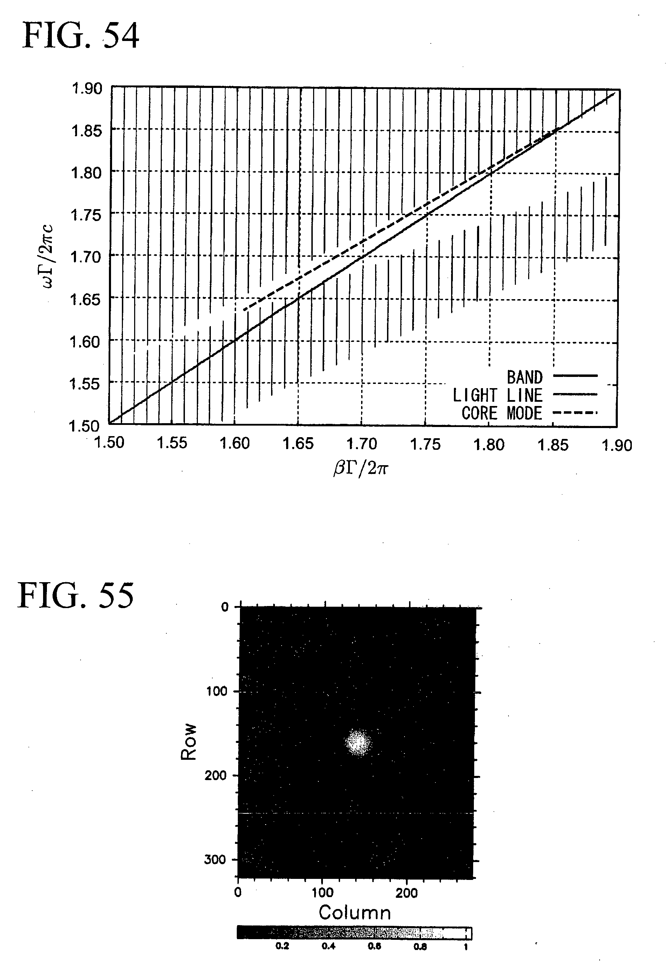

FIG. 54 is a graph showing the dispersion of the second band gap in the PBGF of the present embodiment. As shown in the figure, the core mode is present but the surface mode is absent in $\Gamma/\lambda$ =1.64 to 1.85. The core mode in this case is also a single mode (including degraded mode).

FIG. 55 shows the typical power distribution of core mode at this stage. As shown in the figure, substantially the entire power of the core mode is distributed within the core 324.

Example 3-2

As shown in FIG. 56, PBGF was produced with cladding containing a hexagonal air hole extended triangular lattice structure wherein the ratio of thickness $\omega_b$ of the partition wall 325 was 0.06 ($\omega_b/\Lambda$ = 0.06) with respect to the first pitch $\Lambda$, and having a core 324 (capillary core) wherein the central silica rod and the six silica portions 320 in one layer outside the central rod were replaced by the air hole 321, and the dispersion of the core mode was studied. FIG. 57 is a graph showing the dispersion in the first band gap of this PBGF. As shown in the figure, core mode 1 is present when $\Gamma/\lambda$ = 0.84 to 1.11, core mode 2 is present for $\Gamma/\lambda$ = 0.89 to 1.16, and the surface mode is absent However, the degraded mode is included in each core mode.

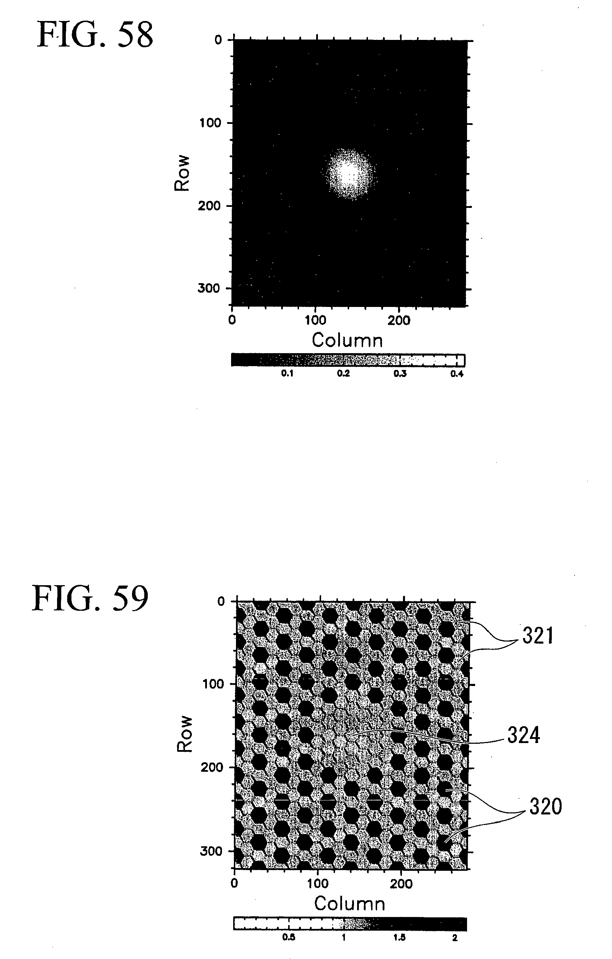

FIG. 58 shows the typical power distribution of the core mode at this stage. FIG. 59 is the permittivity of the fiber shown in the same scale as FIG. 56. As shown in the figure, substantially the entire power of the core mode is distributed within the core 324.

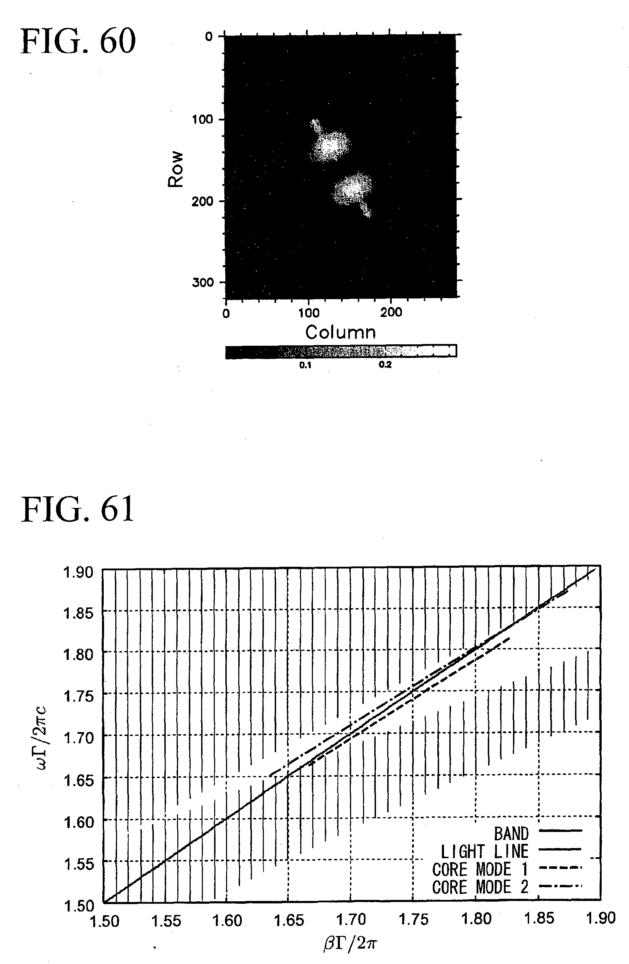

FIG. 60 shows the power distribution of core mode 2 of the same fiber.

FIG. 61 is a graph showing the dispersion of the second band gap in the PBGF of the present embodiment. As shown in the figure, core mode 1 is present when $\Gamma/\lambda$ = 1.66 to 1.82, core mode 2 is present when $\Gamma/\lambda$ = 1.65 to 1.87, but surface mode is absent. However, the degraded mode is included in each core mode. The dispersion of the core mode is present in the region below the light line also because a small amount of silica remains as partition wall in the core 324.

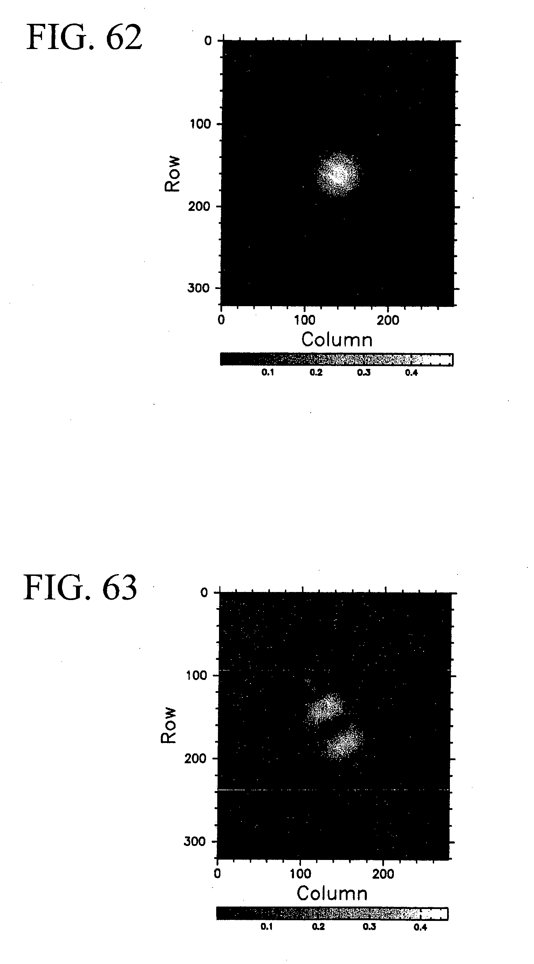

FIG. 62 shows the typical power distribution of core mode 1 at this stage. FIG. 63 shows the typical power distribution of core mode 2 in this case.

Example 3-3

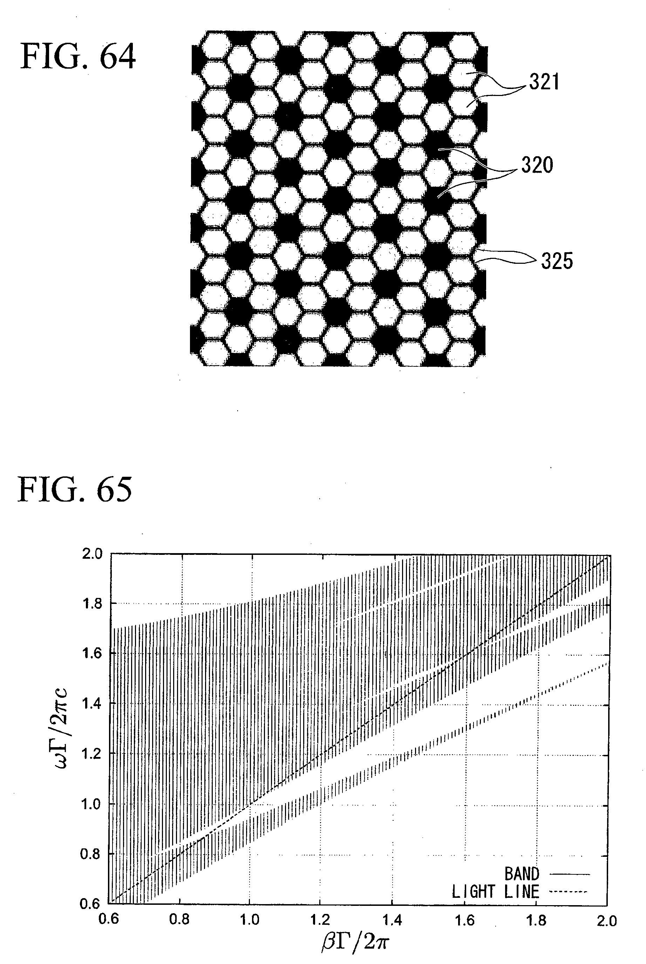

FIG. 65 shows the band structure of hexagonal air hole extended triangular lattice structure wherein the ratio of thickness $\omega_b$ of the partition wall 325 with respect to the first pitch $\Lambda$ is 0.12 ($\omega_b/\Lambda = 0.12$), as shown in FIG. 64.

In this case, the wave guide region is present in a range of $\Gamma/\lambda = 0.81$ to 1.00.

In this way, it can be seen that as the thickness of the partition wall 325 increases, the band gap becomes narrower but it is present. It has been verified that similar to Examples 3-1 and 3-2, if the capillary core is formed and PBGF is produced, only the core mode is present and the surface mode is not generated, similar to the Examples 3-1 and 3-2.

Fourth Embodiment

The fourth embodiment is described here referring to the drawings.

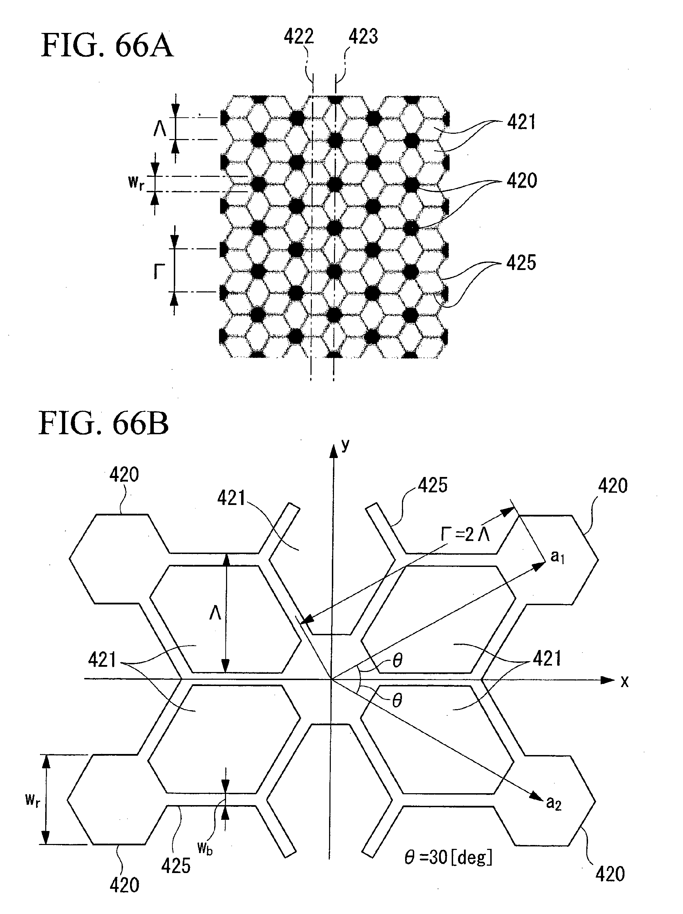

FIG. 66 shows an example of the air hole periodic structure in an extended triangular lattice configuration used in the cladding of PBGF of the fourth embodiment of the present invention. In this figure, the reference numeral 420 indicates the silica portion, 421 indicates the hexagonal air hole, 422 indicates the first row of air holes, 423 indicates the second row of air holes, and 425 indicates the partition wall.

This air hole periodic structure in an extended triangular lattice configuration is a periodic structure (hereinafter referred to as "hexagonal air hole extended triangular lattice" or "hexagonal air hole extended triangular lattice structure") alternately arranged with a first row of air holes 422 each having a row of multiple hexagonal air holes 321 at first pitch $\Lambda$ in the cross section of the fiber through a partition wall 425, and multiple second rows of air holes 423 each having a row of multiple hexagonal air holes 421 at the second pitch $\Gamma$, which is twice the first pitch $\Lambda$ ($\Gamma = 2\Lambda$) through hexagonally-shaped silica portion 420 as shown in FIG. 66A. As shown in this example, the hexagonal air hole 421 is not an equilateral hexagonal air hole; the two sides touching the silica portion 420 are shorter than the other two sides, and hexagonal form touching the silica portion has a length between the two sides touching the silica portion 420 that is greater than the length ($\Lambda$) between the other two sides.

FIG. 66B shows the unit cell structure of this hexagonal air hole extended triangular lattice. The length $\omega_r$ between the two sides facing each other of the silica portion 420 in this unit cell is smaller than the first pitch $\Lambda$ ($\omega_r < \Lambda$). The fundamental vectors $a_1$ and $a_2$ indicating the periodicity of the lattice are inclined at 30 degrees and -30 degrees with respect to the x axis respectively, while the second pitch $\Gamma$ is $2\Lambda$.

The silica portion 420 in the fourth embodiment of the present invention may preferably be smaller than the air hole 421 including the partition wall 425. The length $\omega_r$ between the two sides facing each other of the silica portion 420 and the first pitch $\Lambda$ may preferably satisfy the relationship $0.4\,\Lambda \leq \omega_r \leq \Lambda$, and more preferably satisfy the relationship $0.5\,\Lambda \leq \omega_r \leq \Lambda$.

If this air hole periodic structure in an extended triangular lattice configuration is used in the cladding of PBGF, and an appropriate core region is designed, a layer of air holes can be provided between the core and the cladding. The result is that the surface mode can be prevented, and wide transmission bandwidth can be realized (refer to H. K. Kim, J. Shin, S. Fan, M. J. F. Digonnet, and G. S. Kino, "Designing air-core photonic-bandgap fibers free of surface modes," IEEE J. Quant. Electron., vol. 40, no. 5, pp. 551-556.2004).

Moreover, if the silica portion 420 in the hexagonal air hole extended triangular lattice of the present example is made smaller than the air hole 421, that is, if the relationship $\omega_r < \Lambda$ is maintained, then optical characteristics different from those of hexagonal air hole extended triangular lattice with $\omega_r = \Lambda$ can be obtained.

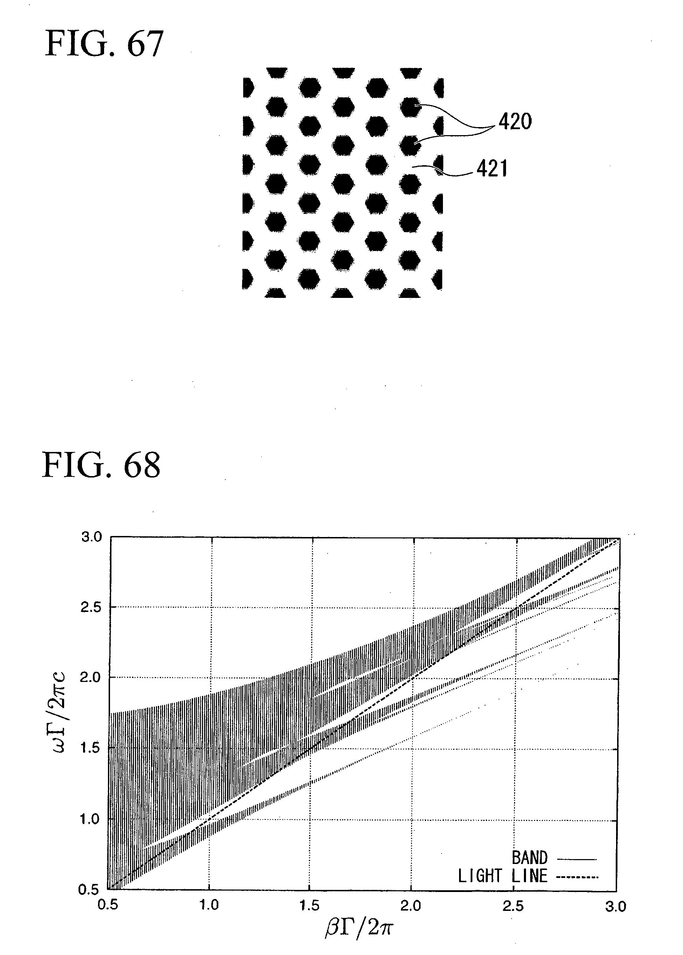

FIG. 67 is given here as a reference example showing the hexagonal air hole extended triangular lattice structure with $\omega_r = \Lambda$, while FIG. 68 is a graph showing the band structure. However, FIG. 67 shows a hexagonal air hole extended triangular lattice structure wherein $\omega_r = \Lambda$ and the partition wall thickness $\omega_b = 0$. The black part of the hexagonal shape is the silica portion 420, while the white part is the air hole 421 in FIG. 67. The band structure of FIG. 68 was calculated by the Plane wave decomposition method described in "Block-iterative frequency-domain methods for Maxwell's equations in plane wave basis," Opt. Express, vol. 8, no. 3, pp. 173-190, 2001 by S. G. Johnson and J. D. Joannopoulos. In FIG. 68, $\beta$ is the wave number of the transmission direction (direction perpendicular to the periodic structure), $\Gamma = 2\Lambda$ is the lattice constant of the extended triangular lattice, $\omega$ is the angular frequency, and c is the velocity of light. The light line expresses the dispersion curve when light is transmitted through a vacuum medium. The region enveloped by bands is the region wherein light cannot be transmitted in any direction in the cross section of the periodic structure, that is, it expresses the band gap. When this periodic structure is used in the fiber cladding and air hole used in the core, the region wherein light in the fiber core becomes the wave guide is adjacent to the light line, above which the band gap is present In this case, the first wave guide region is present in the range $\Gamma/\lambda$ ($=\omega\Gamma/2\pi c$) = 0.82 to 1.30, while the second wave guide region is present in the range 1.58 to 2.13.

Here, $\lambda$ is the wavelength.

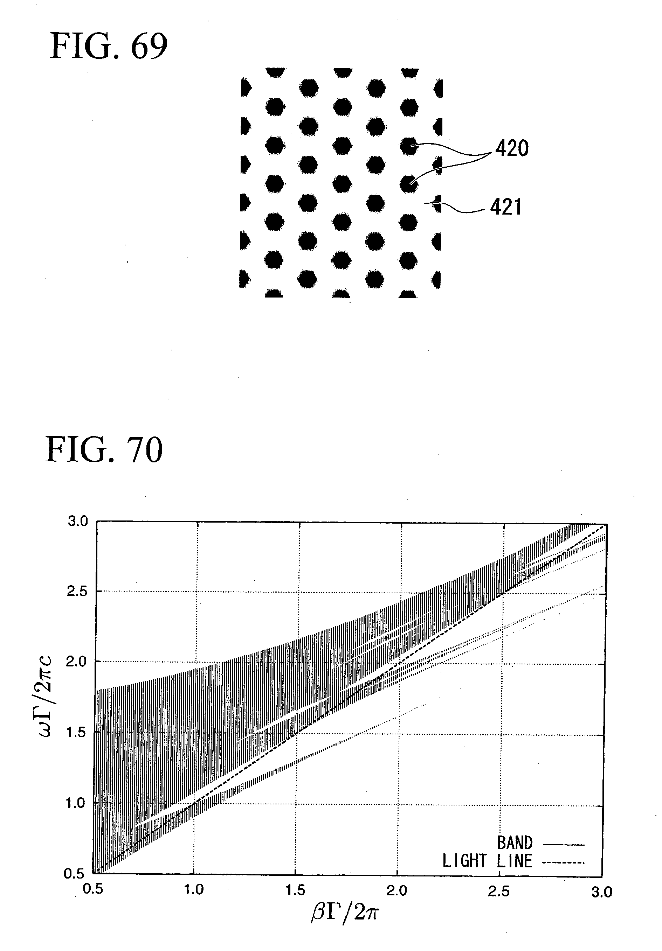

On the other hand, FIG. 70 shows the band structure of hexagonal air hole extended triangular lattice structure related to the fourth embodiment of the present invention shown in FIG. 69. FIG. 69 shows the hexagonal air hole extended triangular lattice structure wherein multiple hexagonally-shaped silica portions 420 are arranged in triangular lattice configuration at constant pitch $\Gamma$ in the cross section of the fiber, air holes 421 are provided between the silica portions 420, the length $\omega_r$ between the two sides facing each other of the silica portion 420 is made smaller than half the length $\Lambda$ of pitch $\Gamma$ ($\omega_r/\Lambda$ = 0.9), and the wall thickness $\omega_b$ is 0. However, to maintain the silica portion 420 in practice, the intermittent partition wall not shown in the figures, may preferably be present.

In this case, the first wave guide region is present in a range of $\Gamma/\lambda$ between 0.85 and 1.45 and the second wave guide region is present in the range between 1.82 and 2.38. Compared to the band structure of hexagonal air hole extended triangular lattice structure wherein $\omega_r = \Lambda$ ($\omega_r/\Lambda$ = 1), the hexagonal air hole extended triangular lattice structure of the present example has a wider band gap, and moreover, the position of the band gap is higher. This suggests that the fiber dimensions required for realizing the same wavelength pass band are large, and this is advantageous from the production aspects.

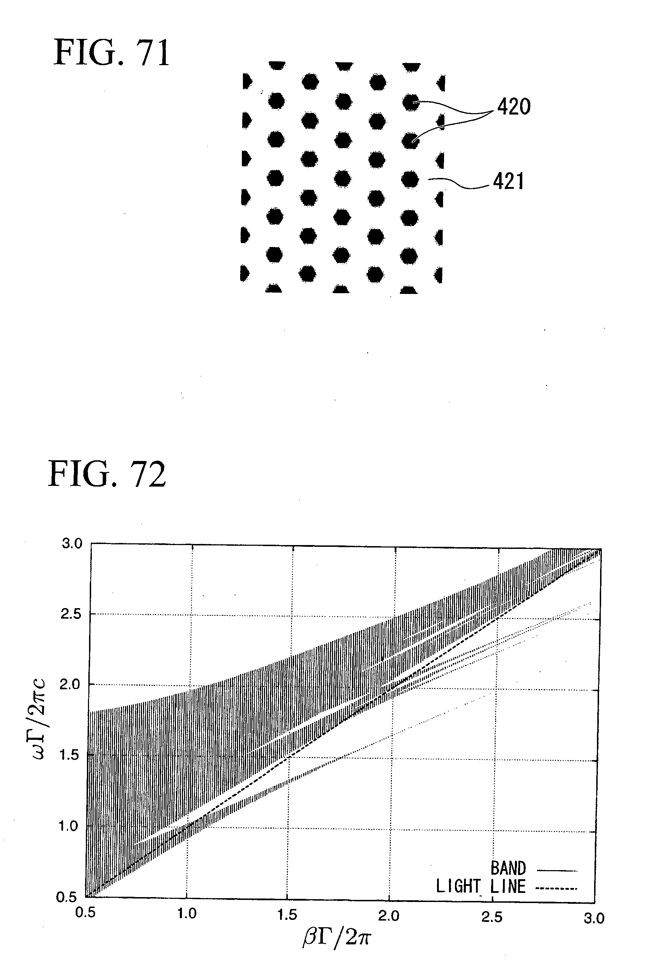

Also, FIG. 72 shows the band structure of hexagonal air hole extended triangular lattice structure related to the fourth embodiment of the present invention shown in FIG. 71. The present example shows the hexagonal air hole extended triangular lattice structure with $\omega_r/\Lambda$ = 0.8, and $\omega_b$ = 0. In this case, the first wave guide region is present in a range of $\Gamma/\lambda$ between 0.90 and 1.65, and the second wave guide region is present in the range between 2.02 and 2.62, as shown in FIG. 72. Compared to the band structure of hexagonal air hole extended triangular lattice structure wherein $\omega r/\Lambda$ =1, the fiber of the present example has a wider band gap, and moreover, the position of the band gap is higher.

The same trend is observed in actual fibers wherein partition wall 425 surrounding the air hole 421 is present

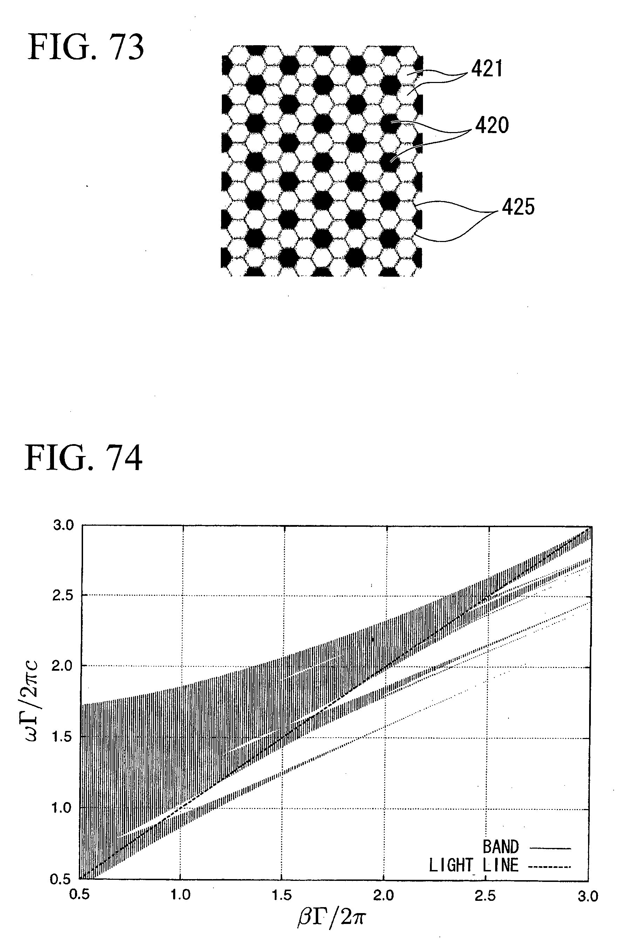

FIG. 73 is a reference example that shows the hexagonal air hole extended triangular lattice structure with $\omega_r/\Lambda$ =1 and $\omega_b/\Lambda$ = 0.06, while FIG. 74 is a graph that shows its band structure. In this case, the first wave guide region is present in a range of $\Gamma/\lambda$ = 0.79 to 1.13, and the second wave guide region is present in the range 1.60 to 1.83.

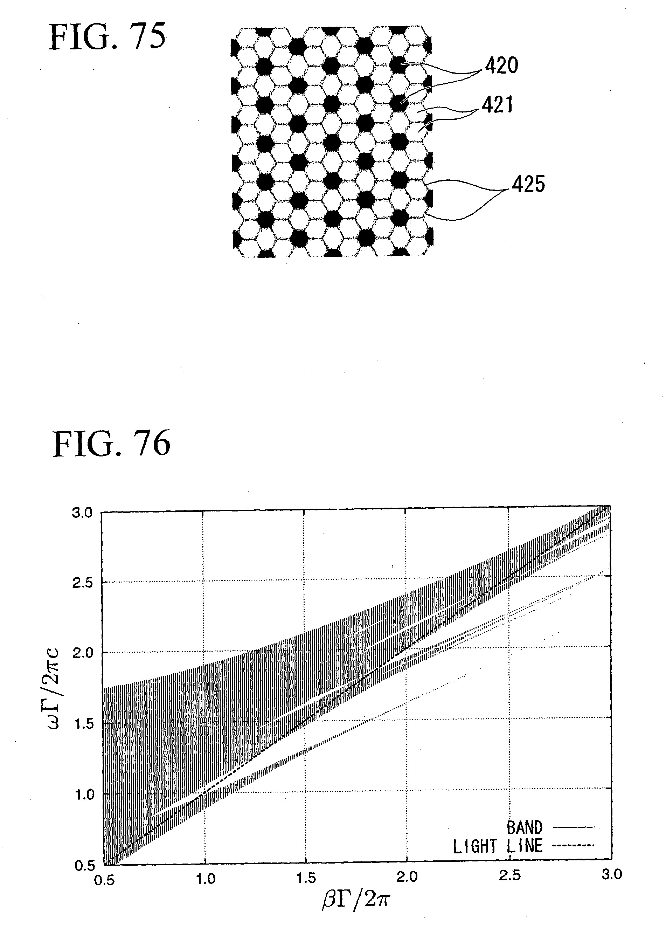

On the other hand, FIG. 76 shows the band structure of hexagonal air hole extended triangular lattice structure related to the fourth embodiment shown in FIG. 75. Similar to FIGS. 66A and 66B. the hexagonal air hole extended triangular lattice is alternately arranged with a first row of air holes 422 each having a row of multiple hexagonal air holes 421 at first pitch $\Lambda$ in the cross section of the fiber, and multiple second rows of air holes 423 each having a row of multiple hexagonal air holes at the second pitch $\Gamma$, which is twice the first pitch through hexagonally-shaped silica portion 420, and the length $\omega_r$ between the two sides facing each other of the silica portion 420 is smaller than the first pitch $\Lambda$. In this example, $\omega_r/\Lambda$ = 0.9, and $\omega_b/\Lambda$ = 0.06.

In this case, the first wave guide region is present in a range of $\Gamma/\lambda$ = 0,86 to 1.25 and the second wave guide region is present in a range of 1,82 to 1.94. Similar to the ideal fiber with $\omega_b$= 0 as shown in FIG. 7, compare to the fiber in FIG. 73 wherein $\omega_r/\Lambda$ =1, the band gap has widened and the position of the band gap has become higher.

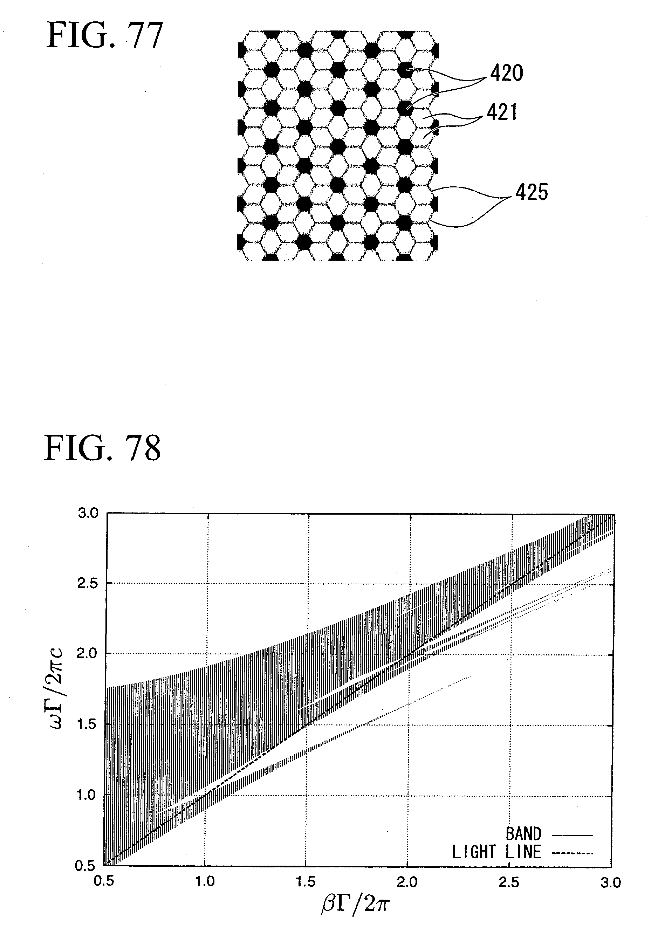

FIG. 78 shows the band structure of hexagonal air hole extended triangular lattice structure related to the present invention shown in FIG. 77, wherein the silica portion 420 has been made smaller. The present example shows the hexagonal air hole extended triangular lattice structure with $\omega_r/\Lambda$=0.8, and $\omega_b$= 0.06. In this case, the first wave guide region is present in a range of $\Gamma/\lambda$ between 0.89 and 1.33. Compared to the band structure of the hexagonal air hole extended triangular lattice structure wherein $\omega_r/\Lambda$ =1, the fiber of the present example has a wider band gap, and moreover, the position of the band gap is higher.

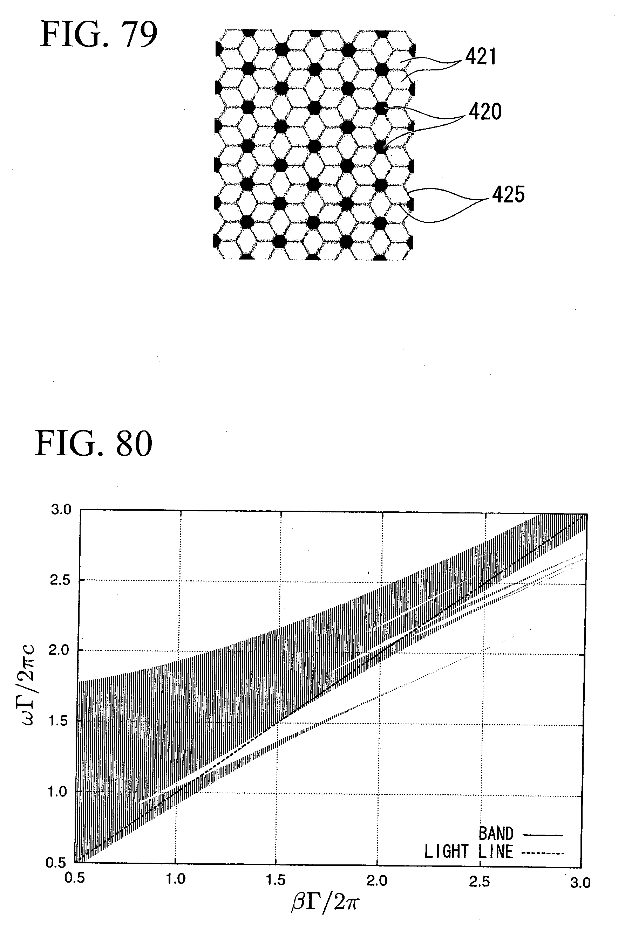

FIG. 80 shows the band structure of the hexagonal air hole extended triangular lattice structure related to the present invention shown in FIG. 79, wherein the silica portion 420 has been made smaller. The present example shows the hexagonal air hole extended triangular lattice structure with $\omega_r/\Lambda$=0.7, and $\omega_b$=0.06. In thas case, the first wave guide region is present in a range of $\Gamma/\lambda$ between 0.97 and 1.46 and the second wave guide region is present in a range of between 1.93 and 2.18. Compared to the band structure of the hexagonal air hole extended triangular lattice structure wherein $\omega_r/\Lambda$= 1, the fiber of the present example has a wider band gap, and moreover, the position of the band gap is higher.

The PBGF of the fourth embodiment has an air hole periodic structure in an extended triangular lattice configuration mentioned earlier, in the cladding, and also has an air hole core at the center, and a core 424 with multiple hexagonal air holes arranged in triangular lattice configuration. The material of the silica portion 420 other than the air hole in the PBGF of the present invention can be made the same over the entire fiber. For instance, the use of pure silica ($SiO_2$) is preferred, but silica glass added with a dopant for adjusting the refractive index, such as fluorine or germanium dioxide may be used.

In the preferred embodiment, if a configuration with partition wall 425 is adopted, then the thickness $\omega_b$ of this partition wall may preferably be in the range of $0.05\Lambda \leq \omega_b \leq 0.2\Lambda$, or $\omega_b$ may preferably in the range of $0.05\Lambda \leq \omega_b \leq 0.5\Lambda$.

If a thin partition wall 425 is formed, optical characteristics similar to PBGF with no partition wall, as shown in FIGS. 69 and 71 can be obtained, the band gap is widened and wider transmission bandwidths can be ensured.

On the other hand, if a comparatively thicker partition wall 425 is formed, an extremely wide transmission bandwidth can be ensured, and the transmission bandwidth can also be shifted to the short wavelength side. If a comparatively thicker partition wall 425 is formed, the advantage is that the PBGF production becomes easier.

In the preferred embodiment , the length $\omega_r$ between the two sides facing each other of the silica portion 420 may preferably be in the range $0.4 \Lambda \leq \omega_r \leq \Lambda$. If the length $\omega_r$ is less than the range mentioned above, the band gap becomes narrower, and the operating range of the fiber is reduced; thus, this length is not preferable.

In the preferred embodiment the diameter D of the core 424 may preferably be set so that it lies in the ranges (A) to (C) below.

(A) Range of $0.7\Lambda \leq D \leq 3.3\Lambda$
(B) Range of $4.7\Lambda \leq D \leq 7.3\Lambda$
(C) Range of $8.7\Lambda \leq D \leq 11.3\Lambda$

By setting the diameter D of core 324 within any of the ranges mentioned above, PBGF with no surface mode can be offered. By making the diameter D of the core smaller, the core mode can be made a single mode. On the other hand, by increasing the diameter D of the core 424, multiple modes can be achieved.

The air hole periodic structure of the extended triangular lattice configuration provided in the cladding may preferably be provided in three or more layers outside the core 424. If the number of layers of extended triangular lattice provided in the cladding is 2 or less, the confinement of light may become inadequate and the loss may increase.

The PBGF of the fourth embodiment may have 60% or more, preferably 70% or more and more preferably 80% or more of a core mode in which the transmitting power is concentrated in the core region, and preferably with optical characteristics wherein the surface mode is absent substantially. If the percentage of core mode mentioned above is less than 60%, light will be transmitted into the silica, which is not preferable.

The PBGF of the fourth embodiment may preferably have optical characteristics wherein the core mode is present within a range in which a wavelength $\lambda$ satisfies of $0.6 \leq \Gamma/\lambda \leq 1.7$. If $\Gamma/\lambda$ is less than 0.6, band gap will be no longer present, and light will not be transmitted. Moreover, if $\Gamma/\lambda$ exceeds 1.7, the band gap will be no longer present, and light will not be transmitted.

If PBGF operates in high level band gaps, the $\Gamma/\lambda$ mentioned above, may preferably be in a range of $1.5 \leq \Gamma/\lambda \leq 2.4$. If the ratio $\Gamma/\lambda$ is less than 1.5, PBGF is outside the high order band gap and does not operate. Also, if $\Gamma/\lambda$ exceeds 2.4, PBGF is again outside the high order band gap, and it does not operate.

Moreover, the PBGF may preferably have optical characteristics wherein the core mode is present when the wavelength $\lambda$ satisfies a range of $2.1 \leq \Gamma/\lambda \leq 3.5$. Also, the PBGF may have optical characteristics wherein the core mode is present when the wavelength $\lambda$ satisfies a range of $0.7 \leq \Gamma/\lambda \leq 2.4$.

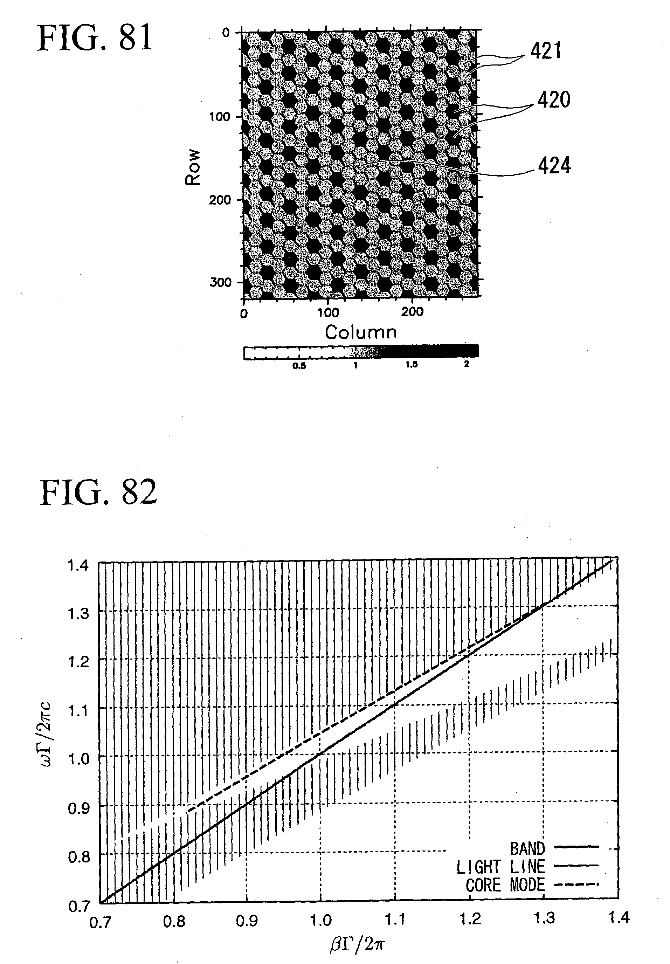

Next, an example of the production method of PBGF of the fourth embodiment is described here. In this example, the PBGF shown in FIG. 81 provided with the core 324 (capillary core) wherein the central silica portion 420 has been replaced by the air hole 421, and wherein the cladding has the hexagonal air hole extended triangular lattice structure shown in FIG. 66A, is described.

In this production method, first, silica capillary tubes, silica rods and hollow silica tubes thicker than the capillary tubes and rods are kept ready, and then the first row of air holes wherein multiple capillary tubes are arranged, the second row of air holes wherein the capillary tubes and hollow silica tubes are alternately superposed are combined such that the capillary tube arrangement of the cross section forms an extended triangular lattice. A capillary tube bundle is made with a capillary core region having central hollow silica tubes replaced by capillary tubes. The capillary tubes used in the production method of the present invention may be of annular cross section and the hollow silica tubes may preferably be of annular cross section with thickness equal to the diameter of other capillary tubes. This central silica tube is taken as the silica portion through the hollow part, and its thickness can be appropriately selected according to the $\omega_r/\Lambda$ value in the PBGF to be produced.

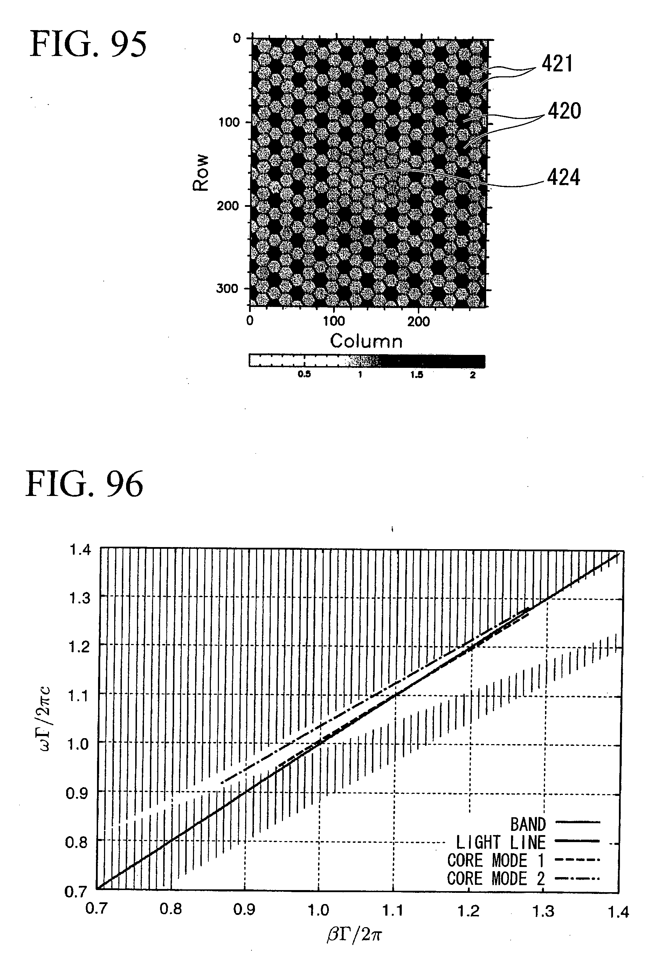

The production method of PBGF of the fourth embodiment is not restricted to the example of method of formation of core region mentioned above, and the core structure of the PBGF to be produced may be changed appropriately. For instance, during production of PBGF shown in FIG. 95, the hollow silica tube at the center of the hexagonal air hole extended triangular lattice structure and six hollow silica tubes surrounding this silica tube are replaced by capillary tubes to form the capillary core region. Also, when forming the air hole core, either the hollow silica tube at the center of the hexagonal air hole extended triangular lattice structure can be eliminated, or the central hollow silica tube, and the capillary tubes and hollow silica tubes in no less than one layer and no more than five layers surrounding the central hollow silica tube may be eliminated to form the air hole core.

Next, the capillary tube bundle mentioned above is heated and integrated to produce the preform for fiber spinning. This heating and integrating process may preferably be one wherein the capillary tube bundle mentioned above is integrated in the inserted condition in the silica tube to produce the preform for fiber spinning. When the capillary tube bundle containing silica rods is integrated with the bundle inserted in the air hole of the silica tube as-is, the pressure and gas composition within the capillary tube space and in the space surrounding the capillary tubes including the internal part of the hollow silica tube can be separately adjusted.

When the capillary tube bundle is integrated with the capillary tube bundle inserted in air hole of the silica tube, only the space within the capillary tubes of the inserted capillary tube bundles is maintained at or above the atmospheric pressure. On the other hand, the clearance between the hollow part of the hollow silica tube and the capillary tubes may preferably be maintained in a reduced pressure condition and heated; integration may be attained by eliminating the clearance between the capillary tubes while penetrating the hollow part of the hollow silica tube.

By spinning the preform for fiber spinning produced as mentioned above, the PBGF shown in FIG. 81 can be obtained. This spinning process may preferably be implemented after maintaining the pressure within the capillary tubes at a higher level than the pressure in the spaces surrounding the capillary tubes, and with a balanced pressure maintained in the spaces of capillary tube air holes. With this pressure adjustment, the capillary tube air hole becomes hexagonal in cross section, and the cross section of the silica portion becomes hexagonal.

The PBGF according to this example has a hexagonal air hole extended triangular lattice structure in the cladding. Thus, if an air hole core or a capillary core is formed at its center, an air hole core or a capillary core can be configured without the core edge cutting across the bulk mode, and optical characteristics can be obtained wherein only the core mode is present and no surface mode is generated, moreover, wide wave guide bandwidth can be obtained, and the transmission loss can be reduced.

In the structure above, the hexagonally-shaped silica portion was made smaller than the pitch A of the hexagonal air holes. Compared to the periodic structure wherein the pitch A of the silica portion was equal to the pitch A of the air holes, the band gap widens, the position of the band gap becomes higher, the size of the fiber required to realize the same wavelength pass band increases, and production becomes easier.

The production method of PBGF according to the present example can be made the same as the conventional method of using capillary tubes, except for replacing some of the capillary tubes with thicker hollow silica tubes and combining them, and PBGF with air hole periodic structure in an extended triangular lattice configuration can be easily produced. Thus, PBGF with better optical characteristics than the conventional PBGF can be produced more easily and more economically by using methods similar to the conventional PBGF.

Example 4-1

As shown in FIG. 81, PBGF was produced with cladding containing a hexagonal air hole extended triangular lattice structure wherein the ratio of length $\omega_r$ between the two sides of the silica portion 420 with respect to the pitch A was 0.9 ($\omega_r$/A = 0.9, the ratio of thickness $\omega_b$ of the partition wall 425 was 0.06 ($\omega_b/\Lambda$ = 0.06) with respect to the pitch $\Lambda$, and having a core 424 (capillary core) wherein the central silica portion 420 was replaced by the air hole 421, and the dispersion of the core mode was studied.

FIG. 82 is a graph showing the dispersion in the first band gap of this PBGF. In FIG. 82, $\beta$ is the wave number of the transmission direction (direction perpendicular to the periodic structure), $\Gamma$ = 2A is the lattice constant of the extended triangular lattice, $\omega$ is the angular frequency, and c is the velocity of light. The light line expresses the dispersion curve when light is transmitted through a vacuum medium. The region enveloped by bands is the region wherein light cannot be transmitted in any direction in the cross section of the periodic structure, that is, it expresses the band gap. As shown in FIG. 82, only the core mode is present and the surface mode is absent in the band gap of $\Gamma/\lambda$ (=$\omega\Gamma/2\,\pi c$) = 0.89 to 1.30. Also, the core mode in this case is a single mode (including degraded mode).

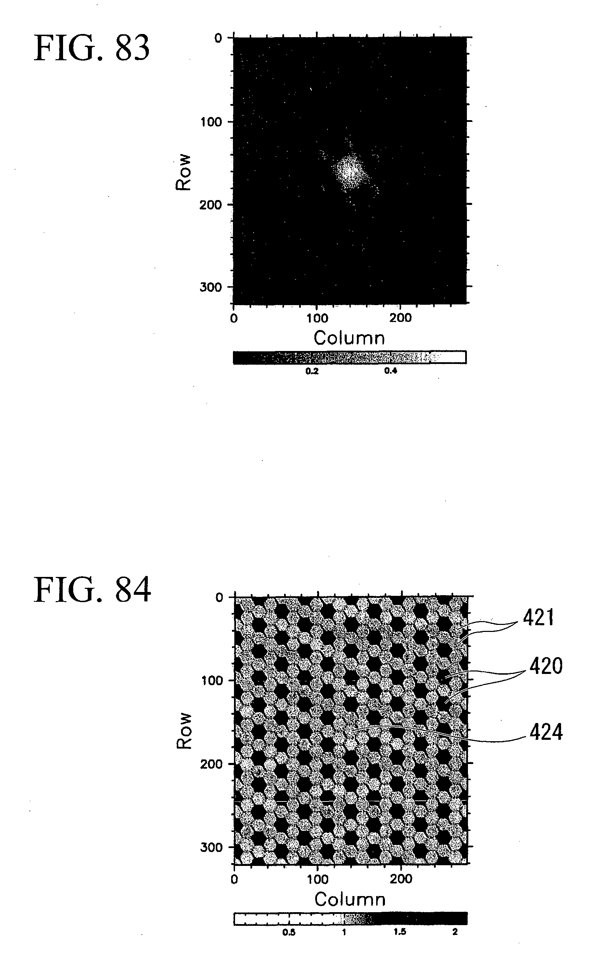

FIG. 83 shows the typical power distribution of the core mode at this stage. FIG. 84 is the permittivity of the fiber shown in the same scale as FIG. 81. As shown in the figure, the power of the core mode is distributed only slightly over the silica portion 420 just near the core, while most of it is distributed within the core 424.

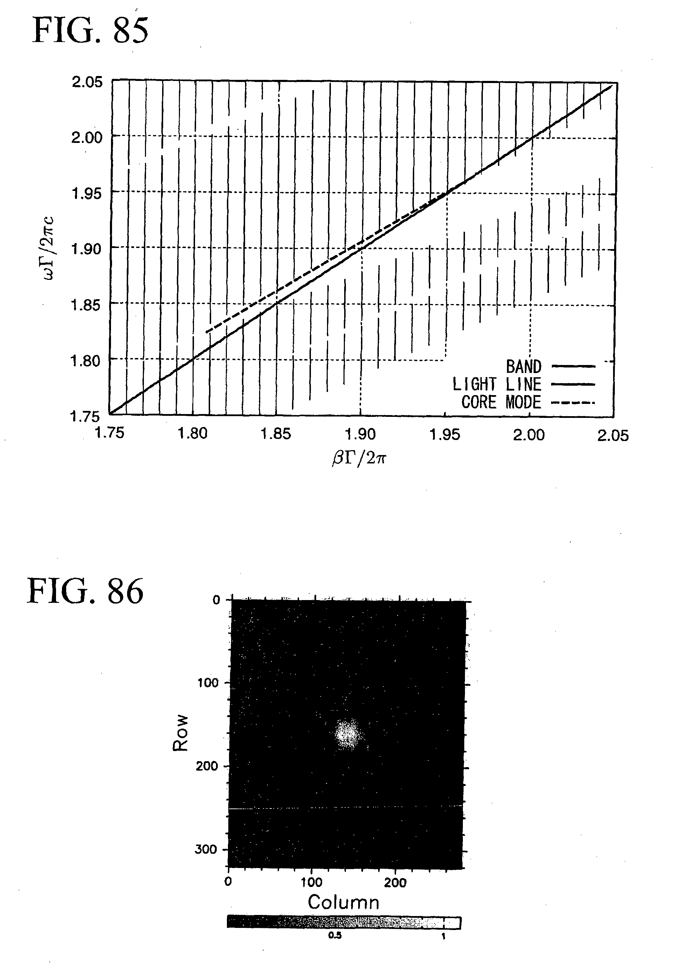

FIG. 85 shows the dispersion of the second band gap in the PBGF of the present embodiment. As shown in the figure, the core mode is present but the surface mode is absent in $\Gamma/\lambda$ = 1.83 to 1.96. The core mode in this case is also a single mode (including degraded mode).

FIG. 86 shows the typical power distribution of the core mode at this stage. As shown in the figure, substantially the entire power of the core mode is distributed within the core 424.

Example 4-2

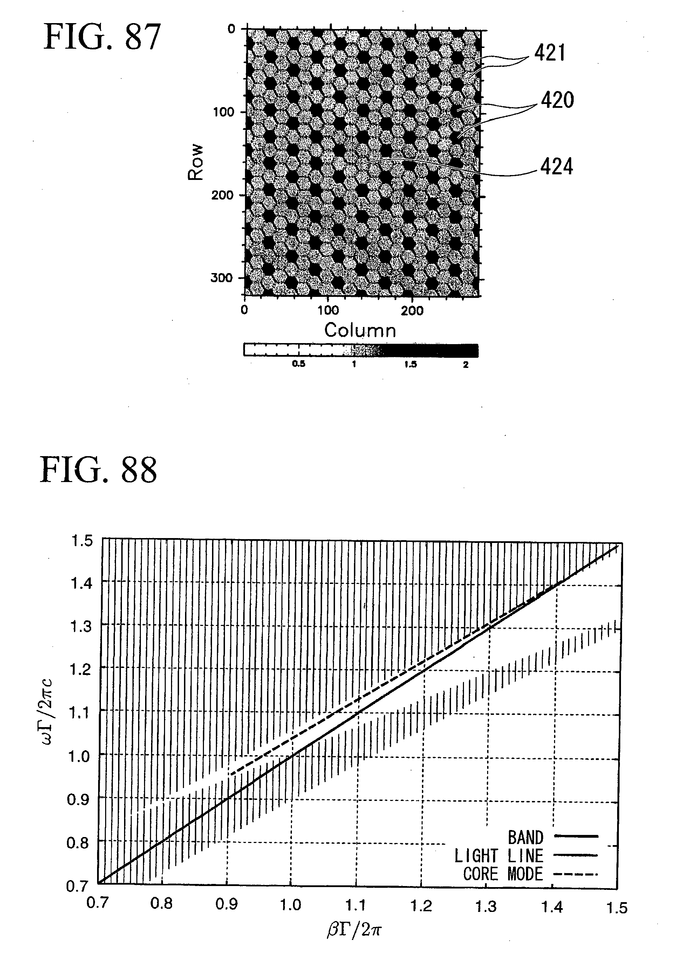

As shown in FIG. 87, PBGF was produced with cladding containing a hexagonal air hole extended triangular lattice structure wherein $\omega_r/\Lambda$ = 0.8, $\omega_b/\Lambda$ = 0.06, and having a core 424 (capillary core) wherein the central silica portion 420 was replaced by the air hole 421, and the dispersion of the core mode was studied. FIG. 88 is a graph showing the dispersion in the first band gap of this PBGF. As shown in the figure, only the core mode is present in the band gap

when $\Gamma/\lambda$ = 0.96 to 1.40, and the surface mode is absent. Also, the core mode in this case is a single mode (including degraded mode).

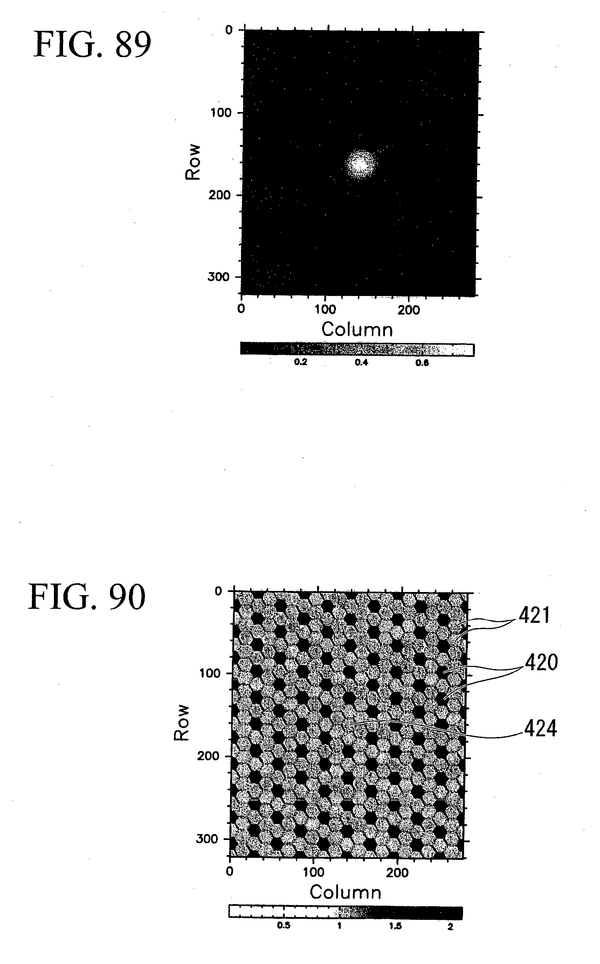

FIG. 89 shows the typical power distribution of the core mode at this stage. FIG. 90 is the permittivity of the fiber shown in the same scale as FIG. 87. As shown in the figure, substantially the entire power of the core mode is distributed within the core 424.

Example 4-3

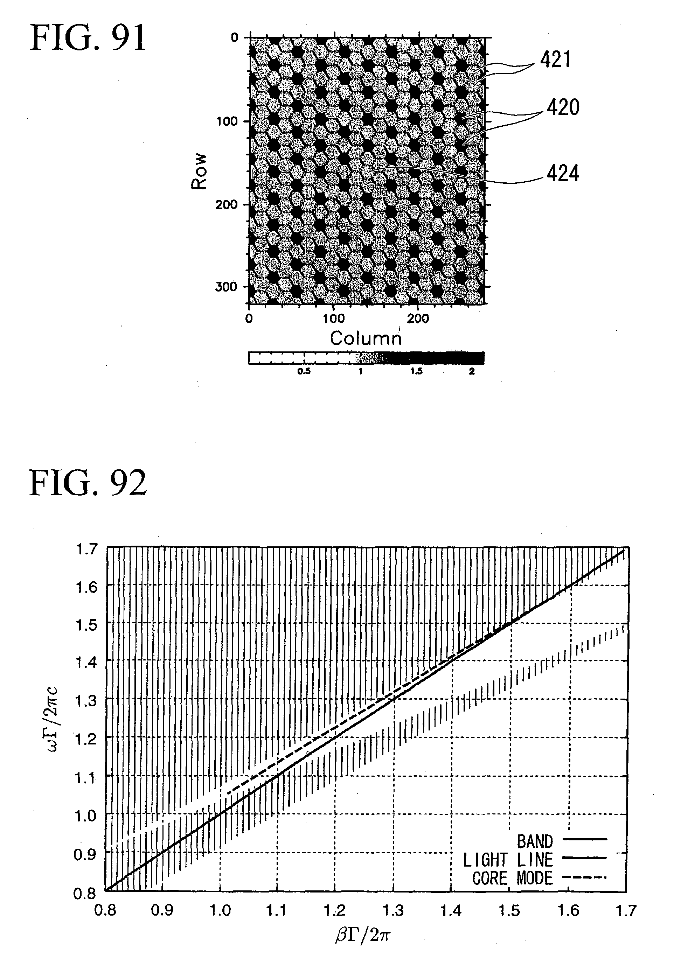

As shown in FIG. 91, PBGF was produced with cladding containing a hexagonal air hole extended triangular lattice structure wherein $\omega_r/\Lambda$ = 0.7, $\omega_b/\Lambda$ = 0.06, and having a core 424 (capillary core) wherein the central silica portion 420 was replaced by the air hole 421, and the dispersion of the core mode was studied. FIG. 92 is a graph showing the dispersion in the first band gap of this PBGF. As shown in the figure, only the core mode is present in the band gap when $\Gamma/\lambda$ =1.05 to 1.57, and the surface mode is absent. Also, the core mode in this case is a single mode (including degraded mode).

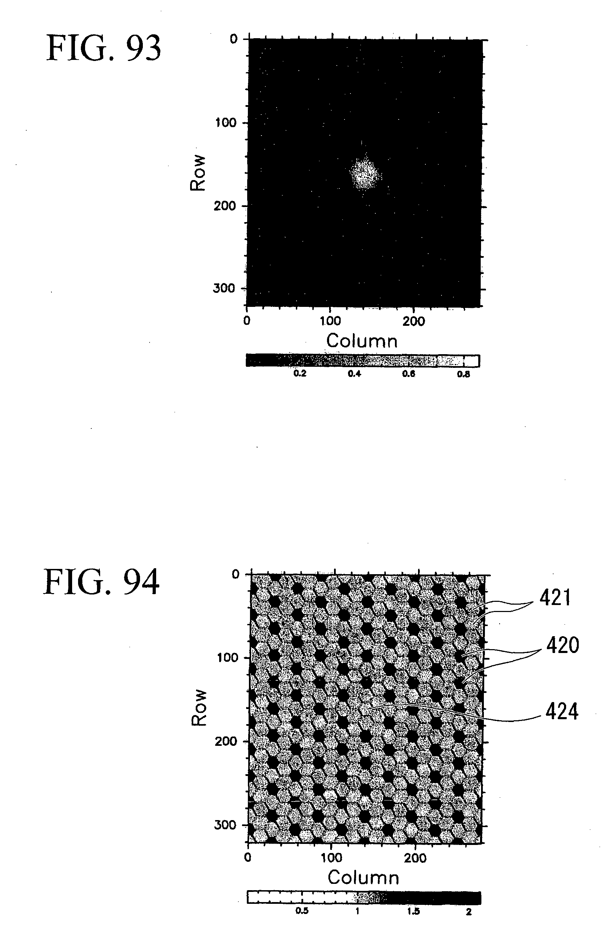

FIG. 93 shows the typical power distribution of the core mode at this stage. FIG. 94 is the permittivity of the fiber shown in the same scale as FIG. 91. As shown in the figure, substantially the entire power of the core mode is distributed within the core 424.

Example 4-4

As shown in FIG. 95, PBGF was produced with cladding containing a hexagonal air hole extended triangular lattice structure wherein $\omega_r/\Lambda$ = 0.9, $\omega_b/\Lambda$ = 0.06, and having a core 424 (capillary core) wherein the central silica portion 420, and six silica portions 420 in one layer on the outside of it, was replaced by the air hole 421, and the dispersion of the core mode was studied. FIG. 96 is a graph showing the dispersion in the first band gap of this PBGF. As shown in the figure, the core mode 1 is present when $\Gamma/\lambda$ = 0.96 to 1.26, the core mode 2 is present when $\Gamma/\lambda$ = 0.92 to 1.27, and the surface mode is absent. However, the degraded mode is included in each core mode.

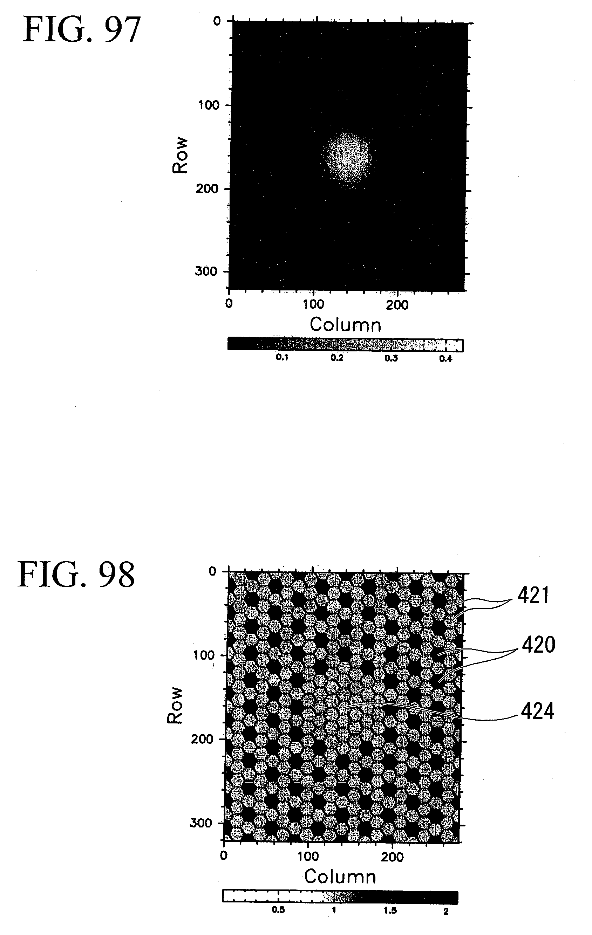

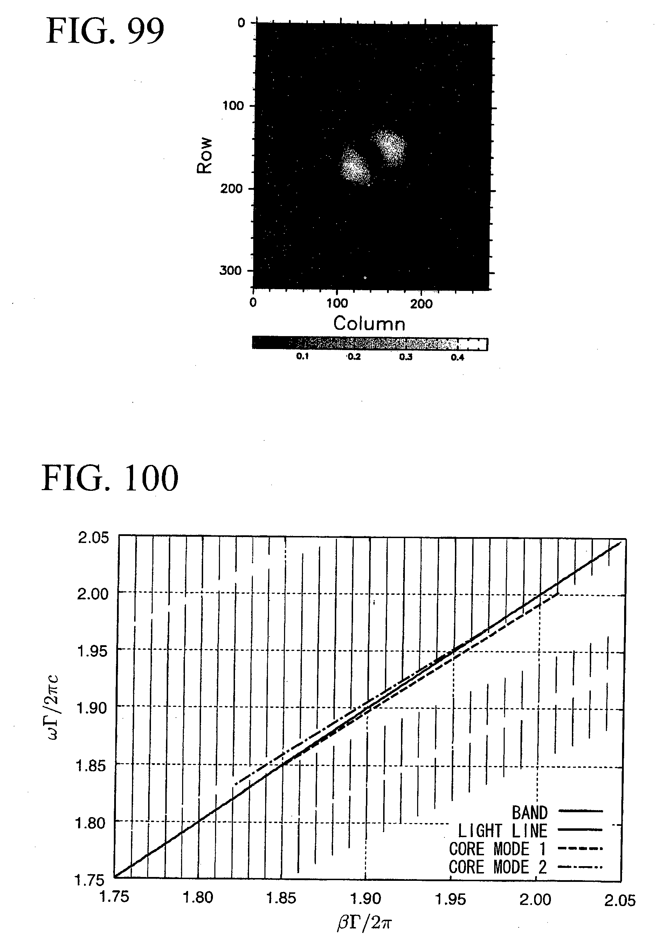

FIG. 97 shows the typical power distribution of core mode 1 at this stage. FIG. 99 is the permittivity of the fiber shown in the same wale as FIG. 95. As shown in the figure, substantially the entire power of the core mode is distributed within the core 424.

Also, FIG. 99 shows the typical power distribution of core mode 2 in the first band gap in the PBGF of the present embodiment.

FIG. 100 shows the dispersion of the second band gap in the PBGF of the present embodiment. As shown in the figure, the core mode 1 is present when $\Gamma/\lambda$ =1.85 to 2.00, the core mode 2 is present when $\Gamma/\lambda$ =1.83 to 1.97, and the surface mode is absent. However, the degraded mode is included in each core mode. The dispersion of the core mode is present in the region below the light line also because a small amount of silica remains as partition wall in the core 424.

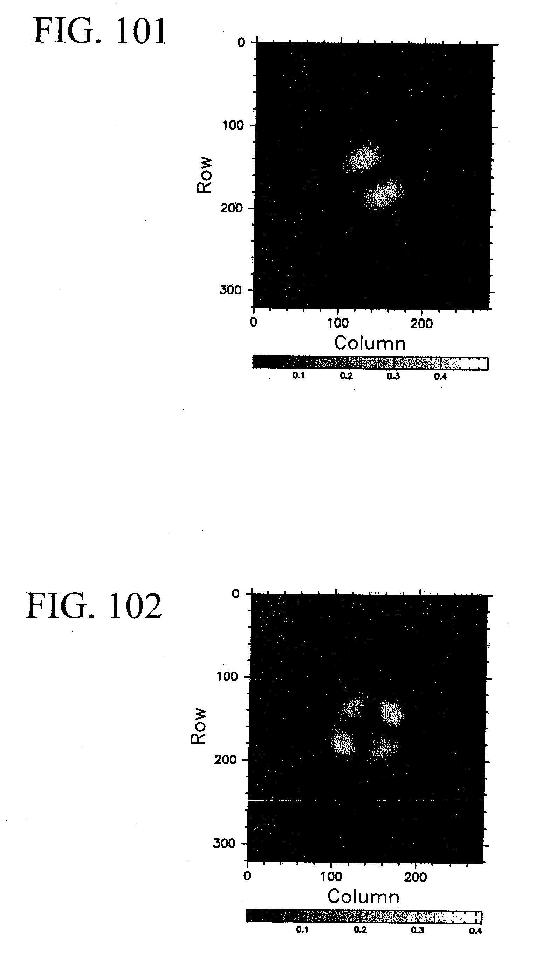

FIG. 101 shows the typical power distribution of core mode 1 at this stage. FIG. 102 shows the typical power distribution of core mode 2 in this case.

Example 4-5

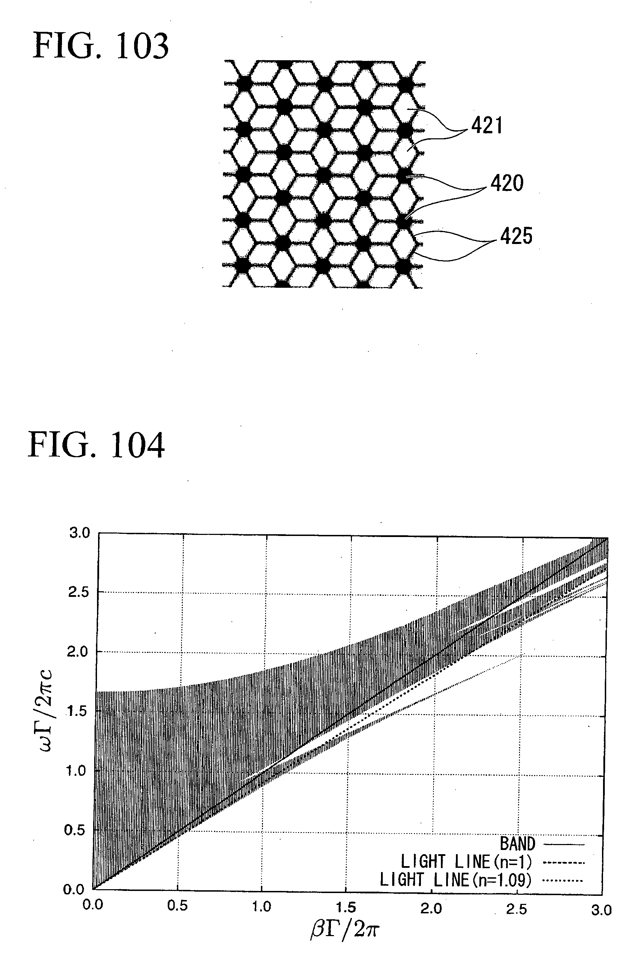

FIG. 104 shows the band structure of hexagonal air hole extended triangular lattice wherein $\omega_r/\Lambda$ = 0.7, and $\omega_b/\Lambda$ = 0.1, as shown in FIG. 103. Here, the refractive index of silica was taken as n=1.45. In FIG. 103, the black hexagonal parts are the silica portions 420, the white hexagonal parts are the air holes 421, and the bold lines that divide the air holes 421 are the partition walls 425. The band structure was calculated by the Plane wave decomposition method described in "Block-iterative frequency-domain methods for Maxwell's equations in plane wave basis," Opt. Express, vol. 8, no. 3, pp.173-190, 2001 by S. G. Johnson and J. D. Joannopoulos. In FIG. 104, $\beta$ is the wave number of the transmission direction (direction perpendicular to the periodic structure), $\Gamma$ = 2A is the lattice constant of the extended triangular lattice, $\omega$ is the angular frequency, and c is the velocity of light. The light line (n=1) expresses the dispersion curve when light is transmitted through a vacuum medium. The region enveloped by bands is the region wherein light cannot be transmitted in any direction in the cross section of the periodic structure, that is, it expresses the band gap.

When this periodic structure is used in the fiber cladding, and air hole used in the core, the band wherein light in the fiber core becomes the wave guide is adjacent to the n=1 light line above which the band gap is present. In this case, the wave guide region is present in a range of $\Gamma/\lambda$ ($\omega\Gamma/2\pi c$) = 0.93 to 1.16. Here, $\lambda$ is the wavelength. However, if a capillary core is used, the permittivity retractive index of the core increases; therefore, light line that transmits within the dielectric is used instead of the light line that transmits within the vacuum medium mentioned above. In this case, the average refractive index of the core can be approximated by equation (1).

$$n_{eff} = \frac{n_{air}S_{air} + n_{silica}S_{silica}}{S_{air} + S_{silica}} \qquad (1)$$

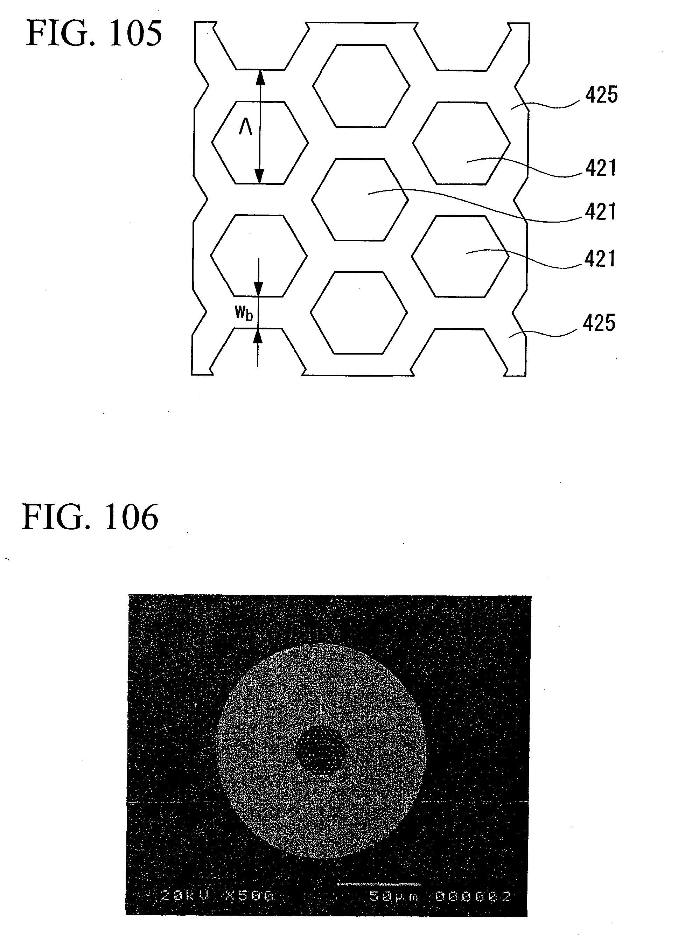

However, $n_{eff}$, $n_{air}$, $n_{silice}$ are respectively the average refractive index of core, the refractive index of air, and the refractive index of silica respectively, while $S_{air}$ and $S_{silice}$ are the areas occupied by air the core and the area occupied by silica in the core respectively. The capillary core is shown in FIG. 105. Since the structure is arranged in triangular lattice configuration by almost hexagonally-shaped multiple air holes 421 through the partition wall 425, each area can be expressed by the equations (2) and (3).

$$S_{air} = \frac{3}{4}(\Lambda - w_b)^2, \qquad (2)$$

$$S_{silica} = \frac{3}{4}\left[\Lambda^2 - (\Lambda - w_b)^2\right] \qquad (3)$$

In this example, $n_{eff}$ becomes 1.09. As shown by the light line (n=1.09) in FIG. 104, wave guide region is present in a range of $\Gamma/\lambda$ =1.11 to 2.02 for the fiber having capillary core, and compared to the air hole core (air hole core), it has a fairly wide wave guide band, and the wavelength band also shifts to the short wavelength side. As a result, not only is wider bandwidth realized, but also the limitations of size of micro-structure in fiber production become more relaxed; that is, simplification of fiber production is realized.

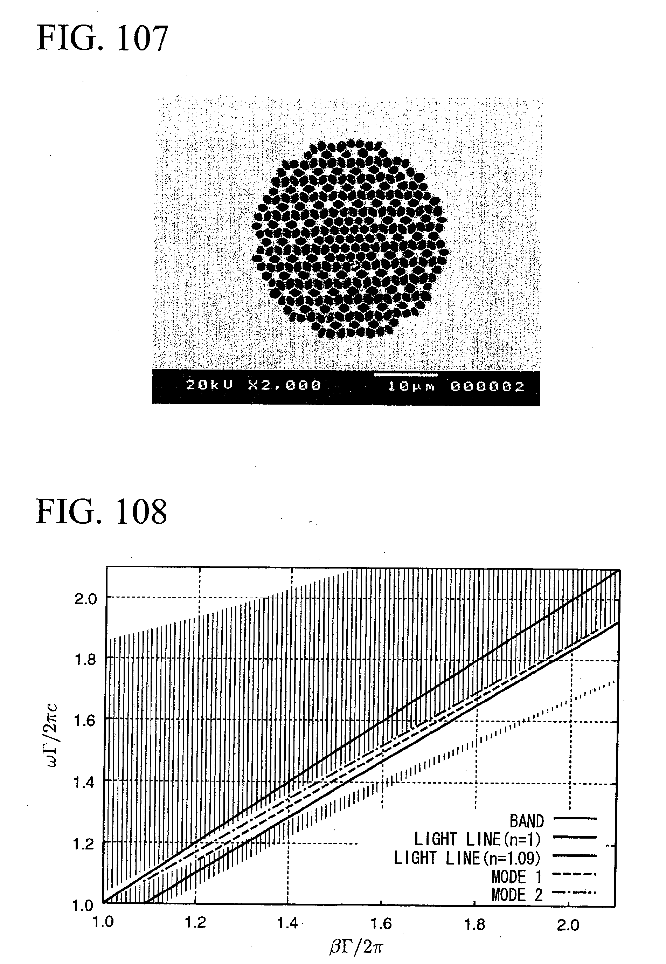

The inventors of the present invention produced PBGF hexagonal air hole extended triangular lattice configuration having a capillary core, as shown by the end faces in FIGS. 106 and 107. The black parts are air holes and the white parts are silica portions in FIG. 107. This PBGF has A= 0.75 μm, $\omega_r/\Lambda$ = 0.7, $\omega_b/\Lambda$ = 0.1. FIG. 108 shows the dispersion in the first band gap of this PBGF. As shown in FIG. 108, mode 1 is present in a range of $\Gamma/\lambda$ = 1.15 to 1.91, and mode 2 is present in a range of $\Gamma/\lambda$ = 1.06 to 1.74 in the first band gap of this PBGF. The mode in this case includes degraded mode, mode 1 is double degraded, while mode 2 is quadruple degraded.

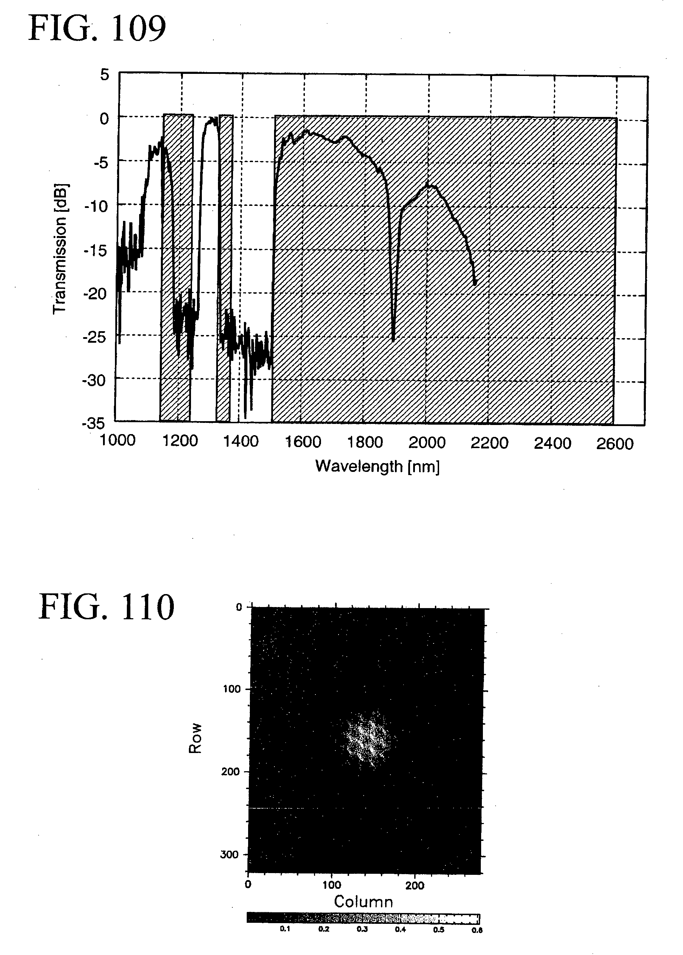

FIG. 109 is a graph showing the results of measurement of transmission characteristics of the PBGF (a length of 1 m) produced in this way. The bold line in FIG.109 indicates measured values; the shaded region indicates the band estimated from calculations. The two transmission bandwidths in the short wavelength side correspond to the high order band gap. The transmission bandwidth greater than a wavelength of 1550 m corresponds to the first band gap. The measured values are restricted to about 2150 nm because of the limitation of the measuring equipment. The drop in measured values observed near a wavelength of 1900 nm is due to the loss of the remaining OH radical in the fiber (P. Kaiser, A. R. Tynes, H. W. Astle, A. D. Pearson, W. G. French, R. E. ranger, and A. H. Cherinet, "Spectral losses of unclad vitreous silica and soda-lime-silicate fibers," J. Opt. Soc. Amer., vol. 63, pp. 1141-1148, Sept. 1973).

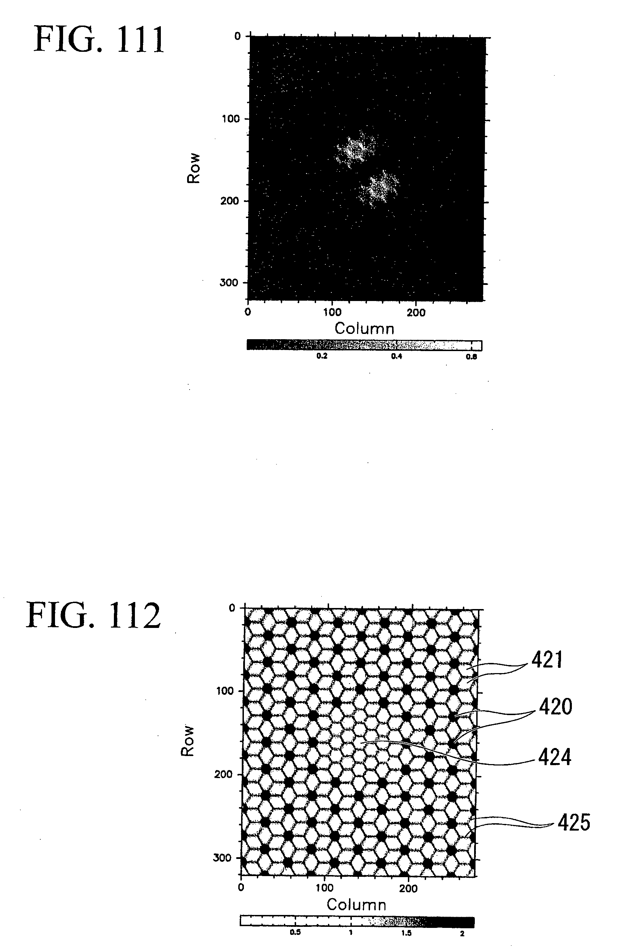

FIG. 110 and FIG.111 show the typical power distributions of mode 1 and mode 2 respectively of the PBGF.

FIG. 112 shows the permittivity distribution of the PBGF.

Example 4-6

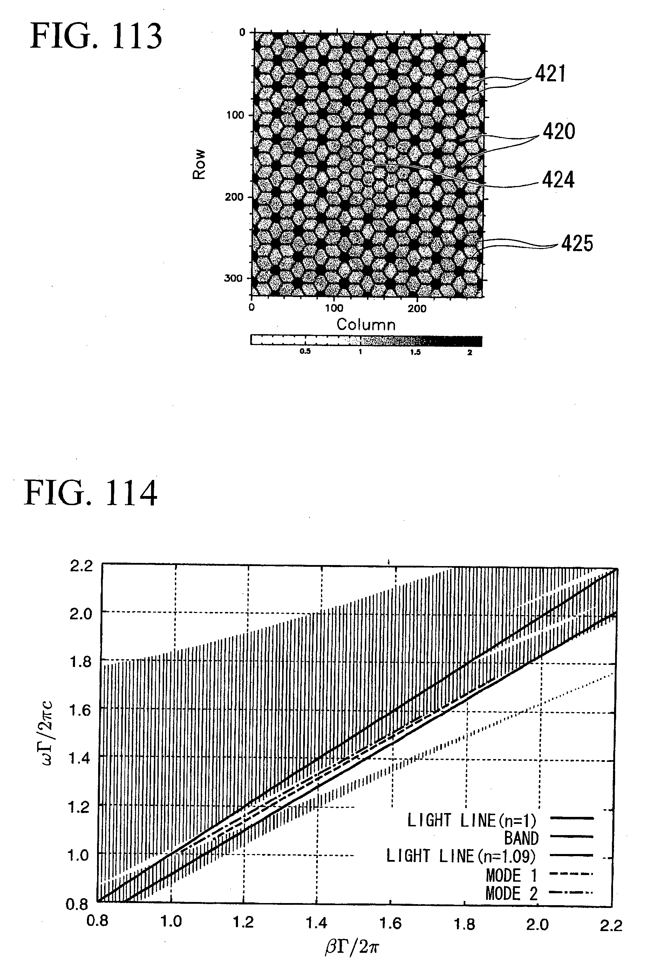

As shown in FIG. 113, PBGF was produced with cladding containing a hexagonal air hole extended triangular lattice structure wherein $\omega_r/\Lambda$ = 0.8, $\omega_b/\Lambda$=0.1, and having a core 424 (capillary core) wherein the central silica portion 420, and six silica portions 420 in one layer on the outside of the central silica portion, were replaced by the air hole 421, and the dispersion of the transmission mode was calculated. FIG. 114 is a graph that shows the dispersion of the first band gap of this PBGF.

As shown in FIG. 114, if the core 424 is a complete air hole core, transmission mode can be made present in the band gap above the light line (n=1) transmitted through air. Compared to the presence of transmission mode in a range of $\Gamma/\lambda$ = 0.9 to 1.12, in case of a capillary core, transmission mode can be made present in the band gap above the light line (n=1.09) in dielectric, therefore, transmission mode is present in a range of $\Gamma/\lambda$ = 1.00 to 1.79, the transmission bandwidth becomes wider and shifts to the short wavelength side. In practice, mode 1 is present in a range of $\Gamma/\lambda$ =1.05 to 1.75, and mode 2 is present in a range of $\Gamma/\lambda$ =1.00 to 1.58. However, the degraded mode is included in each core mode.

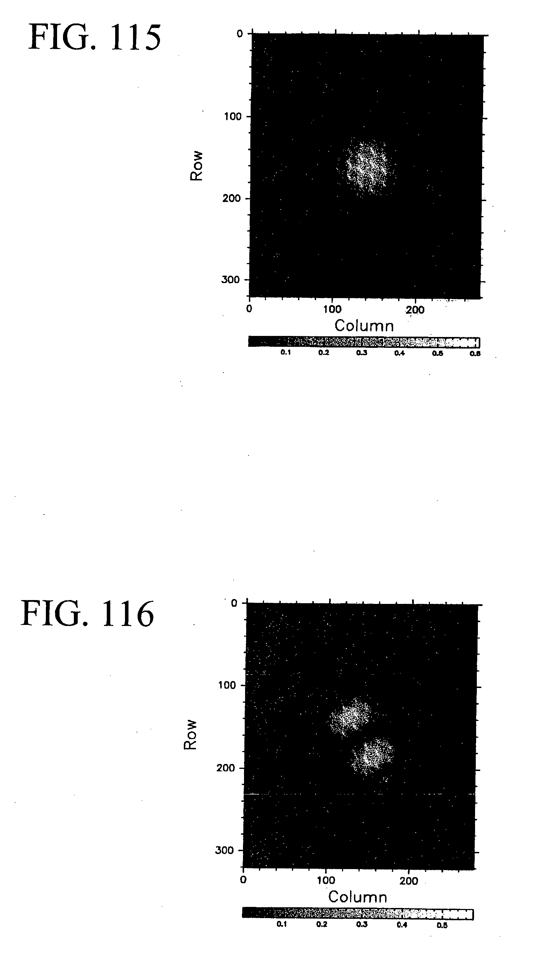

FIG. 115 shows the typical power distribution of core mode 1 at this stage. FIG. 116 shows the typical power distribution of core mode 2 in this case.

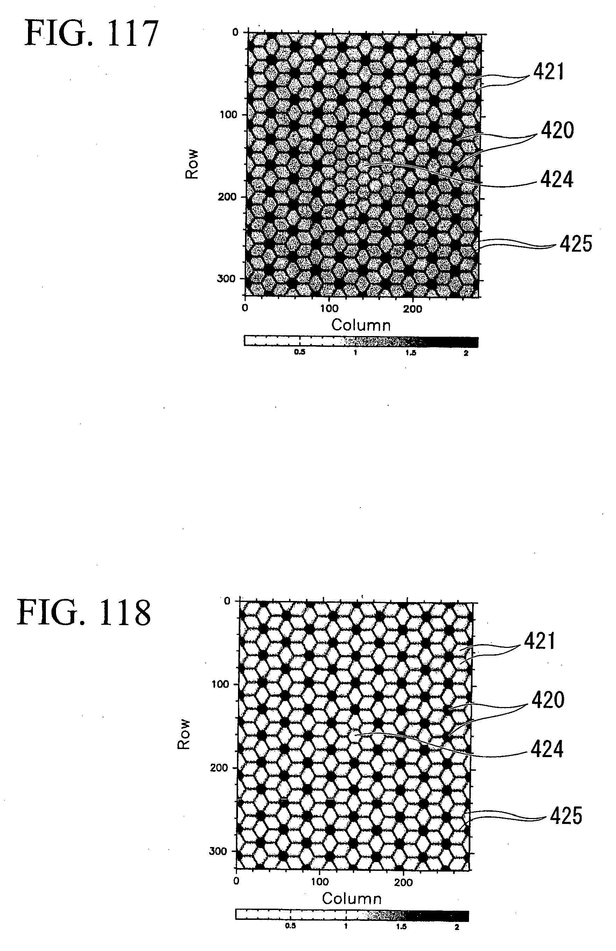

FIG. 117 shows the permittivity distribution of the fiber drawn to the same scale as FIG. 113.

Example 4-7

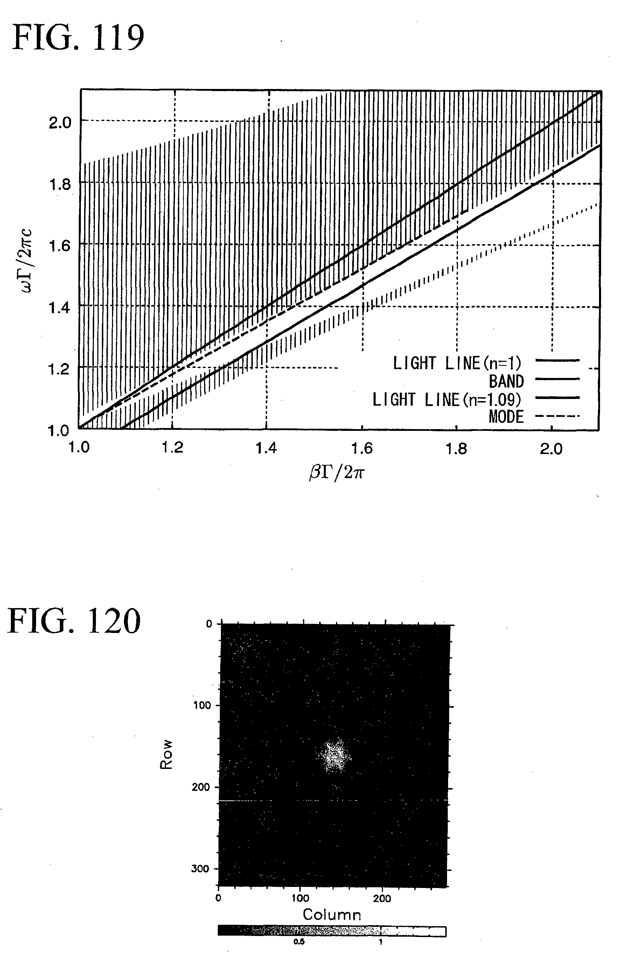

As shown in FIG. 118, PBGF was produced with cladding containing a hexagonal air hole extended triangular lattice structure wherein $\omega_r/\Lambda = 0.7$, $\omega_b/\Lambda = 0.1$, and having a core 424 (capillary core) wherein the central silica portion 420 is replaced by the air hole 421, and the dispersion of the transmission mode was calculated. FIG. 119 is a graph showing the dispersion in the first band gap of this PBGF.

As shown in FIG. 119, if the core 424 is a complete air hole core, transmission mode can be made present in the band gap above the light line (n=1) transmitted through air. Compared to the presence of transmission mode in a range of $\Gamma/\lambda$ = 0.93 to 1.16, in case of a capillary core, transmission mode can be made present in the band gap above the light line (n=1.09) in dielectric, therefore, transmission mode is present in a range of $\Gamma/\lambda$ =1.01 to 1.73. The core diameter D in this case is small, therefore, the mode is a single mode. However, this mode is double degraded. In this way, compared to the air hole core fiber, the transmission bandwidth becomes wider and shifts to the short wavelength side in the capillary core fiber.

FIG. 120 shows the typical power distribution of the mode at this stage.

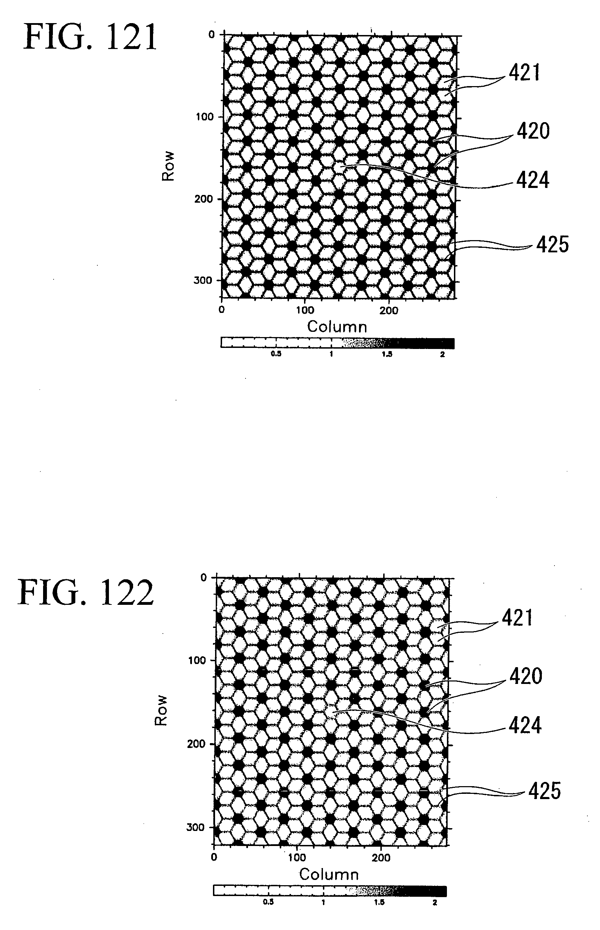

FIG. 121 shows the permittivity distribution of the fiber drawn to the same scale as FIG. 118.

Example 4-8

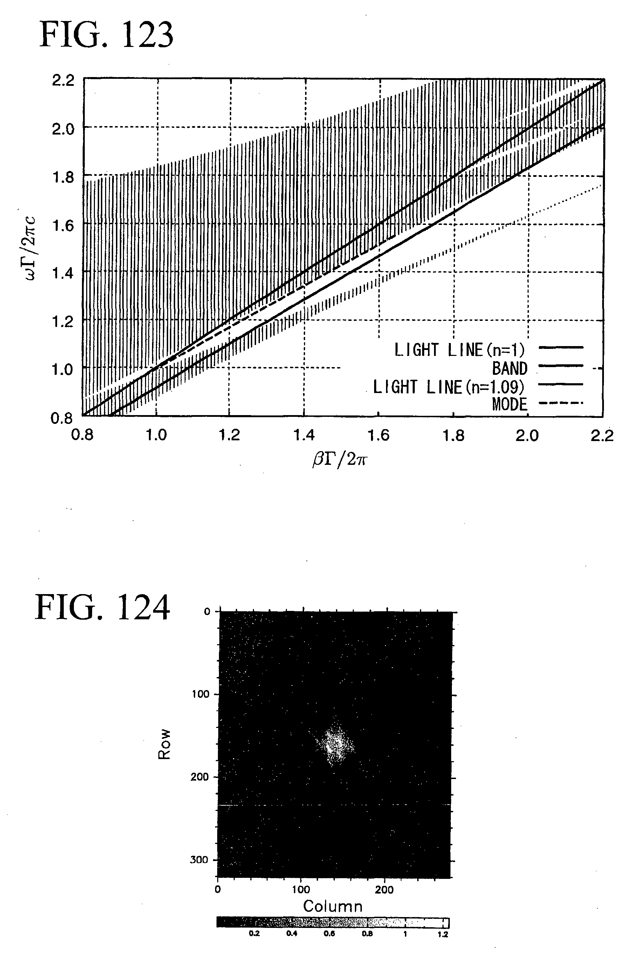

As shown in FIG. 122, PBGF was produced with cladding containing a hexagonal air hole extended triangular lattice structure wherein $\omega_r\Lambda = 0.8$, $\omega_b/\Lambda = 0.1$, and having a core 424 (capillary core) wherein the central silica portion 420 is replaced by the air hole 421, and the dispersion of the transmission mode was calculated. FIG. 123 is a graph showing the dispersion in the first band gap of this PBGF.

As shown in FIG. 123, if the core 424 is a complete air hole core, transmission mode can be made present in the band gap above the light line (n=1) transmitted through air. Compared to the presence of transmission mode in a range of $\Gamma/\lambda$ = 0.90 to 1.12, in case of a capillary core, transmission mode can be made present in the band gap above the light line (n=1.09) in dielectric, therefore, transmission mode is present in a range of $\Gamma/\lambda$ = 0.97 to 1.56. The core diameter D in this case is small, therefore, the mode is a single mode. However, this mode is double degraded. In this way, compared to the air hole core fiber, the transmission bandwidth becomes wider and shifts to the short wavelength side in the capillary core fiber.

FIG. 124 shows the typical power distribution of the mode at this stage.

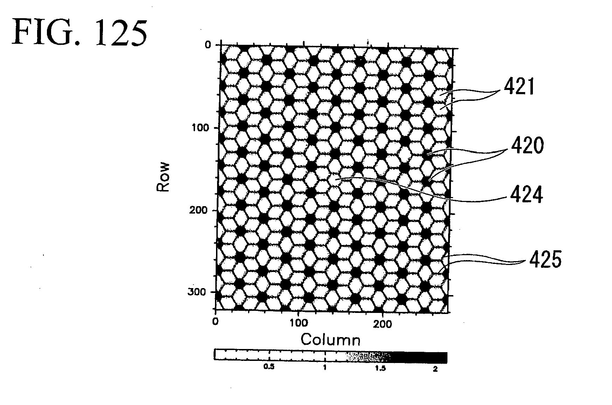

FIG. 125 shows the permittivity distribution of the fiber drawn to the same scale as FIG. 122.

While preferred embodiments of the invention have been described and illustrated above, it may be understood that these are exemplary of the invention and are not to be considered as limiting. Additions, omissions, substitutions, and other modifications can be made without departing from the scope of the present claims. Accordingly, the invention is not to be considered as being limited by the foregoing description, and is only limited by the scope of the appended claims.

**Claims**

1. A photonic band gap fiber with multiple air holes provided in silica portions along the longitudinal direction of the photonic band gap fiber comprising:

   a cladding having multiple hexagonally-shaped silica portions, air holes between the silica portions and periodic structure, in which the multiple hexagonally-shaped silica portions were arranged at constant pitch $\Gamma$ in the cross section of the photonic band gap fiber in triangular lattice configuration, and in the periodic structure, a length $\omega_r$ between the two sides facing each other of the silica portion is equal to a length A which is half of the pitch $\Gamma$; and
   an air hole core or a core with multiple hexagonal air holes arranged in triangular lattice configuration,
   wherein a diameter D of the core satisfies $8.7A \leq D \leq 11.3A$ with respect to the length A.

2. The photonic band gap fiber according to claim 1, wherein the periodic structure in the cladding was an air hole periodic structure in an extended triangular lattice configuration; and

three or more layers of the air hole periodic structure in an extended triangular lattice configuration in the cladding are provided outside the core.

3. The photonic band gap fiber according to claim 1, having 60% or more of a core mode in which a transmitting power is concentrated in the core, and optical characteristics wherein a surface mode is substantially absent.

4. The photonic band gap fiber according to claim 1, having an optical characteristic wherein only a single core mode, where the number of modes in case of all degraded modes is taken as 1, is present.

5. The photonic band gap fiber according to claim 1, having an optical characteristic wherein a core mode is present within a range in which a wavelength $\lambda$ satisfies $0.6 \leq \Gamma/\lambda \leq 1.5$.

6. The photonic band gap fiber according to claim 1, having an optical characteristic wherein a core mode is present within a range in which a wavelength $\lambda$ satisfies $1.4 \leq \Gamma/\lambda, \leq 2.3$.

7. The photonic band gap fiber according to claim 1, having an optical characteristic wherein the core mode is present when the wavelength $\lambda$ satisfies a range of $2.2 \leq \Gamma/\lambda \leq 3.2$.

8. The photonic band gap fiber according to claim 1, having an optical characteristic wherein a core mode is present within a range in which a wavelength $\lambda$ satisfies $0.6 \leq \Gamma/\lambda \leq 1.7$.

9. The photonic band gap fiber according to claim 1, having an optical characteristic wherein a core mode is present within a range in which a wavelength $\lambda$ satisfies $1.5 \leq \Gamma/\lambda \leq 2.4$.

10. The photonic band gap fiber according to claim 1, having an optical characteristic wherein the core mode is present when a wavelength $\lambda$ satisfies $2.1 \leq \Gamma/\lambda \leq 3.5$.

11. The photonic band gap fiber according to claim 1, having an optical characteristic wherein a core mode is present when a wavelength $\lambda$ satisfies $0.7 < \Gamma/\lambda \leq 2.4$.

12. The photonic band gap fiber according to claim 1, wherein the air holes are hexagonal air holes;
the hexagonal air holes are arranged through partition walls in the cross section of the photonic band gap fiber; and thickness $\omega b$ of the partition wall is in a range $0.005A \leq \omega b \leq 0.2A$ with respect to the length A.

13. A method of producing a photonic band gap fiber according to any one of claims 1 to 12, comprising:

forming a silica tube bundle, comprising:

arranging multiple hexagonally-shaped silica portions at constant pitch $\Gamma$ in the cross section of the photonic band gap fiber in triangular lattice configuration,
forming an air hole core region by eliminating the central silica portions or the central silica portions together with the silica portions surrounding the central silica portions, wherein a diameter D of the air hole core satisfies $8.7A \leq D \leq 11.3\Lambda$ with respect to the length A, where the length A is half of the pitch $\Gamma$;
heating the silica tube bundle and making them integrated in order to make a preform for fiber spinning; and
spinning the preform for fiber spinning.

**Patentansprüche**

1. Optische Faser mit photonischer Bandlücke mit mehreren Luftlöchern, die in Silica-Abschnitten entlang der longitudinalen Richtung der optischen Faser mit photonischer Bandlücke vorgesehen sind, umfassend:

eine Umhüllung, die mehrere hexagonal geformte Silica-Abschnitte, Luftlöcher zwischen den Silica-Abschnitten und eine periodische Struktur aufweist, in der die mehreren hexagonal geformten Silica-Abschnitte mit einem konstanten Abstand $\Gamma$ in dem Querschnitt der optischen Faser mit photonischer Bandlücke in dreieckiger Gitterstruktur angeordnet waren, und in der periodischen Struktur ist eine Länge $\omega_r$ zwischen den sich gegenüberliegenden zwei Seiten des Silica-Abschnittes gleich einer Länge $\Lambda$, die der Hälfte des Abstandes $\Gamma$ entspricht; und

einen Luftlochkern oder einen Kern mit mehreren hexagonalen Luftlöchern, die in der dreieckigen Gitterstruktur angeordnet sind,
wobei ein Durchmesser des Kerns bezüglich der Läge $\Lambda$ die Bedingung $8.7\Lambda \leq D \leq 11.3\Lambda$ erfüllt.

2. Optische Faser mit photonischer Bandlücke nach Anspruch 1, wobei die periodische Struktur in der Umhüllung eine periodische Luftlochstruktur in einer erweiterten dreieckigen Gitterstruktur war; und
drei oder mehr Schichten der periodischen Luftlochstruktur in einer erweiterten dreieckigen Gitterstruktur in der Umhüllung außerhalb des Kerns vorgesehen sind.

3. Optische Faser mit photonischer Bandlücke nach Anspruch 1 mit 60% oder mehr einer Kernmode, in der eine Übertragungsleistung in dem Kern konzentriert ist, und mit optischen Eigenschaften, wobei eine Oberflächenmode im Wesentlichen abwesend ist.

4. Optische Faser mit photonischer Bandlücke nach Anspruch 1 mit einer optischen Eigenschaft, wobei nur eine einzige Kernmode vorhanden ist, wo die Anzahl der Moden für alle schwachen Moden als 1 betrachtet wird.

5. Optische Faser mit photonischer Bandlücke nach Anspruch 1 mit einer optischen Eigenschaft, wobei eine Kernmode in einem Bereich vorhanden ist, in dem eine Wellenlänge $\lambda$ die Bedingung $0.6 \leq \Gamma/\lambda \leq 1.5$ erfüllt.

6. Optische Faser mit photonischer Bandlücke nach Anspruch 1 mit einer optischen Eigenschaft, wobei eine Kernmode in einem Bereich vorhanden ist, in dem eine Wellenlänge $\lambda$ die Bedingung $1.4 \leq \Gamma/\lambda \leq 2.3$ erfüllt.

7. Optische Faser mit photonischer Bandlücke nach Anspruch 1 mit einer optischen Eigenschaft, wobei die Kernmode vorhanden ist, wenn die Wellenlänge $\lambda$ in einem Bereich von $2.2 \leq \Gamma/\lambda \leq 3.2$ liegt.

8. Optische Faser mit photonischer Bandlücke nach Anspruch 1 mit einer optischen Eigenschaft, wobei eine Kernmode innerhalb eines Bereiches vorhanden ist, in dem eine Wellenlänge $\lambda$ die Bedingung $0.6 \leq \Gamma/\lambda \leq 1.7$ erfüllt.

9. Optische Faser mit photonischer Bandlücke nach Anspruch 1 mit einer optischen Eigenschaft, wobei eine Kernmode in einem Bereich vorhanden ist, in dem eine Wellenlänge $\lambda$ die Bedingung $1.5 \leq \Gamma/\lambda \leq 2.4$ erfüllt.

10. Optische Faser mit photonischer Bandlücke nach Anspruch 1 mit einer optischen Eigenschaft, wobei die Kernmode vorhanden ist, wenn eine Wellenlänge $\lambda$ die Bedingung $2.1 \leq \Gamma/\lambda \leq 3.5$ erfüllt.

11. Optische Faser mit photonischer Bandlücke nach Anspruch 1 mit einer optischen Eigenschaft, wobei eine Kernmode vorhanden ist, wenn eine Wellenlänge $\lambda$ die Bedingung $0.7 \leq \Gamma/\lambda \leq 2.4$ erfüllt.

12. Optische Faser mit photonischer Bandlücke nach Anspruch 1, wobei die Luftlöcher hexagonale Luftlöcher sind;
die hexagonalen Luftlöcher durch Trennwände im Querschnitt der optischen Faser mit photonischer Bandlücke angeordnet sind; und
Dicke wb der Trennwand bezüglich der Länge $\Lambda$ in dem Bereich $0.005\Lambda \leq \omega b \leq 0.2\Lambda$ liegt.

13. Verfahren zur Herstellung einer optischen Faser mit photonischer Bandlücke nach einem beliebigen der Ansprüche 1 bis 12, umfassend:

Herstellen eines Silica-Rohrbündels umfassend:

Anordnen von mehreren hexagonal geformten Silica-Abschnitten mit einen konstanten Abstand $\Gamma$ im Querschnitt der optischen Faser mit photonischer Bandlücke in dreieckiger Gitterstruktur,
Bilden eines Luftlochkernbereichs durch Entfernen der zentralen Silica-Abschnitte oder der zentralen Silica-Abschnitte zusammen mit den Silica-Abschnitten, die die zentralen Silica-Abschnitte umgeben, wobei ein Durchmesser D des Luftlochkerns die Bedingung bezüglich der Länge $\Lambda$ $8.7\Lambda \leq D \leq 11.3\Lambda$ erfüllt, wobei die Länge $\Lambda$ der Hälfte des Abstandes $\Gamma$ entspricht;
Erhitzen und Zusammenfassen des Silicarohrbündels, um eine Vorform zum Faserspinnen herzustellen; und
Spinnen der Vorform zum Faserspinnen.

**Revendications**

1. Filtre photonique à bande interdite avec plusieurs trous d'air fournis dans des portions de silice dans le sens longitudinal de la fibre photonique à bande interdite comprenant :

   un revêtement comportant plusieurs portions de silice de forme hexagonale, des trous d'air entre les portions de silice et une structure périodique, dans laquelle les plusieurs portions de silice de forme hexagonale sont agencées avec un pas $\Gamma$ constant dans la coupe transversale de la fibre photonique à bande interdite, selon une configuration de réseau triangulaire, et dans la structure périodique, une longueur $\omega_r$ entre les deux côtés se faisant face l'un à l'autre de la portion de silice est égale à une longueur A qui est une moitié du pas $\Gamma$ ; et
   un coeur de trou d'air ou un coeur avec plusieurs trous d'air hexagonaux agencés selon une configuration de réseau triangulaire,
   dans laquelle un diamètre D du coeur satisfait $8{,}7A \le D \le 11{,}3A$ par rapport à la longueur A.

2. Fibre photonique à bande interdite selon la revendication 1, dans laquelle la structure périodique dans le revêtement est une structure périodique de trous d'air selon une configuration de réseau triangulaire étendue ; et
   trois couches ou plus de la structure périodique de trous d'air selon une configuration de réseau triangulaire étendue dans le revêtement sont fournies à l'extérieur du coeur.

3. Fibre photonique à bande interdite selon la revendication 1, ayant 60 % ou plus d'un mode de coeur dans lequel une puissance de transmission est concentrée dans le coeur, et des caractéristiques optiques selon lesquelles un mode de surface est sensiblement absent.

4. Fibre photonique à bande interdite selon la revendication 1, ayant une caractéristique optique selon laquelle un seul mode de coeur, où le nombre de modes dans le cas où tous les modes dégradés est pris en tant que 1, est présent.

5. Fibre photonique à bande interdite selon la revendication 1, ayant une caractéristique optique selon laquelle un mode de coeur est présent à l'intérieur d'une plage dans laquelle une longueur d'onde $\lambda$ satisfait $0{,}6 \le \Gamma/\lambda \le 1{,}5$.

6. Fibre photonique à bande interdite selon la revendication 1, ayant une caractéristique optique selon laquelle un mode de coeur est présent à l'intérieur d'une plage dans laquelle une longueur d'onde $\lambda$ satisfait $1{,}4 \le \Gamma/\lambda \le 2{,}3$.

7. Fibre photonique à bande interdite selon la revendication 1, ayant une caractéristique optique selon laquelle le mode de coeur est présent lorsque la longueur d'onde $\lambda$ satisfait un intervalle de $2{,}2 \le \Gamma/\lambda \le 3{,}2$.

8. Fibre photonique à bande interdite selon la revendication 1, ayant une caractéristique optique selon laquelle un mode de coeur est présent à l'intérieur d'une plage dans laquelle une longueur d'onde $\lambda$ satisfait $0{,}6 \le \Gamma/\lambda \le 1{,}7$.

9. Fibre photonique à bande interdite selon la revendication 1, ayant une caractéristique optique selon laquelle un mode de coeur est présent à l'intérieur d'une plage dans laquelle une longueur d'onde $\lambda$ satisfait $1{,}5 \le \Gamma/\lambda \le 2{,}4$.

10. Fibre photonique à bande interdite selon la revendication 1, ayant une caractéristique optique selon laquelle le mode de coeur est présent lorsque la longueur d'onde $\lambda$ satisfait $2{,}1 \le \Gamma/\lambda \le 3{,}5$.

11. Fibre photonique à bande interdite selon la revendication 1, ayant une caractéristique optique selon laquelle un mode de coeur est présent lorsqu'une longueur d'onde $\lambda$ satisfait $0{,}7 \le \Gamma/\lambda \le 2{,}4$.

12. Fibre photonique à bande interdite selon la revendication 1, dans laquelle les trous d'air sont des trous d'air hexagonaux ;
    les trous d'air hexagonaux sont agencés à travers des cloisons de partitionnement dans la coupe transversale de la fibre photonique à bande interdite ; et
    l'épaisseur $\omega b$ de la cloison de partitionnement est dans une plage $0{,}005A \le \omega b \le 0{,}2A$ par rapport à la longueur A.

13. Procédé de production d'une fibre photonique à bande interdite selon l'une quelconque des revendications 1 à 12, comprenant :

    la formation d'un faisceau de tubes de silice, comprenant :

l'agencement de plusieurs portions de silice de forme hexagonale à un pas $\Gamma$ constant dans la coupe transversale de la fibre photonique à bande interdite, selon une configuration de réseau triangulaire,

la formation d'une région de coeur à trous d'air en éliminant des portions de silice centrales ou des portions de silice centrales avec les portions de silice entourant les portions de silice centrales, dans lequel un diamètre D du coeur à trous d'air satisfait $8,7A \leq D \leq 11,3A$ par rapport à la longueur A, où la longueur A est une moitié du pas $\Gamma/\lambda \leq$ ;

le chauffage du faisceau de tubes de silice et l'intégration de ceux-ci afin de constituer une préforme pour un filage de fibre ; et

le filage de la préforme pour le filage de fibre.

## FIG. 1

BULK MODE

AIR HOLE
SILICA PORTION

CORE WITH
NO SURFACE MODE

CORE WITH
SURFACE MODE

## FIG. 2

FIG. 3

FIG. 4

FIG. 5

$\Gamma = 2 \Lambda$

$a_1$

111

$\theta$
$\theta$

x

$\theta = 30 [deg]$

$a_2$

d

$\Lambda$

FIG. 6

110    111

BULK MODE

AIR HOLE
SILICA PORTION

CORE WITH
NO SURFACE MODE

CORE WITH
SURFACE MODE

33

FIG. 7

FIG. 8

# FIG. 9

# FIG. 10

FIG. 11

FIG. 12

# FIG. 13

# FIG. 14

FIG. 15

FIG. 16

FIG. 17

FIG. 18

FIG. 19

## FIG. 20

$\Gamma = 2 \Lambda$

$\theta = 30 [\text{deg}]$

211

## FIG. 21

210    211

BULK MODE

AIR HOLE

SILICA PORTION

CORE WITH NO SURFACE MODE

CORE WITH SURFACE MODE

FIG. 22

FIG. 23

FIG. 24

FIG. 25

FIG. 26

FIG. 27

FIG. 28

FIG. 29

FIG. 30

FIG. 31

# FIG. 32

# FIG. 33

FIG. 34

FIG. 35

# FIG. 36

# FIG. 37

FIG. 38

FIG. 39

FIG. 40

FIG. 41

FIG. 42

FIG. 43

$\theta = 30 \, [\text{deg}]$

FIG. 44

FIG. 45

FIG. 46

FIG. 47

FIG. 48

FIG. 49

FIG. 50

FIG. 51

FIG. 52

FIG. 53

FIG. 54

FIG. 55

FIG. 56

FIG. 57

FIG. 58

FIG. 59

FIG. 60

FIG. 61

FIG. 62

FIG. 63

FIG. 64

FIG. 65

# FIG. 66A

# FIG. 66B

$\Gamma = 2\Lambda$

$a_1$

$a_2$

$\theta$

$\theta$

$\theta = 30\,[\mathrm{deg}]$

# FIG. 67

# FIG. 68

# FIG. 69

420
421

# FIG. 70

BAND ———
LIGHT LINE - - - - -

## FIG. 71

## FIG. 72

FIG. 73

FIG. 74

FIG. 75

420
421
425

FIG. 76

## FIG. 77

420
421
425

## FIG. 78

FIG. 79

FIG. 80

FIG. 81

FIG. 82

FIG. 83

FIG. 84

## FIG. 85

## FIG. 86

FIG. 87

FIG. 88

FIG. 89

FIG. 90

## FIG. 91

## FIG. 92

FIG. 93

FIG. 94

FIG. 95

FIG. 96

FIG. 97

FIG. 98

FIG. 99

FIG. 100

FIG. 101

FIG. 102

FIG. 103

FIG. 104

## FIG. 105

425
421
421
421
425

## FIG. 106

# FIG. 107

20kU X2,000    10μm 000002

# FIG. 108

FIG. 109

FIG. 110

FIG. 111

FIG. 112

FIG. 113

FIG. 114

FIG. 115

FIG. 116

FIG. 117

FIG. 118

## FIG. 119

## FIG. 120

FIG. 121

FIG. 122

## FIG. 123

## FIG. 124

FIG. 125

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SEE R. F. CREGAN ; B. J. MANGAN ; J. C. KNIGHT ; T. A. BIRKS ; P. ST. J. RUSSELL ; P. J. ROBERTS ; D. C. ALLAN.** Single-mode photonic band gap guidance of light in air. *Science,* 1999, vol. 285 (3), 1337-1339
- **J. A. WEST ; C. M. SMITH ; N. F. BORRELLI ; D. C. ALLAN ; K. W. KOCH.** Surface modes in air-core photonic band-gap fibers. *Opt. Express,* 2004, vol. 12 (9), 1485-1496
- **H. K. KIM ; J. SHIN ; S. FAN ; M. J. F. DIGONNET ; G. S. KINO.** Designing air-core photonic-bandgap fibers free of surface modes. *IEEE J. Quant. Electron,* 2004, vol. 40 (5), 551-556
- **S. G. JOHNSON ; J. D. JOANNOPOULOS.** Block-iterative frequency-domain methods for Maxwell's equations in plane wave basis. *Opt. Express,* 2001, vol. 8 (3), 173-190

- **H. K. KIM ; J. SHIN ; S. FAN ; M. J. F. DIGONNET ; G. S. KINO.** Designing air-core photonic-bandgap fibers free of surface modes. *IEEE J. Quant. Electron.,* 2004, vol. 40 (5), 551-556
- Designing air-core photonic-bandgap fibers free of surface modes. *IEEE J. Quant. Electron.,* 2004, vol. 40 (5), 551-556
- **H. K. KIM ; J. SHIN ; S. FAN ; M. J. F. DIGONNET ; G. S. KINO.** Designing air-core photonic-bandgap fibers free of surface modes. *IEEE J. Quant. Electron.,* vol. 40, 551-556
- **P. KAISER ; A. R. TYNES ; H. W. ASTLE ; A. D. PEARSON ; W. G. FRENCH ; R. E. RANGER ; A. H. CHERINET.** Spectral losses of unclad vitreous silica and soda-lime-silicate fibers. *J. Opt. Soc. Amer.,* September 1973, vol. 63, 1141-1148